# EUROPÄISCHE PATENTSCHRIFT

(11) **EP 0 839 623 B1**
(45) Veröffentlichungstag und Bekanntmachung des Hinweises auf die Patenterteilung: **31.01.2001**
(21) Anmeldenummer: 97810781.1
(22) Anmeldetag: 21.10.1997
(51) Int. Cl.: B29C 41/00, C08K 5/15, C08K 5/52, C08L 23/02

(54) **Stabilisatorkombination für das Rotomolding-Verfahren**
Stabiliser combination for rotomolding process
Combinaison de stabilisateurs pour le procédé rotomolding

(30) Priorität: 30.10.1996 CH 268096
(43) Veröffentlichungstag der Anmeldung: 06.05.1998
(73) Patentinhaber: Ciba Specialty Chemicals Holding Inc., 4057 Basel (CH)
(72) Erfinder: Kröhnke, Christoph, 79206 Breisach (DE); Stadler, Urs Leo, Madison, NJ 07940 (US)

(56) Entgegenhaltungen:
- EP-A- 0 415 887
- EP-A- 0 589 839
- EP-A- 0 597 319
- EP-A- 0 644 190
- WO-A-80/01566
- CA-A- 1 230 271
- GB-A- 2 252 325
- GB-A- 2 281 910

## Beschreibung

Die vorliegende Erfindung betrifft die Herstellung von Polyolefinhohlkörpern im Rotomolding-Verfahren, wobei die unten beschriebene Verarbeitungsstabilisatorkombination eingesetzt wird.

Das Rotationsgiessverfahren (Rotomolding- oder "Rotational Molding/Casting"-Verfahren) wird zur Herstellung von grösseren Hohlkörpern aus Kunststoff benutzt, die gegebenenfalls mit Glasfasern verstärkt sind (Encyclopedia of Polymer Science and Engineering, Wiley Interscience, 1988, Vol. 14, Seiten 659-670). Es läuft im Prinzip folgendermassen ab: Der Kunststoff wird in die halbe Form gefüllt, diese mit der anderen Hälfte geschlossen, in einem Ofen erhitzt, so daß sich der geschmolzene Kunststoff bei Rotation um verschiedene Achsen am Rand der Form verteilt. Nach Erkalten erhält man den Hohlkörper. Man kann auf diese Weise beispielsweise Lager- und LKW-Tanks aus HD-Polyethylen herstellen. Das Verfahren erfordert normalerweise Temperaturen die über 300°C liegen und zeitweise sogar über 400°C hinausgehen. Die Anforderungen an die Stabilisatoren sind demnach anders geartet als beispielsweise beim Extrusionsverfahren, bei dem die Temperaturen normalerweise nicht wesentlich über 280°C liegen.

Stabilisatorkombinationen von Phosphiten oder Phosphoniten mit sterisch gehinderten Phenolen und/oder sterisch gehinderten Aminen (HALS) sind für die Anwendung in Polyolefinen bekannt [siehe beispielsweise R. Gächter, H. Müller, "Plastics Additives Handbook", Hanser Publishers, Seiten 40-71 (1990)].

Die Verwendung von Verbindungen aus der Gruppe der 3-Aryl-benzofuranone als Stabilisatoren für organische Polymere ist beispielsweise aus U.S. 4,325,863; U.S. 4,388,244; U.S. 5,175,312; U.S. 5,252,643; U.S. 5,216,052; U.S. 5,369,159; U.S. 5,488,117; U.S. 5,356,966; U.S. 5,367,008; U.S. 5,428,162; U.S. 5,428,177 oder U.S. 5,516,920 bekannt.

Es wurde nun gefunden, dass man mit einer Kombination von organischen Phosphiten oder Phosphoniten und 3-Aryl-benzofuranonen mit gegebenenfalls weiteren Zusätzen, insbesondere phenolischen Antioxidantien oder sterisch gehinderten Aminen (HALS) ausgezeichnete Stabilisierung beim Rotomolding Verfahren erreicht.

Die Erfindung betrifft somit ein Verfahren zur Herstellung von Polyolefinhohlkörpern, dadurch gekennzeichnet, dass man das Polyolefin mit einer Stabilisatorkombination enthaltend
A) mindestens eine Verbindung aus der Gruppe der organischen Phosphite oder Phosphonite, und
B) mindestens eine Verbindung aus der Gruppe der 3-Aryl-benzofuranone versetzt, in eine Hohlform füllt, diese in einem Ofen über 280°C erhitzt, so dass das stabilisierte Polyolefin schmilzt, die Hohlform um mindestens 2 Achsen rotiert, wobei der Kunststoff sich am Rand verteilt, die Form noch rotierend abkühlt, öffnet und den entstandenen Hohlkörper entnimmt.

Von Interesse ist ein Verfahren enthaltend als als Komponente (A) eine Verbindung der Formel 1, 2, 3, 4, 5, 6 oder 7 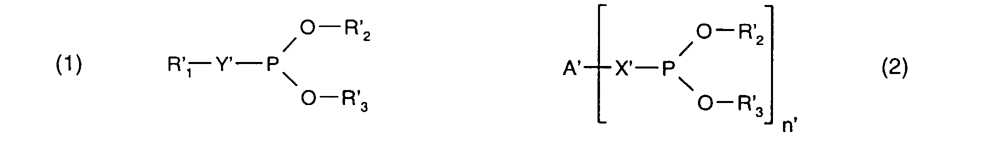 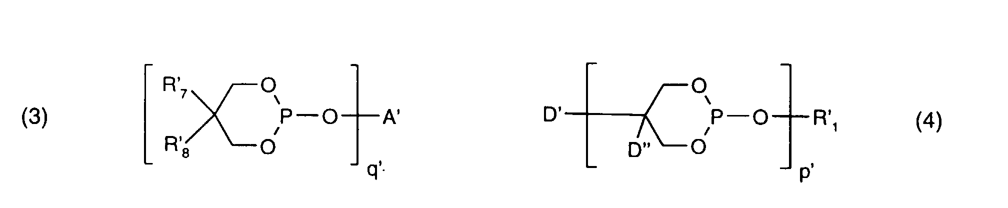 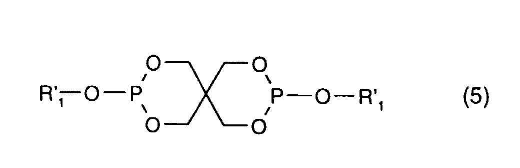 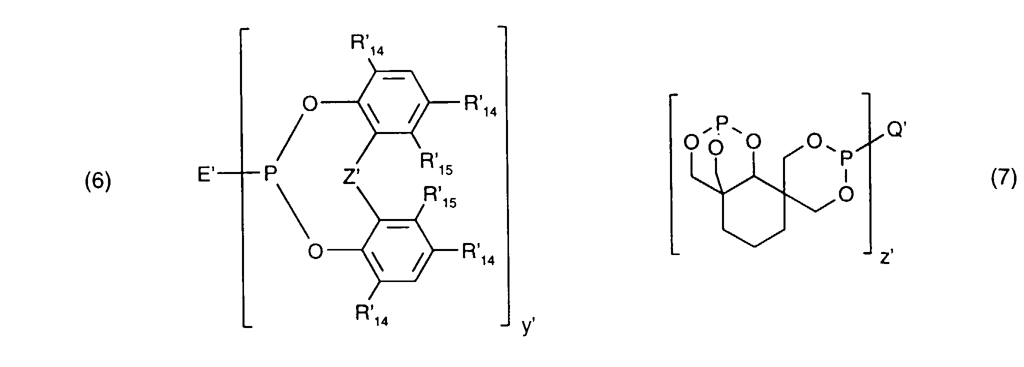 worin die Indices ganzzahlig sind und
n' für 2, 3 oder 4; p' für 1 oder 2; q' für 2 oder 3; r' für 4 bis 12; y' für 1, 2 oder 3; und z' für 1 bis 6 steht;
A', wenn n' 2 ist, C₂-C₁₈-Alkylen; durch Sauerstoff, Schwefel oder -NR'₄- unterbrochenes C₂-C₁₂-Alkylen; einen Rest der Formel 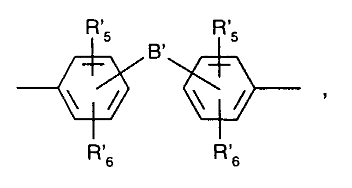 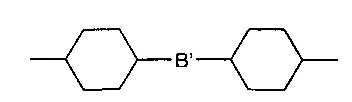 oder Phenylen ist;
A', wenn n' 3 ist, einen Rest der Formel -C_{r'}H_{2r'-1}- bedeutet;
A', wenn n' 4 ist, 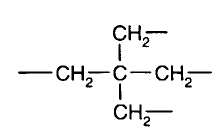 darstellt;
A" die Bedeutung von A', wenn n' 2 ist, hat;
B' eine direkte Bindung, -CH₂-, -CHR'₄-, -CR'₁R'₄-, Schwefel, C₅-C₇-Cycloalkyliden oder mit 1 bis 4 C₁-C₄-Alkylresten in Position 3, 4 und/oder 5 substituiertes Cyclohexyliden bedeutet;
D', wenn p' 1 ist, C₁-C₄-Alkyl und, wenn p' 2 ist, -CH₂OCH₂- bedeutet;
D", wenn p' 1 ist, C₁-C₄-Alkyl darstellt;
E', wenn y' 1 ist, C₁-C₁₈-Alkyl, -OR'₁ oder Halogen ist;
E', wenn y 2 ist, -O-A"-O- darstellt,
E', wenn y 3 ist, einen Rest der Formel R'₄C(CH₂O-)₃ oder N(CH₂CH₂O-)₃ bedeutet;
Q' für den Rest eines mindestens z'-wertigen Alkohols oder Phenols steht, wobei dieser Rest über das Sauerstoffatom an das Phosphoratom gebunden ist;
R'₁, R'₂ und R'₃ unabhängig voneinander unsubstituiertes oder mit Halogen, -COOR₄', -CN oder -CONR₄'R₄' substituiertes C₁-C₁₈-Alkyl; durch Sauerstoff, Schwefel oder -NR'₄- unterbrochenes C₂-C₁₈-Alkyl; C₇-C₉-Phenylalkyl; C₅-C₁₂-Cycloalkyl, Phenyl oder Naphthyl; mit Halogen, 1 bis 3 Alkylresten oder Alkoxyresten mit insgesamt 1 bis 18 Kohlenstoffatomen oder mit C₇-C₉-Phenylalkyl substituiertes Phenyl oder Naphthyl; oder einen Rest der Formel 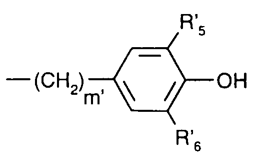 bedeuten, worin m' eine ganze Zahl aus dem Bereich 3 bis 6 bedeutet;
R'₄ Wasserstoff, C₁-C₁₈-Alkyl, C₅-C₁₂-Cycloalkyl oder C₇-C₉-Phenylalkyl darstellt,
R'₅ und R'₆ unabhängig voneinander Wasserstoff, C₁-C₈-Alkyl oder C₅-C₆-Cycloalkyl bedeuten,
R'₇ und R'₈, wenn q' 2 ist, unabhängig voneinander C₁-C₄-Alkyl oder zusammen einen 2,3-Dehydro-pentamethylenrest darstellen; und
R'₇ und R'₈, wenn q' 3 ist, Methyl bedeuten;
R'₁₄ Wasserstoff, C₁-C₉-Alkyl oder Cyclohexyl darstellt,
R'₁₅ Wasserstoff oder Methyl ist, und im Fall, wenn mehrere Reste R'₁₄ und R'₁₅vorhanden sind, diese Reste gleich oder verschieden sind,
X' und Y' jeweils eine direkte Bindung oder Sauerstoff darstellen,
Z' eine direkte Bindung, Methylen, -C(R'₁₆)₂- oder Schwefel bedeutet, und
R'₁₆ C₁-C₈-Alkyl darstellt.

Von besonderem Interesse ist ein Verfahren enthaltend als Komponente (A) ein Phosphit oder Phosphonit der Formel 1, 2, 5 oder 6 ist, worin
n' für die Zahl 2 und y' für die Zahl 1, 2 oder 3 steht;
A' C₂-C₁₈-Alkylen, p-Phenylen oder p-Biphenylen bedeutet,
E', wenn y' 1 ist, C₁-C₁₈-Alkyl, -OR'₁ oder Fluor darstellt;
E', wenn y' 2 ist, p-Biphenylen bedeutet,
E', wenn y' 3 ist, N(CH₂CH₂O-)₃ darstellt,
R'₁, R'₂ und R'₃ unabhängig voneinander C₁-C₁₈-Alkyl, C₇-C₉-Phenylalkyl, Cyclohexyl, Phenyl, mit 1 bis 3 Alkylresten mit insgesamt 1 bis 18 Kohlenstoffatomen substituiertes Phenyl bedeuten;
R'₁₄ Wasserstoff oder C₁-C₉-Alkyl darstellt,
R'₁₅ Wasserstoff oder Methyl ist;
X' eine direkte Bindung bedeutet,
Y' Sauerstoff darstellt,
Z' eine direkte Bindung oder -CH(R'₁₆)- bedeutet, und
R'₁₆ C₁-C₄-Alkyl darstellt.

Ebenfalls von Interesse ist ein Verfahren enthaltend als Komponente (A) ein Phosphit oder Phosphonit der Formel 1, 2, 5 oder 6, worin
n' für die Zahl 2 und y' für die Zahl 1 oder 3 steht;
A' p-Biphenylen bedeutet,
E', wenn y' 1 ist, C₁-C₁₈-Alkoxy oder Fluor darstellt,
E', wenn y' 3 ist, N(CH₂CH₂O-)₃ bedeutet,
R'₁, R'₂ und R'₃ unabhängig voneinander C₁-C₁₈-Alkyl, mit 2 oder 3 Alkylresten mit insgesamt 2 bis 12 Kohlenstoffatomen substituiertes Phenyl darstellen;
R'₁₄ Methyl oder tert-Butyl bedeutet;
R'₁₅ Wasserstoff ist;
X' eine direkte Bindung darstellt;
Y' Sauerstoff bedeutet; und
Z' eine direkte Bindung, Methylen oder -CH(CH₃)- darstellt.

Besonders bevorzugt ist ein Verfahren enthaltend als Komponente (A) ein Phosphit oder Phosphonit der Formel 1, 2 oder 6.

Speziell bevorzugt ist ein Verfahren enthaltend als Komponente (A) mindestens eine Verbindung der Formel VII 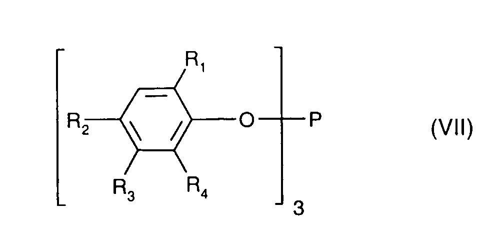 worin
R₁ und R₂ unabhängig voneinander Wasserstoff, C₁-C₈-Alkyl, Cyclohexyl oder Phenyl bedeuten, und
R₃ und R₄ unabhängig voneinander Wasserstoff oder C₁-C₄-Alkyl darstellen.

Die folgenden Verbindungen sind Beispiele für organische Phosphite und Phosphonite, die sich als Komponente (A) in dem erfindungsgemässen Verfahren sich besonders eignen.

Triphenylphosphit, Diphenylalkylphosphite, Phenyldialkylphosphite, Tris(nonylphenyl)-phosphit, Trilaurylphosphit, Trioctadecylphosphit, Distearyl-pentaerythritdiphosphit, Tris(2,4-di-tert-butylphenyl)-phosphit (Irgafos® 168, Ciba-Geigy), Diisodecylpentaerythrit-diphosphit, Bis(2,4-di-tert-butylphenyl)-pentaerythritdiphosphit (Formel D), Bis-(2,6-di-tert-butyl-4-methylphenyl)-pentaerythritdiphosphit (Formel E), Bis-isodecyloxy-pentaerythritdiphosphit, Bis-(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis(2,4-di-tert-butylphenyl)-4,4'-biphenylen-diphosphonit (Irgafos®P-EPQ, Ciba-Geigy, Formel H), 6-lsooctyloxy-2,4,8,10-tetra-tert-butyl-12H-dibenz[d,g]-1,3,2-dioxaphosphocin (Formel C), 6-Fluor-2,4,8,10-tetra-tert-butyl-12-methyl-dibenz[d,g]-1,3,2-dioxaphosphocin (Formel A), Bis(2,4-di-tert-butyl-6-methylphenyl)-methylphosphit, Bis(2,4-di-tert-butyl-6-methylphenyl)-ethylphosphit (Formel G).

Besonders bevorzugt werden die folgenden Phosphite und Phosphonite verwendet:

Tris(2,4-di-tert-butylphenyl)-phosphit (Irgafos®168, Ciba-Geigy), Tris(nonylphenyl)-phosphit,

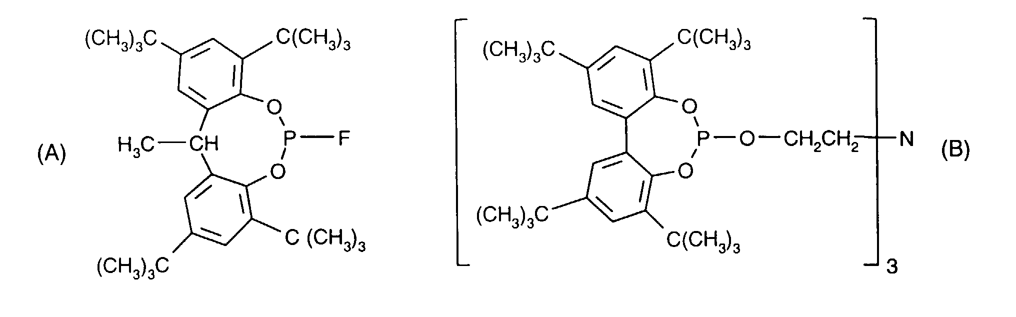

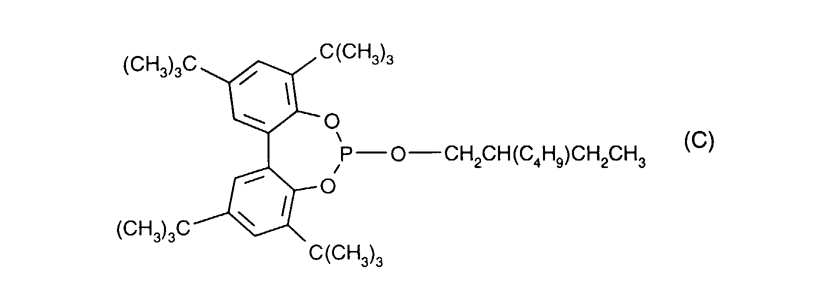

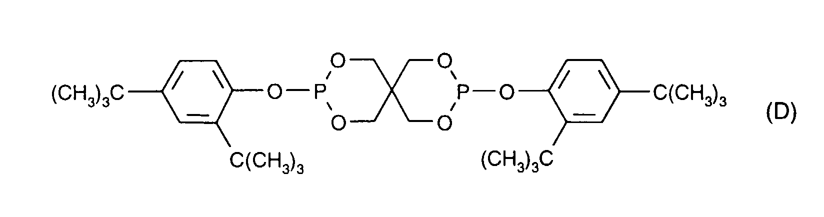

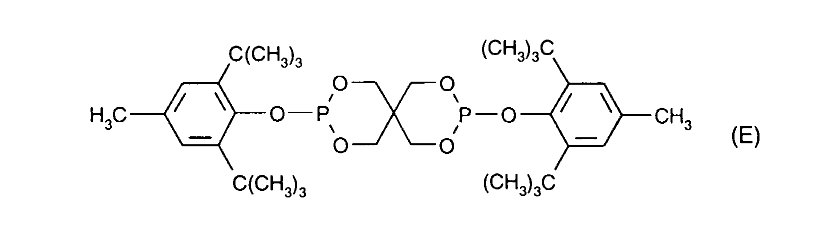

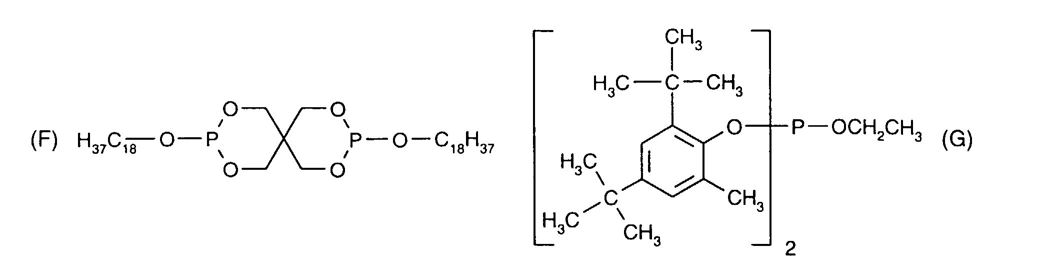

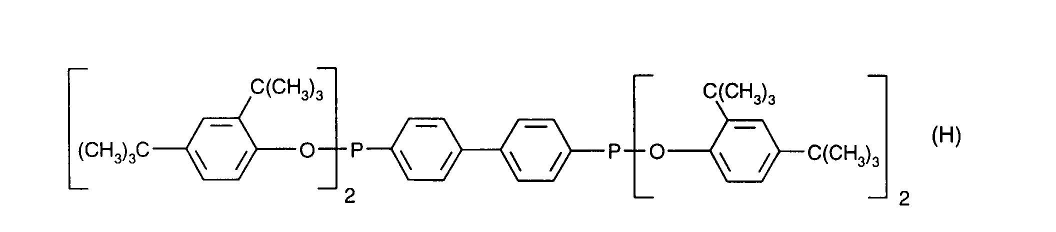

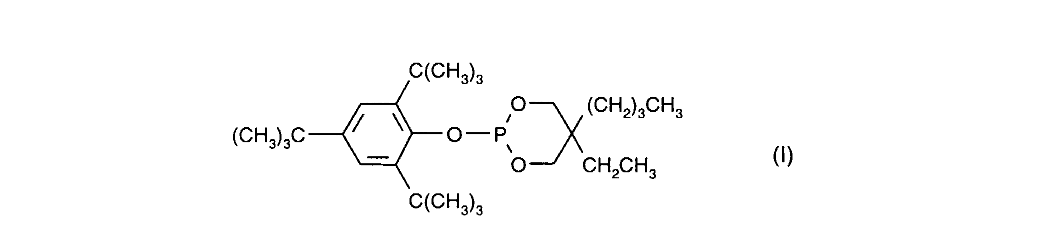

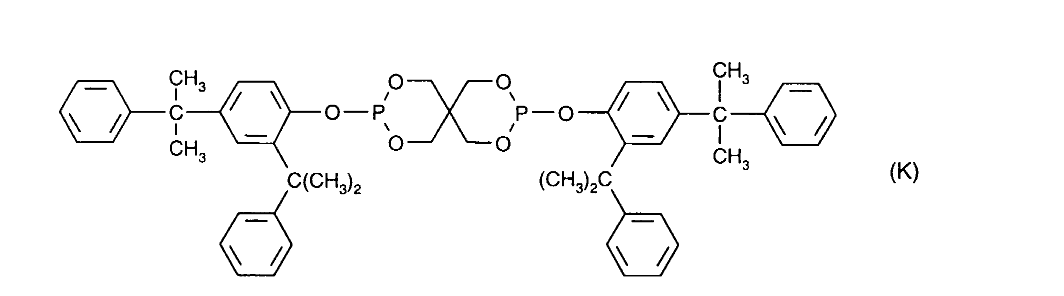

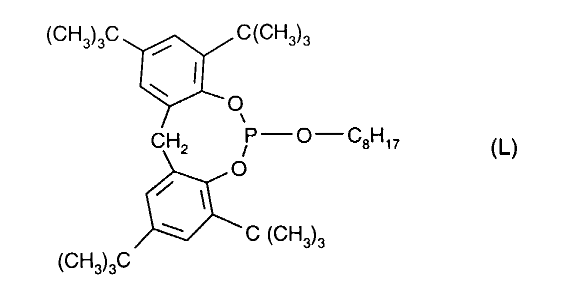

Ganz besonders bevorzugt wird Tris(2,4-di-tert-butylphenyl)-phosphit [Irgafos®168, Ciba Spezialitätenchemie AG], Bis(2,4-di-tert-butyl-6-methylphenyl)-ethyl-phosphit [Irgafos®38, Ciba Spezialitätenchemie AG, Formel (G)], Ultranox®626 [GE Chemicals, Formel (D)], Tetrakis(2,4-di-tert-butylphenyl)-4,4'-biphenylen-diphosphonit [Irgafos®P-EPQ, Ciba Spezialitätenchemie AG, Formel (H)], Ultranox®641 [GE Chemicals, Formel (1)], Doverphos®S9228 [Dover Chemicals, Formel (K)] oder Mark®HP10 [Adeka Argus, Formel (L)].

Die genannten organischen Phosphite und Phosphonite sind bekannte Verbindungen; viele davon sind kommerziell erhältlich.

Die organischen Phosphite oder Phosphonite werden vorzugsweise in Mengen von beispielsweise 0,01 bis 10 %, insbesondere 0,05 bis 5 %, beispielsweise 0,1 bis 3 %, bezogen auf das Gewicht des zu stabilisierenden Polyolefinhohlkörpers, eingesetzt.

Von Interesse ist ein Verfahren enthaltend als Komponente (B) eine Verbindung der Formel I 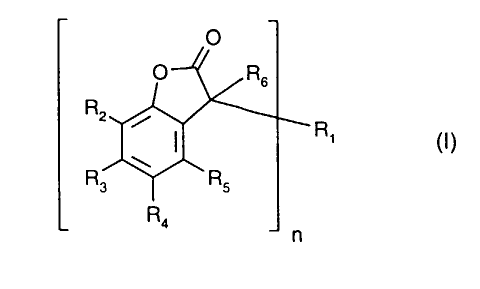 worin, wenn n 1 ist,

R₁ unsubstituiertes oder mit C₁-C₄-Alkyl, C₁-C₄-Alkoxy, C₁-C₄-Alkylthio, Hydroxy, Halogen, Amino, C₁-C₄-Alkylamino, Phenylamino oder Di(C₁-C₄-alkyl)amino substituiertes Naphthyl, Phenanthryl, Anthryl, 5,6,7,8-Tetrahydro-2-naphthyl, 5,6,7,8-Tetrahydro-1-naphthyl, Thienyl, Benzo[b]thienyl, Naphtho[2,3-b]thienyl, Thianthrenyl, Dibenzofuryl, Chromenyl, Xanthenyl, Phenoxathiinyl, Pyrrolyl, Imidazolyl, Pyrazolyl, Pyrazinyl, Pyrimidinyl, Pyridazinyl, Indolizinyl, Isoindolyl, Indolyl, Indazolyl, Purinyl, Chinolizinyl, Isochinolyl, Chinolyl, Phtalazinyl, Naphthyridinyl, Chinoxalinyl, Chinazolinyl, Cinnolinyl, Pteridinyl, Carbazolyl, β-Carbolinyl, Phenanthridinyl, Acridinyl, Perimidinyl, Phenanthrolinyl, Phenazinyl, Isothiazolyl, Phenothiazinyl, Isoxazolyl, Furazanyl, Biphenyl, Terphenyl, Fluorenyl oder Phenoxazinyl darstellt, oder R₁ einen Rest der Formel II 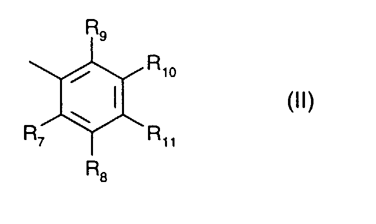 bedeutet, und
wenn n 2 ist,
R₁ unsubstituiertes oder mit C₁-C₄-Alkyl oder Hydroxy substituiertes Phenylen oder Naphthylen; oder -R₁₂-X-R₁₃- darstellt,
R₂, R₃, R₄ und R₅ unabhängig voneinander Wasserstoff, Chlor, Hydroxy, C₁-C₂₅-Alkyl, C₇-C₉-Phenylalkyl, unsubstituiertes oder durch C₁-C₄-Alkyl substituiertes Phenyl; unsubstituiertes oder durch C₁-C₄-Alkyl substituiertes C₅-C₈-Cycloalkyl; C₁-C₁₈-Alkoxy, C₁-C₁₈-Alkylthio, C₁-C₄-Alkylamino, Di-(C₁-C₄-alkyl)amino, C₁-C₂₅-Alkanoyloxy, C₁-C₂₅-Alkanoylamino, C₃-C₂₅-Alkenoyloxy, durch Sauerstoff, Schwefel oder 〉N―R₁₄ unterbrochenes C₃-C₂₅-Alkanoyloxy; C₆-C₉-Cycloalkylcarbonyloxy, Benzoyloxy oder durch C₁-C₁₂-Alkyl substituiertes Benzoyloxy darstellen; oder ferner die Reste R₂ und R₃ oder die Reste R₃ und R₄ oder die Reste R₄ und R₅ zusammen mit den Kohlenstoffatomen, an die sie gebunden sind, einen Benzoring bilden, R₄ zusätzlich -(CH₂)ₚ-COR₁₅ oder -(CH₂)_{q}OH darstellt, oder wenn R₃, R₅ und R₆ Wasserstoff sind, R₄ zusätzlich einen Rest der Formel III 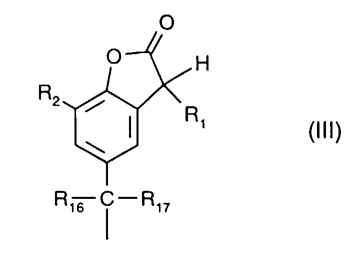 bedeutet, worin R₁ wie oben für n = 1 angegeben definiert ist,
R₆ Wasserstoff oder einen Rest der Formel IV 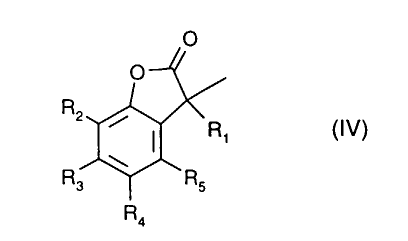 darstellt, wobei R₄ nicht einen Rest der Formel III bedeutet und R₁ wie oben für n = 1 angegeben definiert ist,
R₇, R₈, R₉, R₁₀ und R₁₁ unabhängig voneinander Wasserstoff, Halogen, Hydroxy, C₁-C₂₅-Alkyl, durch Sauerstoff, Schwefel oder 〉N―R₁₄ unterbrochenes C₂-C₂₅-Alkyl; C₁-C₂₅-Alkoxy, durch Sauerstoff, Schwefel oder 〉N―R₁₄ unterbrochenes C₂-C₂₅-Alkoxy;
C₁-C₂₅-Alkylthio, C₃-C₂₅-Alkenyl, C₃-C₂₅-Alkenyloxy, C₃-C₂₅-Alkinyl, C₃-C₂₅-Alkinyloxy, C₇-C₉-Phenylalkyl, C₇-C₉-Phenylalkoxy, unsubstituiertes oder durch C₁-C₄-Alkyl substituiertes Phenyl; unsubstituiertes oder durch C₁-C₄-Alkyl substituiertes Phenoxy; unsubstituiertes oder durch C₁-C₄-Alkyl substituiertes C₅-C₈-Cycloalkyl; unsubstituiertes oder durch C₁-C₄-Alkyl substituiertes C₅-C₈-Cycloalkoxy; C₁-C₄-Alkylamino, Di-(C₁-C₄-alkyl)amino, C₁-C₂₅-Alkanoyl, durch Sauerstoff, Schwefel oder 〉N―R₁₄ unterbrochenes C₃-C₂₅-Alkanoyl; C₁-C₂₅-Alkanoyloxy, durch Sauerstoff, Schwefel oder 〉N―R₁₄ unterbrochenes C₃-C₂₅-Alkanoyloxy; C₁-C₂₅-Alkanoylamino, C₃-C₂₅-Alkenoyl, durch Sauerstoff, Schwefel oder 〉N―R₁₄ unterbrochenes C₃-C₂₅-Alkenoyl; C₃-C₂₅-Alkenoyloxy, durch Sauerstoff, Schwefel oder 〉N―R₁₄ unterbrochenes C₃-C₂₅-Alkenoyloxy; C₆-C₉-Cycloalkylcarbonyl, C₆-C₉-Cycloalkylcarbonyloxy, Benzoyl oder durch C₁-C₁₂-Alkyl substituiertes Benzoyl;

Benzoyloxy oder durch C₁-C₁₂-Alkyl substituiertes Benzoyloxy; 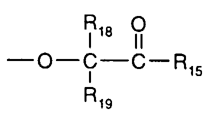 oder 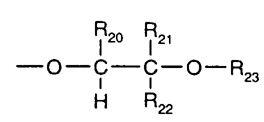 darstellen, oder ferner in Formel II die Reste R₇ und R₈ oder die

Reste R₈ und R₁₁ zusammen mit den Kohlenstoffatomen, an die sie gebunden sind, einen Benzoring bilden,
R₁₂ und R₁₃ unabhängig voneinander unsubstituiertes oder durch C₁-C₄-Alkyl substituiertes Phenylen oder Naphthylen darstellen,
R₁₄ Wasserstoff oder C₁-C₈-Alkyl ist,
R₁₅ Hydroxy, 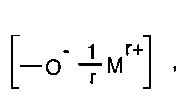 C₁-C₁₈-Alkoxy oder 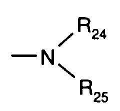 bedeutet,
R₁₆ und R₁₇ unabhängig voneinander Wasserstoff, CF₃, C₁-C₁₂-Alkyl oder Phenyl darstellen, oder R₁₆ und R₁₇ zusammen mit dem C-Atom, an das sie gebunden sind, einen unsubstituierten oder durch 1 bis 3 C₁-C₄-Alkyl substituierten C₅-C₈-Cycloalkylidenring bilden;
R₁₈ und R₁₉ unabhängig voneinander Wasserstoff, C₁-C₄-Alkyl oder Phenyl darstellen, R₂₀ Wasserstoff oder C₁-C₄-Alkyl ist,
R₂₁ Wasserstoff, unsubstituiertes oder durch C₁-C₄-Alkyl substituiertes Phenyl; C₁-C₂₅-Alkyl, durch Sauerstoff, Schwefel oder 〉N―R₁₄ unterbrochenes C₂-C₂₅-Alkyl; unsubstituiertes oder am Phenylrest durch 1 bis 3 C₁-C₄-Alkyl substituiertes C₇-C₉-Phenylalkyl; durch Sauerstoff, Schwefel oder 〉N―R₁₄ unterbrochenes unsubstituiertes oder am Phenylrest durch 1 bis 3 C₁-C₄-Alkyl substituiertes C₇-C₂₅-Phenylalkyl bedeutet, oder ferner die Reste R₂₀ und R₂₁ zusammen mit den Kohlenstoffatomen, an die sie gebunden sind, einen unsubstituierten oder durch 1 bis 3 C₁-C₄-Alkyl substituierten C₅-C₁₂-Cycloalkylenring bilden;
R₂₂ Wasserstoff oder C₁-C₄-Alkyl darstellt,
R₂₃ Wasserstoff, C₁-C₂₅-Alkanoyl, C₃-C₂₅-Alkenoyl, durch Sauerstoff, Schwefel oder 〉N―R₁₄ unterbrochenes C₃-C₂₅-Alkanoyl; durch eine Di(C₁-C₆-alkyl)phosphonatgruppe substituiertes C₂-C₂₅-Alkanoyl; C₆-C₉-Cycloalkylcarbonyl, Thenoyl, Furoyl, Benzoyl oder durch C₁-C₁₂-Alkyl substituiertes Benzoyl; 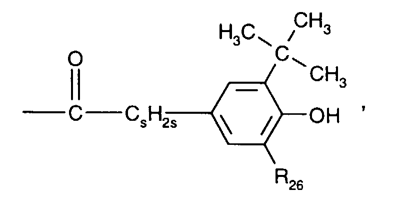 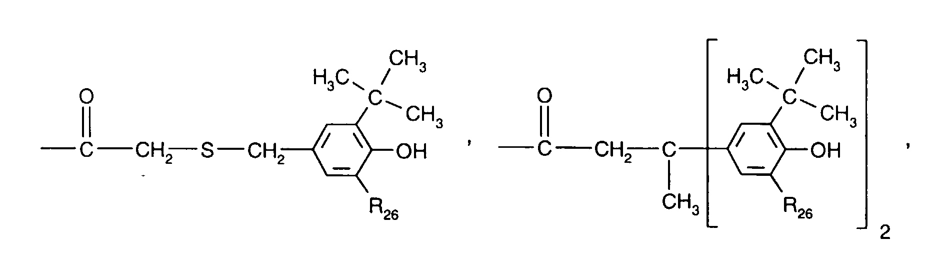 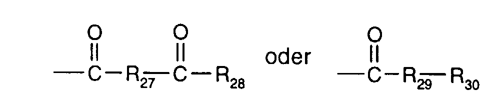 bedeutet,
R₂₄ und R₂₅ unabhängig voneinander Wasserstoff oder C₁-C₁₈-Alkyl darstellen,
R₂₆ Wasserstoff oder C₁-C₈-Alkyl darstellt,
R₂₇ eine direkte Bindung, C₁-C₁₈-Alkylen, durch Sauerstoff, Schwefel oder 〉N―R₁₄ unterbrochenes C₂-C₁₈-Alkylen; C₂-C₁₈-Alkenylen, C₂-C₂₀-Alkyliden, C₇-C₂₀-Phenylalkyliden, C₅-C₈-Cycloalkylen, C₇-C₈-Bicycloalkylen, unsubstituiertes oder durch C₁-C₄-Alkyl substituiertes Phenylen, 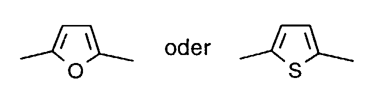 darstellt,
R₂₈ Hydroxy, 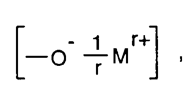 C₁-C₁₈-Alkoxy oder 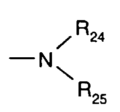 bedeutet,
R₂₉ Sauerstoff, -NH- oder 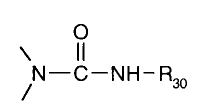 darstellt,
R₃₀ C₁-C₁₈-Alkyl oder Phenyl ist,
R₃₁ Wasserstoff oder C₁-C₁₈-Alkyl bedeutet,
M ein r-wertiges Metallkation ist,
X eine direkte Bindung, Sauerstoff, Schwefel oder -NR₃₁- darstellt,
n 1 oder 2 ist,
p 0, 1 oder 2 bedeutet,
q 1, 2, 3, 4, 5 oder 6 darstellt,
r 1, 2 oder 3 ist, und
s 0, 1 oder 2 bedeutet.

Unsubstituiertes oder mit C₁-C₄-Alkyl, C₁-C₄-Alkoxy, C₁-C₄-Alkylthio, Hydroxy, Halogen, Amino, C₁-C₄-Alkylamino, Phenylamino oder Di(C₁-C₄-alkyl)amino substituiertes Naphthyl, Phenanthryl, Anthryl, 5,6,7,8-Tetrahydro-2-naphthyl, 5,6,7,8-Tetrahydro-1-naphthyl, Thienyl, Benzo[b]thienyl, Naphtho[2,3-b]thienyl, Thianthrenyl, Dibenzofuryl, Chromenyl, Xanthenyl, Phenoxathiinyl, Pyrrolyl, Imidazolyl, Pyrazolyl, Pyrazinyl, Pyrimidinyl, Pyridazinyl, Indolizinyl, Isoindolyl, Indolyl, Indazolyl, Purinyl, Chinolizinyl, Isochinolyl, Chinolyl, Phtalazinyl, Naphthyridinyl, Chinoxalinyl, Chinazolinyl, Cinnolinyl, Pteridinyl, Carbazolyl, β-Carbolinyl, Phenanthridinyl, Acridinyl, Perimidinyl, Phenanthrolinyl, Phenazinyl, Isothiazolyl, Phenothiazinyl, Isoxazolyl, Furazanyl, Biphenyl, Terphenyl, Fluorenyl oder Phenoxazinyl bedeutet beispielsweise 1-Naphthyl, 2-Naphthyl, 1-Phenylamino-4-naphthyl, 1-Methylnaphthyl, 2-Methylnaphthyl, 1-Methoxy-2-naphthyl, 2-Methoxy-1-naphthyl, 1-Dimethylamino-2-naphthyl, 1,2-Dimethyl-4-naphthyl, 1,2-Dimethyl-6-naphthyl, 1,2-Dimethyl-7-naphthyl, 1,3-Dimethyl-6-naphthyl, 1,4-Dimethyl-6-naphthyl, 1,5-Dimethyl-2-naphthyl, 1,6-Dimethyl-2-naphthyl, 1-Hydroxy-2-naphthyl, 2-Hydroxy-1-naphthyl, 1,4-Dihydroxy-2-naphthyl, 7-Phenanthryl, 1-Anthryl, 2-Anthryl, 9-Anthryl, 3-Benzo[b]thienyl, 5-Benzo[b]thienyl, 2-Benzo[b]thienyl, 4-Dibenzofuryl, 4,7-Dibenzofuryl, 4-Methyl-7-dibenzofuryl, 2-Xanthenyl, 8-Methyl-2-xanthenyl, 3-Xanthenyl, 2-Phenoxathiinyl, 2,7-Phenoxathiinyl, 2-Pyrrolyl, 3-Pyrrolyl, 5-Methyl-3-pyrrolyl, 2-Imidazolyl, 4-Imidazolyl, 5-Imidazolyl, 2-Methyl-4-imidazolyl, 2-Ethyl-4-imidazolyl, 2-Ethyl-5-imidazolyl, 3-Pyrazolyl, 1-Methyl-3-pyrazolyl, 1-Propyl-4-pyrazolyl, 2-Pyrazinyl, 5,6-Dimethyl-2-pyrazinyl, 2-lndolizinyl, 2-Methyl-3-isoindolyl, 2-Methyl-1-isoindolyl, 1-Methyl-2-indolyl, 1-Methyl-3-indolyl, 1,5-Dimethyl-2-indolyl, 1-Methyl-3-indazolyl, 2,7-dimethyl-8-purinyl, 2-Methoxy-7-methyl-8-purinyl, 2-Chinolizinyl, 3-lsochinolyl, 6-lsochinolyl, 7-lsochinolyl, Isochinolyl, 3-Methoxy-6-isochinolyl, 2-Chinolyl, 6-Chinolyl, 7-Chinolyl, 2-Methoxy-3-chinolyl, 2-Methoxy-6-chinolyl, 6-Phtalazinyl, 7-Phtalazinyl, 1-Methoxy-6-phtalazinyl, 1,4-Dimethoxy-6-phtalazinyl, 1,8-Naphthyridin-2-yl, 2-Chinoxalinyl, 6-Chinoxalinyl, 2,3-Dimethyl-6-chinoxalinyl, 2,3-Dimethoxy-6-chinoxalinyl, 2-Chinazolinyl, 7-Chinazolinyl, 2-Dimethylamino-6-chinazolinyl, 3-Cinnolinyl,6- Cinnolinyl, 7-Cinnolinyl, 3-Methoxy-7-cinnolinyl, 2-Pteridinyl, 6-Pteridinyl, 7-Pteridinyl, 6,7-Dimethoxy-2-pteridinyl, 2-Carbazolyl, 3-Carbazolyl, 9-Methyl-2-Carbazolyl, 9-Methyl-3-Carbazolyl, β-Carbolin-3-yl, 1-Methyl-β-carbolin-3-yl, 1-Methyl-β-Carbolin-6-yl, 3-Phenanthridinyl, 2-Acridinyl, 3-Acridinyl, 2-Perimidinyl, 1-Methyl-5-perimidinyl, 5-Phenanthrolinyl, 6-Phenanthrolinyl, 1-Phenazinyl, 2-Phenazinyl, 3-Isothiazolyl, 4-Isothiazolyl, 5-Isothiazolyl, 2-Phenothiazinyl, 3-Phenothiazinyl, 10-Methyl-3-phenothiazinyl, 3-lsoxazolyl, 4-Isoxazolyl, 5-lsoxazolyl, 4-Methyl-3-furazanyl, 2-Phenoxazinyl oder 10-Methyl-2-phenoxazinyl.

Besonders bevorzugt sind unsubstituiertes oder mit C₁-C₄-Alkyl, C₁-C₄-Alkoxy, C₁-C₄-Alkylthio, Hydroxy, Phenylamino oder Di(C₁-C₄-alkyl)amino substituiertes Naphthyl, Phenanthryl, Anthryl, 5,6,7,8-Tetrahydro-2-naphthyl, 5,6,7,8-Tetrahydro-1-naphthyl, Thienyl, Benzo[b]-thienyl, Naphtho[2,3-b]thienyl, Thianthrenyl, Dibenzofuryl, Chromenyl, Xanthenyl, Phenoxathiinyl, Pyrrolyl, Isoindolyl, Indolyl, Phenothiazinyl, Biphenyl, Terphenyl, Fluorenyl oder Phenoxazinyl wie beispielsweise 1-Naphthyl, 2-Naphthyl, 1-Phenylamino-4-naphthyl, 1-Methylnaphthyl, 2-Methylnaphthyl, 1-Methoxy-2-naphthyl, 2-Methoxy-1-naphthyl, 1-Dimethylamino2-naphthyl, 1,2-Dimethyl-4-naphthyl, 1,2-Dimethyl-6-naphthyl, 1,2-Dimethyl-7-naphthyl, 1,3-Dimethyl-6-naphthyl, 1,4-Dimethyl-6-naphthyl, 1,5-Dimethyl-2-naphthyl, 1,6-Dimethyl-2-naphthyl, 1-Hydroxy-2-naphthyl, 2-Hydroxy-1-naphthyl, 1,4-Dihydroxy-2-naphthyl, 7-Phenanthryl, 1-Anthryl, 2-Anthryl, 9-Anthryl, 3-Benzo[b]thienyl, 5-Benzo[b]thienyl, 2-Benzo[b]-thienyl, 4-Dibenzofuryl, 4,7-Dibenzofuryl, 4-Methyl-7-dibenzofuryl, 2-Xanthenyl, 8-Methyl-2-xanthenyl, 3-Xanthenyl, 2-Pyrrolyl, 3-Pyrrolyl, 2-Phenothiazinyl, 3-Phenothiazinyl, 10-Methyl-3-phenothiazinyl.

Halogen bedeutet beispielsweise Chlor, Brom oder lod. Bevorzugt ist Chlor.

Alkanoyl mit bis zu 25 Kohlenstoffatomen bedeutet einen verzweigten oder unverzweigten Rest wie beispielsweise Formyl, Acetyl, Propionyl, Butanoyl, Pentanoyl, Hexanoyl, Heptanoyl, Octanoyl, Nonanoyl, Decanoyl, Undecanoyl, Dodecanoyl, Tridecanoyl, Tetradecanoyl, Pentadecanoyl, Hexadecanoyl, Heptadecanoyl, Octadecanoyl, Eicosanoyl oder Docosanoyl. Bevorzugt ist Alkanoyl mit 2 bis 18, insbesondere 2 bis 12, z.B. 2 bis 6 Kohlenstoffatomen. Besonders bevorzugt ist Acetyl.

Durch eine Di(C₁-C₆-alkyl)phosphonatgruppe substituiertes C₂-C₂₅-Alkanoyl bedeutet beispielsweise (CH₃CH₂O)₂POCH₂CO-, (CH₃O)₂POCH₂CO-, (CH₃CH₂CH₂CH₂O)₂POCH₂CO-, (CH₃CH₂O)₂POCH₂CH₂CO-, (CH₃O)₂POCH₂CH₂CO-, (CH₃CH₂CH₂CH₂O)₂POCH₂CH₂CO-, (CH₃CH₂O)₂PO(CH₂)₄CO-, (CH₃CH₂O)₂PO(CH₂)₈CO- oder (CH₃CH₂O)₂PO(CH₂)₁₇CO-.

Alkanoyloxy mit bis zu 25 Kohlenstoffatomen bedeutet einen verzweigten oder unverzweigten Rest wie beispielsweise Formyloxy, Acetoxy, Propionyloxy, Butanoyloxy, Pentanoyloxy, Hexanoyloxy, Heptanoyloxy, Octanoyloxy, Nonanoyloxy, Decanoyloxy, Undecanoyloxy, Dodecanoyloxy, Tridecanoyloxy, Tetradecanoyloxy, Pentadecanoyloxy, Hexadecanoyloxy, Heptadecanoyloxy, Octadecanoyloxy, Eicosanoyloxy oder Docosanoyloxy. Bevorzugt ist Alkanoyloxy mit 2 bis 18, insbesondere 2 bis 12, z.B. 2 bis 6 Kohlenstoffatomen. Besonders bevorzugt ist Acetoxy.

Alkenoyl mit 3 bis 25 Kohlenstoffatomen bedeutet einen verzweigten oder unverzweigten Rest wie beispielsweise Propenoyl, 2-Butenoyl, 3-Butenoyl, Isobutenoyl, n-2,4-Pentadienoyl, 3-Methyl-2-butenoyl, n-2-Octenoyl, n-2-Dodecenoyl, iso-Dodecenoyl, Oleoyl, n-2-Octadecenoyl oder n-4-Octadecenoyl. Bevorzugt ist Alkenoyl mit 3 bis 18, insbesondere 3 bis 12, z.B. 3 bis 6, vor allem 3 bis 4 Kohlenstoffatomen.

Durch Sauerstoff, Schwefel oder 〉N―R₁₄ unterbrochenes C₃-C₂₅-Alkenoyl bedeutet beispielsweise CH₃OCH₂CH₂CH=CHCO- oder CH₃OCH₂CH₂OCH=CHCO-.

Alkenoyloxy mit 3 bis 25 Kohlenstoffatomen bedeutet einen verzweigten oder unverzweigten Rest wie beispielsweise Propenoyloxy, 2-Butenoyloxy, 3-Butenoyloxy, Isobutenoyloxy, n-2,4-Pentadienoyloxy, 3-Methyl-2-butenoyloxy, n-2-Octenoyloxy, n-2-Dodecenoyloxy, iso-Dodecenoyloxy, Oleoyloxy, n-2-Octadecenoyloxy oder n-4-Octadecenoyloxy. Bevorzugt ist Alkenoyloxy mit 3 bis 18, insbesondere 3 bis 12, z.B. 3 bis 6, vor allem 3 bis 4 Kohlenstoffatomen.

Durch Sauerstoff, Schwefel oder 〉N―R₁₄ unterbrochenes C₃-C₂₅-Alkenoyloxy bedeutet beispielsweise CH₃OCH₂CH₂CH=CHCOO- oder CH₃OCH₂CH₂OCH=CHCOO-.

Durch Sauerstoff, Schwefel oder 〉N―R₁₄ unterbrochenes C₃-C₂₅-Alkanoyl bedeutet beispielsweise CH₃-O-CH₂CO-, CH₃-S-CH₂CO-, CH₃-NH-CH₂CO-, CH₃-N(CH₃)-CH₂CO-, CH₃-O-CH₂CH₂-O-CH₂CO-, CH₃-(O-CH₂CH₂-)₂O-CH₂CO-, CH₃-(O-CH₂CH₂-)₃O-CH₂CO- -CH₂CO- oder CH₃-(O-CH₂CH₂-)₄O-CH₂CO-.

Durch Sauerstoff, Schwefel oder 〉N―R₁₄ unterbrochenes C₃-C₂₅-Alkanoyloxy bedeutet beispielsweise CH₃-O-CH₂COO-, CH₃-S-CH₂COO-, CH₃-NH-CH₂COO-, CH₃-N(CH₃)-CH₂COO-, CH₃-O-CH₂CH₂-O-CH₂COO-, CH₃-(O-CH₂CH₂-)₂O-CH₂COO-, CH₃-(O-CH₂CH₂-)₃O-CH₂COO- oder CH₃-(O-CH₂CH₂-)₄O-CH₂COO-.

C₆-C₉-Cycloalkylcarbonyl bedeutet beispielsweise Cyclopentylcarbonyl, Cyclohexylcarbonyl, Cycloheptylcarbonyl oder Cyclooctylcarbonyl. Cyclohexylcarbonyl ist bevorzugt.

C₆-C₉-Cycloalkylcarbonyloxy bedeutet beispielsweise Cyclohexylcarbonyloxy, Cycloheptylcarbonyloxy oder Cyclooctylcarbonyloxy. Cyclohexylcarbonyloxy ist bevorzugt.

Durch C₁-C₁₂-Alkyl substituiertes Benzoyl, das vorzugsweise 1 bis 3, insbesondere 1 oder 2 Alkylgruppen trägt, bedeutet beispielsweise o-, m- oder p-Methylbenzoyl, 2,3-Dimethylbenzoyl, 2,4-Dimethylbenzoyl, 2,5-Dimethylbenzoyl, 2,6-Dimethylbenzoyl, 3,4-Dimethylbenzoyl, 3,5-Dimethylbenzoyl, 2-Methyl-6-ethylbenzoyl, 4-tert-Butylbenzoyl, 2-Ethylbenzoyl, 2,4,6-Trimethylbenzoyl, 2,6-Dimethyl-4-tert-butylbenzoyl oder 3,5-Di-tert-butylbenzoyl. Bevorzugte Substituenten sind C₁-C₈-Alkyl, insbesondere C₁-C₄-Alkyl.

Durch C₁-C₁₂-Alkyl substituiertes Benzoyloxy, das vorzugsweise 1 bis 3, insbesondere 1 oder 2 Alkylgruppen trägt, bedeutet beispielsweise o-, m- oder p-Methylbenzoyloxy, 2,3-Dimethylbenzoyloxy, 2,4-Dimethylbenzoyloxy, 2,5-Dimethylbenzoyloxy, 2,6-Dimethylbenzoyloxy, 3,4-Dimethylbenzoyloxy, 3,5-Dimethylbenzoyloxy, 2-Methyl-6-ethylbenzoyloxy, 4-tert-Butylbenzoyloxy, 2-Ethylbenzoyloxy, 2,4,6-Trimethylbenzoyloxy, 2,6-Dimethyl-4-tert-butylbenzoyloxy oder 3,5-Di-tert-butylbenzoyloxy. Bevorzugte Substituenten sind C₁-C₈-Alkyl, insbesondere C₁-C₄-Alkyl.

Alkyl mit bis zu 25 Kohlenstoffatomen bedeutet einen verzweigten oder unverzweigten Rest wie beispielsweise Methyl, Ethyl, Propyl, Isopropyl, n-Butyl, sec-Butyl, Isobutyl, tert-Butyl, 2-Ethylbutyl, n-Pentyl, Isopentyl, 1-Methylpentyl, 1,3-Dimethylbutyl, n-Hexyl, 1-Methylhexyl, n-Heptyl, Isoheptyl, 1,1,3,3-Tetramethylbutyl, 1-Methylheptyl, 3-Methylheptyl, n-Octyl, 2-Ethylhexyl, 1,1,3-Trimethylhexyl, 1,1,3,3-Tetramethylpentyl, Nonyl, Decyl, Undecyl, 1-Methylundecyl, Dodecyl, 1,1,3,3,5,5-Hexamethylhexyl, Tridecyl, Tetradecyl, Pentadecyl, Hexadecyl, Heptadecyl, Octadecyl, Eicosyl oder Docosyl. Eine der bevorzugten Bedeutungen von R₂ und R₄ ist beispielweise C₁-C₁₈-Alkyl. Eine besonders bevorzugte Bedeutung von R₄ ist C₁-C₄-Alkyl.

Alkenyl mit 3 bis 25 Kohlenstoffatomen bedeutet einen verzweigten oder unverzweigten Rest wie beispielsweise Propenyl, 2-Butenyl, 3-Butenyl, Isobutenyl, n-2,4-Pentadienyl, 3-Methyl-2-butenyl, n-2-Octenyl, n-2-Dodecenyl, iso-Dodecenyl, Oleyl, n-2-Octadecenyl oder n-4-Octadecenyl. Bevorzugt ist Alkenyl mit 3 bis 18, insbesondere 3 bis 12, z.B. 3 bis 6, vor allem 3 bis 4 Kohlenstoffatomen.

Alkenyloxy mit 3 bis 25 Kohlenstoffatomen bedeutet einen verzweigten oder unverzweigten Rest wie beispielsweise Propenyloxy, 2-Butenyloxy, 3-Butenyloxy, Isobutenyloxy, n-2,4-Pentadienyloxy, 3-Methyl-2-butenyloxy, n-2-Octenyloxy, n-2-Dodecenyloxy, iso-Dodecenyloxy, Oleyloxy, n-2-Octadecenyloxy oder n-4-Octadecenyloxy. Bevorzugt ist Alkenyloxy mit 3 bis 18, insbesondere 3 bis 12, z.B. 3 bis 6, vor allem 3 bis 4 Kohlenstoffatomen.

Alkinyl mit 3 bis 25 Kohlenstoffatomen bedeutet einen verzweigten oder unverzweigten Rest wie beispielsweise Propinyl ( ―CH₂-C≡CH ), 2-Butinyl, 3-Butinyl, n-2-Octinyl,

oder n-2-Dodecinyl. Bevorzugt ist Alkinyl mit 3 bis 18, insbesondere 3 bis 12, z.B. 3 bis 6, vor allem 3 bis 4 Kohlenstoffatomen.

Alkinyloxy mit 3 bis 25 Kohlenstoffatomen bedeutet einen verzweigten oder unverzweigten Rest wie beispielsweise Propinyloxy ( ―OCH₂-C≡CH ) 2-Butinyloxy, 3-Butinyloxy, n-2-Octinyloxy, oder n-2-Dodecinyloxy. Bevorzugt ist Alkinyloxy mit 3 bis 18, insbesondere 3 bis 12, z.B. 3 bis 6, vor allem 3 bis 4 Kohlenstoffatomen.

Durch Sauerstoff, Schwefel oder 〉N-R₁₄ unterbrochenes C₂-C₂₅-Alkyl bedeutet beispielsweise CH₃-O-CH₂-, CH₃-S-CH₂-, CH₃-NH-CH₂-, CH₃-N(CH₃)-CH₂-, CH₃-O-CH₂CH₂-O-CH₂-, CH₃-(O-CH₂CH₂-)₂O-CH₂-, CH₃-(O-CH₂CH₂-)₃O-CH₂- oder CH₃-(O-CH₂CH₂-)₄O-CH₂-.

C₇-C₉-Phenylalkyl bedeutet beispielsweise Benzyl, α-Methylbenzyl, α,α-Dimethylbenzyl oder 2-Phenylethyl. Benzyl und α,α-Dimethylbenzyl ist bevorzugt.

Unsubstituiertes oder am Phenylrest durch 1 bis 3 C₁-C₄-Alkyl substituiertes C₇-C₉-Phenylalkyl bedeutet beispielsweise Benzyl, α-Methylbenzyl, α,α-Dimethylbenzyl, 2-Phenylethyl, 2-Methylbenzyl, 3-Methylbenzyl, 4-Methylbenzyl, 2,4-Dimethylbenzyl, 2,6-Dimethylbenzyl oder 4-tert-Butylbenzyl. Benzyl ist bevorzugt.

Durch Sauerstoff, Schwefel oder 〉N―R₁₄ unterbrochenes unsubstituiertes oder am Phenylrest durch 1 bis 3 C₁-C₄-Alkyl substituiertes C₇-C₂₅-Phenylalkyl bedeutet einen verzweigten oder unverzweigten Rest wie beispielsweise Phenoxymethyl, 2-Methyl-phenoxymethyl, 3-Methyl-phenoxymethyl, 4-Methyl-phenoxymethyl, 2,4-Dimethyl-phenoxymethyl, 2,3-Dimethyl-phenoxymethyl, Phenylthiomethyl, N-Methyl-N-phenyl-methyl, N-Ethyl-N-phenyl-methyl, 4-tert-Butyl-phenoxymethyl, 4-tert-Butyl-phenoxyethoxy-methyl, 2,4-Di-tert-butylphenoxymethyl, 2,4-Di-tert-butyl-phenoxyethoxymethyl, Phenoxyethoxyethoxyethoxymethyl, Benzyloxymethyl, Benzyloxyethoxymethyl, N-Benzyl-N-ethyl-methyl oder N-Benzyl-N-isopropyl-methyl.

C₇-C₉-Phenylalkoxy bedeutet beispielsweise Benzyloxy, α-Methylbenzyloxy, α,α-Dimethylbenzyloxy oder 2-Phenylethoxy. Benzyloxy ist bevorzugt.

Durch C₁-C₄-Alkyl substituiertes Phenyl, das vorzugsweise 1 bis 3, insbesondere 1 oder 2 Alkylgruppen enthält, bedeutet beispielsweise o-, m- oder p-Methylphenyl, 2,3-Dimethylphenyl, 2,4-Dimethylphenyl, 2,5-Dimethylphenyl, 2,6-Dimethylphenyl, 3,4-Dimethylphenyl, 3,5-Dimethylphenyl, 2-Methyl-6-ethylphenyl, 4-tert-Butylphenyl, 2-Ethylphenyl oder 2,6-Diethylphenyl.

Durch C₁-C₄-Alkyl substituiertes Phenoxy, das vorzugsweise 1 bis 3, insbesondere 1 oder 2 Alkylgruppen enthält, bedeutet beispielsweise o-, m- oder p-Methylphenoxy, 2,3-Dimethylphenoxy, 2,4-Dimethylphenoxy, 2,5-Dimethylphenoxy, 2,6-Dimethylphenoxy, 3,4-Dimethylphenoxy, 3,5-Dimethylphenoxy, 2-Methyl-6-ethylphenoxy, 4-tert-Butylphenoxy, 2-Ethylphenoxy oder 2,6-Diethylphenoxy.

Unsubstituiertes oder durch C₁-C₄-Alkyl substituiertes C₅-C₈-Cycloalkyl bedeutet beispielsweise Cyclopentyl, Methylcyclopentyl, Dimethylcyclopentyl, Cyclohexyl, Methylcyclohexyl, Dimethylcyclohexyl, Trimethylcyclohexyl, tert-Butylcyclohexyl, Cycloheptyl oder Cyclooctyl. Bevorzugt ist Cyclohexyl und tert-Butylcyclohexyl.

Unsubstituiertes oder durch C₁-C₄-Alkyl substituiertes C₅-C₈-Cycloalkoxy bedeutet beispielsweise Cyclopentoxy, Methylcyclopentoxy, Dimethylcyclopentoxy, Cyclohexoxy, Methylcyclohexoxy, Dimethylcyclohexoxy, Trimethylcyclohexoxy, tert-Butylcyclohexoxy, Cycloheptoxy oder Cyclooctoxy. Bevorzugt ist Cyclohexoxy und tert-Butylcyclohexoxy.

Alkoxy mit bis zu 25 Kohlenstoffatomen bedeutet einen verzweigten oder unverzweigten Rest wie beispielsweise Methoxy, Ethoxy, Propoxy, Isopropoxy, n-Butoxy, Isobutoxy, Pentoxy, Isopentoxy, Hexoxy, Heptoxy, Octoxy, Decyloxy, Tetradecyloxy, Hexadecyloxy oder Octadecyloxy. Bevorzugt ist Alkoxy mit 1 bis 12, insbesondere 1 bis 8, z.B. 1 bis 6 Kohlenstoffatomen.

Durch Sauerstoff, Schwefel oder 〉N―R₁₄ unterbrochenes C₂-C₂₅-Alkoxy bedeutet beispielsweise CH₃-O-CH₂CH₂O-, CH₃-S-CH₂CH₂O-, CH₃-NH-CH₂CH₂O-, CH₃-N(CH₃)-CH₂CH₂O-, CH₃-O-CH₂CH₂-O-CH₂CH₂O-, CH₃-(O-CH₂CH₂-)₂O-CH₂CH₂O-, CH₃-(O-CH₂CH₂-)₃O-CH₂CH₂O- oder CH₃-(O-CH₂CH₂-)₄O-CH₂CH₂O-.

Alkylthio mit bis zu 25 Kohlenstoffatomen bedeutet einen verzweigten oder unverzweigten Rest wie beispielsweise Methylthio, Ethylthio, Propylthio, Isopropylthio, n-Butylthio, Isobutylthio, Pentylthio, Isopentylthio, Hexylthio, Heptylthio, Octylthio, Decylthio, Tetradecylthio, Hexadecylthio oder Octadecylthio. Bevorzugt ist Alkylthio mit 1 bis 12, insbesondere 1 bis 8, z.B. 1 bis 6 Kohlenstoffatomen.

Alkylamino mit bis zu 4 Kohlenstoffatomen bedeutet einen verzweigten oder unverzweigten Rest wie beispielsweise Methylamino, Ethylamino, Propylamino, Isopropylamino, n-Butylamino, Isobutylamino oder tert-Butylamino.

Di-(C₁-C₄-alkyl)amino bedeutet auch, dass die beiden Reste unabhängig voneinander verzweigt oder unverzweigt sind wie beispielsweise Dimethylamino, Methylethylamino, Diethylamino, Methyl-n-propylamino, Methylisopropylamino, Methyl-n-butylamino, Methylisobutylamino, Ethylisopropylamino, Ethyl-n-butylamino, Ethylisobutylamino, Ethyl-tert-butylamino, Diethylamino, Diisopropylamino, Isopropyl-n-butylamino, Isopropylisobutylamino, Di-n-butylamino oder Di-isobutylamino.

Alkanoylamino mit bis zu 25 Kohlenstoffatomen bedeutet einen verzweigten oder unverzweigten Rest wie beispielsweise Formylamino, Acetylamino, Propionylamino, Butanoylamino, Pentanoylamino, Hexanoylamino, Heptanoylamino, Octanoylamino, Nonanoylamino, Decanoylamino, Undecanoylamino, Dodecanoylamino, Tridecanoylamino, Tetradecanoylamino, Pentadecanoylamino, Hexadecanoylamino, Heptadecanoylamino, Octadecanoylamino, Eicosanoylamino oder Docsanoylamino. Bevorzugt ist Alkanoylamino mit 2 bis 18, insbesondere 2 bis 12, z.B. 2 bis 6 Kohlenstoffatomen.

C₁-C₁₈-Alkylen bedeutet einen verzweigten oder unverzweigten Rest wie beispielsweise Methylen, Ethylen, Propylen, Trimethylen, Tetramethylen, Pentamethylen, Hexamethylen, Heptamethylen, Octamethylen, Decamethylen, Dodecamethylen oder Octadecamethylen. Bevorzugt ist C₁-C₁₂-Alkylen, insbesondere C₁-C₈-Alkylen.

Durch C₁-C₄-Alkyl substituierter C₅-C₁₂-Cycloalkylenring, der vorzugsweise 1 bis 3, insbesondere 1 oder 2 verzweigte oder unverzweigte Alkylgruppen-Reste enthält, bedeutet beispielsweise Cyclopentylen, Methylcyclopentylen, Dimethylcyclopentylen, Cyclohexylen, Methylcyclohexylen, Dimethylcyclohexylen, Trimethylcyclohexylen, tert-Butylcyclohexylen, Cycloheptylen, Cyclooctylen oder Cyclodecylen. Bevorzugt ist Cyclohexylen und tert-Butylcyclohexylen.

Durch Sauerstoff, Schwefel oder 〉N―R₁₄ unterbrochenes C₂-C₁₈-Alkylen bedeutet beispielsweise -CH₂-O-CH₂-, -CH₂-S-CH₂-, -CH₂-NH-CH₂-, -CH₂-N(CH₃)-CH₂-, -CH₂-O-CH₂CH₂-O-CH₂-, -CH₂-(O-CH₂CH₂-)₂O-CH₂-, -CH₂-(O-CH₂CH₂-)₃O-CH₂-, -CH₂-(O-CH₂CH₂-)₄O-CH₂- oder -CH₂CH₂-S-CH₂CH₂-.

C₂-C₁₈-Alkenylen bedeutet beispielsweise Vinylen, Methylvinylen, Octenylethylen oder Dodecenylethylen. Bevorzugt ist C₂-C₈-Alkenylen.

Alkyliden mit 2 bis 20 Kohlenstoffatomen bedeutet beispielsweise Ethyliden, Propyliden, Butyliden, Pentyliden, 4-Methylpentyliden, Heptyliden, Nonyliden, Tridecyliden, Nonadecyliden, 1-Methylethyliden, 1-Ethylpropyliden oder 1-Ethylpentyliden. Bevorzugt ist C₂-C₈-Alkyliden.

Phenylalkyliden mit 7 bis 20 Kohlenstoffatomen bedeutet beispielsweise Benzyliden, 2-Phenylethyliden oder 1-Phenyl-2-hexyliden. Bevorzugt ist C₇-C₉-Phenylalkyliden.

C₅-C₈-Cycloalkylen bedeutet eine gesättigte Kohlenwasserstoffgruppe mit zwei freien Valenzen und mindestens einer Ringeinheit und ist beispielsweise Cyclopentylen, Cyclohexylen, Cycloheptylen oder Cyclooctylen. Bevorzugt ist Cyclohexylen.

C₇-C₈-Bicycloalkylen bedeutet beispielsweise Bicycloheptylen oder Bicyclooctylen.

Unsubstituiertes oder durch C₁-C₄-Alkyl substituiertes Phenylen oder Naphthylen bedeutet beispielsweise1,2-, 1,3-, 1,4-Phenylen, 1,2-, 1,3-, 1,4-, 1,6-,1,7-, 2,6- oder 2,7-Naphthylen. 1,4-Phenylen ist bevorzugt.

Durch C₁-C₄-Alkyl substituierter C₅-C₈-Cycloalkylidenring, der vorzugsweise 1 bis 3, insbesondere 1 oder 2 verzweigte oder unverzweigte Alkylgruppen-Reste enthält, bedeutet beispielsweise Cyclopentyliden, Methylcyclopentyliden, Dimethylcyclopentyliden, Cyclohexyliden, Methylcyclohexyliden, Dimethylcyclohexyliden, Trimethylcyclohexyliden, tert-Butylcyclohexyliden, Cycloheptyliden oder Cyclooctyliden. Bevorzugt ist Cyclohexyliden und tert-Butylcyclohexyliden.

Ein ein-, zwei- oder drei-wertiges Metallkation ist vorzugsweise ein Alkalimetall-, Erdalkalimetall- oder Aluminium-Kation, beispielsweise Na⁺, K⁺, Mg⁺⁺, Ca⁺⁺ oder Al⁺⁺⁺.

Diese Ausdeutungen gelten sowohl für die Komponente (A) wie auch für die Komponente (B).

Von Interesse ist ein Verfahren enthaltend als Komponente (B) mindestens eine Verbindung der Formel I, worin, wenn n 1 ist, R₁ unsubstituiertes oder in para-Stellung mit C₁-C₁₈-Alkylthio oder Di(C₁-C₄-alkyl)amino substituiertes Phenyl; mono- bis penta-substituiertes Alkylphenyl mit total zusammen maximal 18 Kohlenstoffatomen in den 1 bis 5 Alkylsubstituenten; unsubstituiertes oder mit C₁-C₄-Alkyl, C₁-C₄-Alkoxy, C₁-C₄-Alkylthio, Hydroxy oder Amino substituiertes Naphthyl, Biphenyl, Terphenyl, Phenanthryl, Anthryl, Fluorenyl, Carbazolyl, Thienyl, Pyrrolyl, Phenothiazinyl oder 5,6,7,8-Tetrahydronaphthyl darstellt.

Bevorzugt ist ein Verfahren enthaltend als Komponente (B) mindestens eine Verbindung der Formel I, worin, wenn n 2 ist,
R₁-R₁₂-X-R₁₃- darstellt,
R₁₂ und R₁₃ Phenylen bedeuten,
X Sauerstoff oder -NR₃₁- darstellt, und
R₃₁ C₁-C₄-Alkyl bedeutet.

Bevorzugt ist auch ein Verfahren enthaltend als Komponente (B) mindestens eine Verbindung der Formel I, worin, wenn n 1 ist,
R₁ unsubstituiertes oder mit C₁-C₄-Alkyl, C₁-C₄-Alkoxy, C₁-C₄-Alkylthio, Hydroxy, Halogen, Amino, C₁-C₄-Alkylamino oder Di(C₁-C₄-alkyl)amino substituiertes Naphthyl, Phenanthryl, Thienyl, Dibenzofuryl, Carbazolyl, Fluorenyl oder einen Rest der Formel II 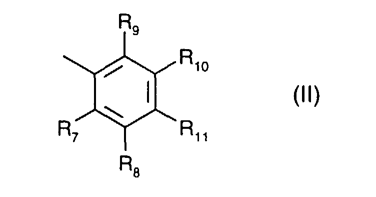 bedeutet,
R₇, R₈, R₉, R₁₀ und R₁₁ unabhängig voneinander Wasserstoff, Chlor, Brom, Hydroxy, C₁-C₁₈-Alkyl, durch Sauerstoff oder Schwefel unterbrochenes C₂-C₁₈-Alkyl; C₁-C₁₈-Alkoxy, durch Sauerstoff oder Schwefel unterbrochenes C₂-C₁₈-Alkoxy; C₁-C₁₈-Alkylthio, C₃-C₁₂-Alkenyloxy, C₃-C₁₂-Alkinyloxy, C₇-C₉-Phenylalkyl, C₇-C₉-Phenylalkoxy, unsubstituiertes oder durch C₁-C₄-Alkyl substituiertes Phenyl; Phenoxy, Cyclohexyl, C₅-C₈-Cycloalkoxy, C₁-C₄-Alkylamino, Di-(C₁-C₄-alkyl)amino, C₁-C₁₂-Alkanoyl, durch Sauerstoff oder Schwefel unterbrochenes C₃-C₁₂-Alkanoyl; C₁-C₁₂-Alkanoyloxy, durch Sauerstoff oder Schwefel unterbrochenes C₃-C₁₂-Alkanoyloxy; C₁-C₁₂-Alkanoylamino, C₃-C₁₂-Alkenoyl, C₃-C₁₂-Alkenoyloxy, Cyclohexylcarbonyl, Cyclohexylcarbonyloxy, Benzoyl oder durch C₁-C₄-Alkyl substituiertes Benzoyl;

Benzoyloxy oder durch C₁-C₄-Alkyl substituiertes Benzoyloxy; 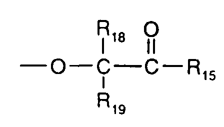 oder 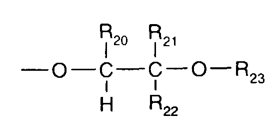 darstellen, oder ferner in Formel II die Reste R₇ und R₈ oder die Reste R₈ und R₁₁ zusammen mit den Kohlenstoffatomen, an die sie gebunden sind, einen Benzoring bilden,
R₁₅ Hydroxy, C₁-C₁₂-Alkoxy oder 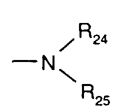 bedeutet,
R₁₈ und R₁₉ unabhängig voneinander Wasserstoff oder C₁-C₄-Alkyl darstellen,
R₂₀ Wasserstoff ist,
R₂₁ Wasserstoff, Phenyl, C₁-C₁₈-Alkyl, durch Sauerstoff oder Schwefel unterbrochenes C₂-C₁₈-Alkyl; C₇-C₉-Phenylalkyl, durch Sauerstoff oder Schwefel unterbrochenes unsubstituiertes oder am Phenylrest durch 1 bis 3 C₁-C₄-Alkyl substituiertes C₇-C₁₈-Phenylalkyl bedeutet, oder ferner die Reste R₂₀ und R₂₁ zusammen mit den Kohlenstoffatomen, an die sie gebunden sind, einen unsubstituierten oder durch 1 bis 3 C₁-C₄-Alkyl substituierten Cyclohexylenring bilden,
R₂₂ Wasserstoff oder C₁-C₄-Alkyl darstellt,
R₂₃ Wasserstoff, C₁-C₁₈-Alkanoyl, C₃-C₁₈-Alkenoyl, durch Sauerstoff oder Schwefel unterbrochenes C₃-C₁₂-Alkanoyl; durch eine Di(C₁-C₆-alkyl)phosphonatgruppe substituiertes C₂-C₁₂-Alkanoyl; C₆-C₉-Cycloalkylcarbonyl, Benzoyl, 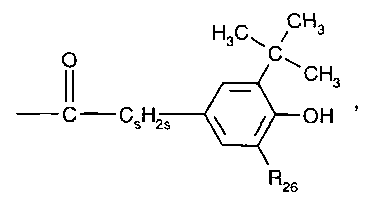 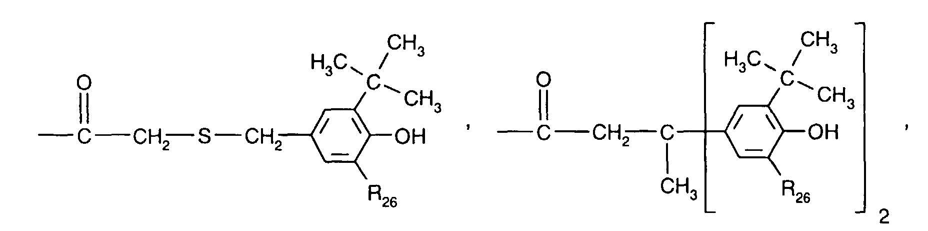 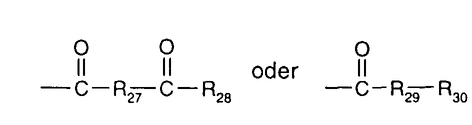 bedeutet,
R₂₄ und R₂₅ unabhängig voneinander Wasserstoff oder C₁-C₁₂-Alkyl darstellen,
R₂₆ Wasserstoff oder C₁-C₄-Alkyl bedeutet,
R₂₇ C₁-C₁₂-Alkylen, C₂-C₈-Alkenylen, C₂-C₈-Alkyliden, C₇-C₁₂-Phenylalkyliden, C₅-C₈-Cycloalkylen oder Phenylen darstellt,
R₂₈ Hydroxy, C₁-C₁₂-Alkoxy oder 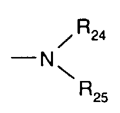 bedeutet,
R₂₉ Sauerstoff oder -NH- darstellt,
R₃₀ C₁-C₁₈-Alkyl oder Phenyl ist, und
s 1 oder 2 bedeutet.

Ebenfalls bevorzugt ist ein Verfahren enthaltend als Komponente (B) mindestens eine Verbindung der Formel I, worin, wenn n 1 ist,
R₁ Phenanthryl, Thienyl, Dibenzofuryl, unsubstituiertes oder mit C₁-C₄-Alkyl substituiertes Carbazolyl; oder Fluorenyl darstellt; oder R₁ einen Rest der Formel II 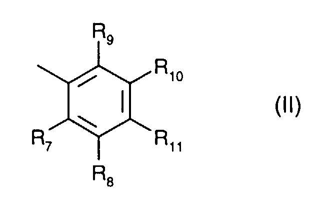 bedeutet,
R₇, R₈, R₉, R₁₀ und R₁₁ unabhängig voneinander Wasserstoff, Chlor, Hydroxy, C₁-C₁₈-Alkyl, C₁-C₁₈-Alkoxy, C₁-C₁₈-Alkylthio, C₃-C₄-Alkenyloxy, C₃-C₄-Alkinyloxy, Phenyl, Benzoyl, Benzoyloxy oder 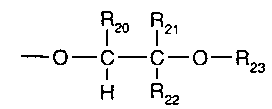 darstellen,
R₂₀ Wasserstoff bedeutet,
R₂₁ Wasserstoff, Phenyl oder C₁-C₁₈-Alkyl darstellt, oder ferner die Reste R₂₀ und R₂₁ zusammen mit den Kohlenstoffatomen, an die sie gebunden sind, einen unsubstituierten oder durch 1 bis 3 C₁-C₄-Alkyl substituierten Cyclohexylenring bilden,
R₂₂ Wasserstoff oder C₁-C₄-Alkyl bedeutet, und
R₂₃ Wasserstoff, C₁-C₁₂-Alkanoyl oder Benzoyl darstellt.

Besonders bevorzugt ist ein Verfahren enthaltend als Komponente (B) mindestens eine Verbindung der Formel I, worin, wenn n 1 ist,
R₇, R₈, R₉, R₁₀ und R₁₁ unabhängig voneinander Wasserstoff, C₁-C₁₂-Alkyl, C₁-C₄-Alkylthio oder Phenyl bedeuten.

Von besonderem Interesse ist ein Verfahren enthaltend als Komponente (B) mindestens eine Verbindung der Formel I, worin
R₂, R₃, R₄ und R₅ unabhängig voneinander Wasserstoff, Chlor, C₁-C₁₈-Alkyl, Benzyl, Phenyl, C₅-C₈-Cycloalkyl, C₁-C₁₈-Alkoxyx C₁-C₁₈-Alkylthio, C₁-C₁₈-Alkanoyloxy, C₁-C₁₈-Alkanoylamino, C₃-C₁₈-Alkenoyloxy oder Benzoyloxy darstellen; oder ferner die Reste R₂ und R₃ oder die Reste R₃ und R₄ oder die Reste R₄ und R₅ zusammen mit den Kohlenstoffatomen, an die sie gebunden sind, einen Benzoring bilden, R₄ zusätzlich -(CH₂)ₚ-COR₁₅ oder -(CH₂)_{q}OH darstellt, oder wenn R₃, R₅ und R₆ Wasserstoff sind, R₄ zusätzlich einen Rest der Formel III bedeutet,
R₁₅ Hydroxy, C₁-C₁₂-Alkoxy oder 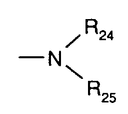 darstellt,
R₁₆ und R₁₇ Methylgruppen sind oder zusammen mit dem C-Atom, an das sie gebunden sind, einen unsubstituierten oder durch 1 bis 3 C₁-C₄-Alkyl substituierten C₅-C₈-Cycloalkyliden ring bilden,
R₂₄ und R₂₅ unabhängig voneinander Wasserstoff oder C₁-C₁₂-Alkyl bedeuten,
p 1 oder 2 ist, und
q 2, 3, 4, 5 oder 6 darstellt.

Auch von besonderem Interesse ist ein Verfahren enthaltend als Komponente (B) mindestens eine Verbindung der Formel I, worin mindestens zwei der Reste R₂, R₃, R₄ und R₅ Wasserstoff sind.

Speziell von besonderem Interesse ist ein Verfahren enthaltend als Komponente (B) mindestens eine Verbindung der Formel I, worin R₃ und R₅ Wasserstoff sind.

Ganz speziell von besonderem Interesse ist ein Verfahren enthaltend als Komponente (B) mindestens eine Verbindung der Formel I, worin
R₂ C₁-C₄-Alkyl bedeutet,
R₃ Wasserstoff ist,
R₄ C₁-C₄-Alkyl darstellt, oder wenn R₆ Wasserstoff ist, R₄ zusätzlichen einen Rest der Formel III bedeutet,
R₅ Wasserstoff ist, und
R₁₆ und R₁₇ zusammen mit dem C-Atom, an das sie gebunden sind, einen Cyclohexylidenring bilden.

Die folgenden Verbindungen sind Beispiele vom Typ der Benzofuran-2-one, die sich als Komponente (B) in dem erfindungsgemässen Verfahren sich besonders gut eignen: 3-[4-(2-Acetoxyethoxy)phenyl]-5,7-di-tert-butyl-benzofuran-2-on; 5,7-Di-tert-butyl-3-[4-(2-stearoyloxyethoxy)phenyl]-benzofuran-2-on; 3,3'-Bis[5,7-di-tert-butyl-3-(4-[2-hydroxyethoxy]phenyl)benzofuran-2-on]; 5,7-Di-tert-butyl-3-(4-ethoxyphenyl)benzofuran-2-on; 3-(4-Acetoxy-3,5-dimethylphenyl)-5,7-di-tert-butyl-benzofuran-2-on; 3-(3,5-Dimethyl-4-pivaloyloxy-phenyl)5,7-di-tert-butyl-benzofuran-2-on; 5,7-Di-tert-butyl-3-phenyl-benzofuran-2-on; 5,7-Di-tert-butyl-3-(3,4-dimethylphenyl)-benzofuran-2-on; 5,7-Di-tert-butyl-3-(2,3-dimethylphenyl)benzofuran-2-on.

Speziell von besonderem Interesse ist auch ein Verfahren enthaltend als Komponente (B) mindestens eine Verbindung der Formel V 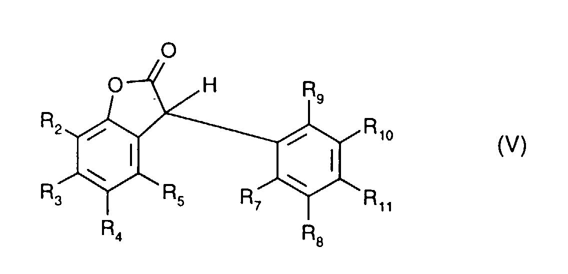 worin
R₂ Wasserstoff oder C₁-C₆-Alkyl darstellt,
R₃ Wasserstoff bedeutet,
R₄ Wasserstoff oder C₁-C₆-Alkyl darstellt,
R₅ Wasserstoff bedeutet,
R₇, R₈, R_{9,} R₁₀ und R₁₁ unabhängig voneinander Wasserstoff, C₁-C₄-Alkyl oder C₁-C₄-Alkoxy darstellt, mit der Bedingung, dass mindestens zwei der Reste R₇, R₈, R₉, R₁₀ oder R₁₁ Wasserstoff sind.

Ganz besonders bevorzugt ist ein Verfahren enthaltend als Komponente (B) mindestens eine Verbindung der Formel Va oder Vb 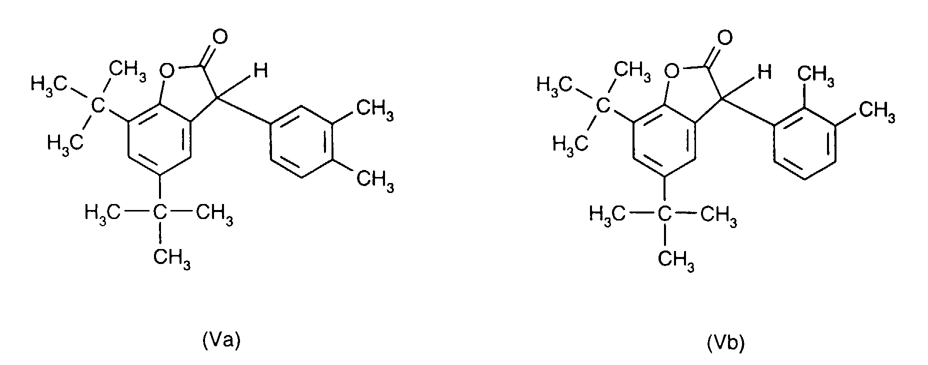 oder ein Gemisch der beiden Verbindungen der Formel Va und Vb.

Die Verbindungen vom Typ der Benzofuran-2-one als Komponente (B) in dem erfindungsgemässen Verfahren sind in der Literatur bekannt und deren Herstellung beispielsweise in den folgenden U.S. Patentschriften beschrieben: U.S. 4,325,863; U.S. 4,388,244; U.S. 5,175,312; U.S. 5,252,643; U.S. 5,216,052; U.S. 5,369,159; U.S. 5,488,117; U.S. 5,356,966; U.S. 5,367,008; U.S. 5,428,162; U.S. 5,428,177 oder U.S. 5,516,920.

Die 3-Aryl-benzofuranone werden vorzugsweise in Mengen von beispielsweise 0,0005 bis 5 %, insbesondere 0,001 bis 2 %, beispielsweise 0,01 bis 2 %, bezogen auf das Gewicht des zu stabilisierenden Polyolefinhohlkörpers, eingesetzt.

Die Stabilisatorkombination enthaltend die Komponenten (A) und (B) eignet sich zum Stabilisieren von Polyolefinhohlkörpern, die nach dem Rotomolding-Verfahren hergestellt werden.

### Beispiele für Polyolefine sind:

1. Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), (VLDPE) und (ULDPE).
   Polyolefine, d.h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere nach den folgenden Methoden:
   a) radikalisch (gewöhnlich bei hohem Druck und hoher Temperatur).
   b) mittels Katalysator, wobei der Katalysator gewöhnlich ein oder mehrere Metalle der Gruppe IVb, Vb, Vlb oder VIII enthält. Diese Metalle besitzen gewöhnlich einen oder mehrere Liganden wie Oxide, Halogenide, Alkoholate, Ester, Ether, Amine, Alkyle, Alkenyle und/oder Aryle, die entweder π- oder σ-koordiniert sein können. Diese Metallkomplexe können frei oder auf Träger fixiert sein, wie beispielsweise auf aktiviertem Magnesiumchlorid, Titan(lll)chlorid, Aluminiumoxid oder Siliziumoxid. Diese Katalysatoren können im Polymerisationsmedium löslich oder unlöslich sein. Die Katalysatoren können als solche in der Polymerisation aktiv sein, oder es können weitere Aktivatoren verwendet werden, wie beispielsweise Metallalkyle, Metallhydride, Metallalkylhalogenide, Metallalkyloxide oder Metallalkyloxane, wobei die Metalle Elemente der Gruppen la, lla und/oder llla sind. Die Aktivatoren können beipielsweise mit weiteren Ester-, Ether-, Amin- oder Silylether-Gruppen modifiziert sein. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.
2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).
3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-lsopren-Copolymere, Ethylen-Alkylacrylat-Copolymere, Ethylen-Alkylmethacrylat- Copolymere, Ethylen-Vinylacetat-Copolymere und deren Copolymere mit Kohlenstoffmonoxid, oder Ethylen-Acrylsäure-Copolymere und deren Salze (lonomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.

Bevorzugte Polyolefine sind Polyethylen oder Polypropylen und deren Copolymere mit Mono- und Diolefinen.

Zusätzlich zu den Komponenten (A) und (B) kann das erfindungsgemässe Verfahren weitere Costabilisatoren (Additive) enthalten, wie beispielsweise die folgenden:

### 1. Antioxidantien

1.1. Alkylierte Monophenole, z.B. 2,6-Di-tert-butyl-4-methylphenol, 2-Butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, lineare oder in der Seitenkette verzweigte Nonylphenole wie z.B. 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol und Mischungen davon.

1.2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.

1.3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis(3,5-di-tert-butyl-4-hydroxyphenyl)adipat.

1.4. Tocopherole, z.B. α-Tocopherol, β-Tocopherol, γ-Tocopherol, δ-Tocopherol und Mischungen davon (Vitamin E).

1.5. Hydroxylierte Thiodiphenylether, z.B. 2,2'-Thio-bis(6-tert-butyl-4-methylphenol), 2,2'-Thio-bis(4-octylphenol), 4,4'-Thio-bis(6-tert-butyl-3-methylphenol), 4,4'-Thio-bis-(6-tert-butyl-2-methylphenol), 4,4'-Thio-bis(3,6-di-sec.-amylphenol), 4,4'-Bis(2,6-dimethyl-4-hydroxyphenyl)-disulfid.

1.6. Alkyliden-Bisphenole, z.B. 2,2'-Methylen-bis(6-tert-butyl-4-methylphenol), 2,2'-Methylen-bis(6-tert-butyl-4-ethylphenol), 2,2'-Methylen-bis[4-methyl-6-(a-methylcyclohexyl)-phenol], 2,2'-Methylen-bis(4-methyl-6-cyclohexylphenol), 2,2'-Methylen-bis(6-nonyl-4-methylphenol), 2,2'-Methylen-bis(4,6-di-tert-butylphenol), 2,2'-Ethyliden-bis(4,6-di-tert-butylphenol), 2,2'-Ethyliden-bis(6-tert-butyl-4-isobutylphenol), 2,2'-Methylen-bis[6-(a-methylbenzyl)-4-nonylphenol], 2,2'-Methylen-bis[6-(a,a-dimethylbenzyl)-4-nonylphenol], 4,4'-Methylen-bis(2,6-di-tert-butylphenol), 4,4'-Methylen-bis(6-tert-butyl-2-methylphenol), 1,1-Bis(5-tert-butyl-4-hydroxy-2-methylphenyl)-butan, 2,6-Bis(3-tert-butyl-5-methyl-2-hydroxybenzyl)-4-methylphenol, 1,1,3-Tris(5-tert-butyl-4-hydroxy-2-methylphenyl)-butan, 1,1-Bis(5-tert-butyl-4-hydroxy-2-methyl-phenyl)-3-n-dodecylmercaptobutan, Ethylenglycol-bis[3,3-bis(3'-tert-butyl-4'-hydroxyphenyl)-butyrat], Bis(3-tert-butyl-4-hydroxy-5-methyl-phenyl)-dicyclopentadien, Bis[2-(3'-tert-butyl-2'-hydroxy-5'-methyl-benzyl)-6-tert-butyl-4-methyl-phenyl]-terephthalat,1,1-Bis-(3,5-dimethyl-2-hydroxyphenyl)-butan, 2,2-Bis(3,5-di-tert-butyl-4-hydroxyphenyl)-propan, 2,2-Bis(5-tert-butyl-4-hydroxy-2-methylphenyl)-4-n-dodecylmercapto-butan, 1,1,5,5-Tetra-(5-tert-butyl-4-hydroxy-2-methylphenyl)-pentan.

1.7. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tridecyl-4-hydroxy-3,5-di-tert-butylbenzyl-mercaptoacetat, Tris(3,5-di-tert-butyl-4-hydroxybenzyl)-amin, Bis(4-tert-butyl-3-hydroxy-2,6-dimethylbenzyl)-dithioterephthalat, Bis(3,5-di-tert-butyl-4-hydroxybenzyl)-sulfid, lsooctyl-3,5-di-tert-butyl-4-hydroxybenzyl-mercaptoacetat.

1.8. Hydroxybenzylierte Malonate, z.B. Dioctadecyl-2,2-bis(3,5-di-tert-butyl-2-hydroxybenzyl)-malonat, Di-octadecyl-2-(3-tert-butyl-4-hydroxy-5-methylbenzyl)-malonat, Di-dodecylmercaptoethyl-2,2-bis(3,5-di-tert-butyl-4-hydroxybenzyl)-malonat, Di-[4-(1,1,3,3-tetramethylbutyl)-phenyl]-2,2-bis(3,5-di-tert-butyl-4-hydroxybenzyl)-malonat.

1.9. Hydroxybenzyl-Aromaten, z.B. 1,3,5-Tris(3,5-di-tert-butyl-4-hydroxybenzyl)-2,4,6-trimethylbenzol, 1,4-Bis(3,5-di-tert-butyl-4-hydroxybenzyl)-2,3,5,6-tetramethylbenzol, 2,4,6-Tris-(3,5-di-tert-butyl-4-hydroxybenzyl)-phenol.

1.10. Triazinverbindungen, z.B. 2,4-Bis-octylmercapto-6-(3,5-di-tert-butyl-4-hydroxyanilino)-1,3,5-triazin, 2-Octylmercapto-4,6-bis(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 2,4,6-Tris(3,5-di-tert-butyl-4-hydroxyphenoxy)-1,2,3-triazin, 1,3,5-Tris(3,5-di-tert-butyl-4-hydroxybenzyl)-isocyanurat, 1,3,5-Tris(4-tert-butyl-3-hydroxy-2,6-dimethylbenzyl)-isocyanurat, 2,4,6-Tris(3,5-ditert-butyl-4-hydroxyphenylethyl)-1,3,5-triazin, 1,3,5-Tris(3,5-di-tert-butyl-4-hydroxyphenylpropionyl)-hexahydro-1,3,5-triazin, 1,3,5-Tris(3,5-dicyclohexyl-4-hydroxybenzyl)-isocyanurat.

1.11. Benzylphosphonate, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters.

1.12. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.

1.13. Ester der β-(3,5-Di-tert-butyl-4-hydroxyphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.14. Ester der β-(5-tert-Butyl-4-hydroxy-3-methylphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.15. Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.16. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.17. Amide der β-(3,5-Di-tert-butyl-4-hydroxyphenyl)-propionsäure, wie z.B. N,N'-Bis(3,5-di-tert-butyl-4-hydroxyphenylpropionyl)-hexamethylendiamid, N,N'-Bis(3,5-di-tert-butyl-4-hydroxyphenylpropionyl)-trimethylendiamid, N,N'-Bis(3,5-di-tert-butyl-4-hydroxyphenylpropionyl)hydrazid, N,N'-Bis[2-(3-[3,5-di-tert-butyl-4-hydroxyphenyl]-propionyloxy)ethyl]oxamid (Naugard®XL-1 der Firma Uniroyal).

1.18. Ascorbinsäure (Vitamin C).

1.19. Aminische Antioxidantien, wie z.B. N,N'-Di-isopropyl-p-phenylendiamin, N,N'-Di-sec-butyl-p-phenylendiamin, N,N'-Bis(1,4-dimethyl-pentyl)-p-phenylendiamin, N,N'-Bis(1-ethyl-3-methyl-pentyl)-p-phenylendiamin, N,N'-Bis(1-methyl-heptyl)-p-phenylendiamin, N,N'-Dicyclohexyl-p-phenylendiamin, N,N'-Diphenyl-p-phenylendiamin, N,N'-Di-(2-naphthyl)-p-phenylendiamin, N-Isopropyl-N'-phenyl-p-phenylendiamin, N-(1,3-Dimethyl-butyl)-N'-phenyl-p-phenylendiamin, N-(1-Methyl-heptyl)-N'-phenyl-p-phenylendiamin, N-Cyclohexyl-N'-phenyl-p-phenylendiamin, 4-(p-Toluol-sulfonamido)-diphenylamin, N,N'-Dimethyl-N,N'-di-sec-butyl-p-phenylendiamin, Diphenylamin, N-Allyldiphenylamin, 4-Isopropoxy-diphenylamin, N-Phenyl1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylamino-phenol, 4-Nonanoylamino-phenol, 4-Dodecanoylamino-phenol, 4-Octadecanoylaminophenol, Di-(4-methoxyphenyl)-amin, 2,6-Di-tert-butyl-4-dimethylamino-methyl-phenol, 2,4'-Diamino-diphenylmethan, 4,4'-Diamino-diphenylmethan, N,N,N',N'-Tetramethyl-4,4'-diamino-diphenylmethan, 1,2-Di-[(2-methyl-phenyl)-amino]-ethan, 1,2-Di-(phenylamino)-propan, (o-Tolyl)-biguanid, Di-[4-(1',3'-dimethyl-butyl)-phenyl]amin, tert-octyliertes N-Phenyl-1-naphthylamin, Gemisch aus mono- und dialkylierten tert-Butyl/tert-Octyldiphenylaminen, Gemisch aus mono- und dialkylierten Nonyldiphenylaminen, Gemisch aus mono- und dialkylierten Dodecyldiphenylaminen, Gemisch aus mono- und dialkylierten Isopropyl/lsohexyl-diphenylaminen, Gemische aus mono- und dialkylierten tert-Butyldiphenylaminen, 2,3-Dihydro-3,3-dimethyl-4H-1,4-benzothiazin, Phenothiazin, Gemisch aus mono- und dialkylierten tert-Butyl/tert-Octyl-phenothiazinen, Gemisch aus mono- und dialkylierten tert-Octyl-phenothiazinen, N-Allylphenothiazin, N,N,N',N'-Tetraphenyl-1,4-diaminobut-2-en, N,N-Bis-(2,2,6,6-tetramethyl-piperidin-4-yl-hexamethylendiamin, Bis-(2,2,6,6-tetramethylpiperidin-4-yl)-sebacat, 2,2,6,6-Tetramethypiperidin-4-on, 2,2,6,6-Tetramethylpiperidin-4-ol.

### 2. UV-Absorber und Lichtschutzmittel

2.1. 2-(2'-Hydroxyphenyl)-benzotriazole, wie z.B. 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)benzotriazol, 2-(2'-Hydroxy-5'-(1,1,3,3-tetramethylbutyl)phenyl)-benzotriazol, 2-(3',5'-Di-tert-butyl-2'-hydroxyphenyl)-5-chlor-benzotriazol, 2-(3'-tert-Butyl-2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tert-amyl-2'-hydroxyphenyl)-benzotriazol, 2-(3',5'-Bis(a,a-dimethylbenzyl)-2'-hydroxyphenyl)-benzotriazol, 2-(3'-tert-Butyl-2'-hydroxy-5'-(2-octyloxycarbonylethyl)phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)phenyl)-benzotriazol, 2-(3'-tert-Butyl-5'-[2-(2-ethylhexyloxy)carbonylethyl]-2'-hydroxyphenyl)benzotriazol, 2-(3'-Dodecyl-2'-hydroxy-5'-methylphenyl)-benzotriazol, 2-(3'-tert-Butyl-2'-hydroxy-5'-(2-isooctyloxycarbonylethyl)phenyl-benzotriazol, 2,2'-Methylen-bis[4-(1,1,3,3-tetramethylbutyl)-6-benzotriazol-2-yl-phenol]; Umesterungsprodukt von 2-[3'-tert-Butyl-5'-(2-methoxycarbonylethyl)-2'-hydroxy-phenyl]-benzotriazol mit Polyethylenglycol 300; 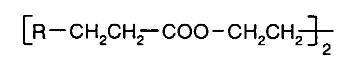 mit R = 3'-tert-Butyl-4'-hydroxy-5'-2H-benzotriazol-2-yl-phenyl; 2-[2'-Hydroxy-3'-(α,α-dimethylbenzyl)-5'-(1,1,3,3-tetramethylbutyl)-phenyl]-benzotriazol; 2-[2'-Hydroxy-3'-(1,1,3,3-tetramethylbutyl)-5'-(α,α-dimethylbenzyl)-phenyl]-benzotriazol.

2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

2.3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.

2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.

2.5. Nickelverbindungen, wie z.B. Nickelkomplexe des 2,2'-Thio-bis[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.

2.6. Sterisch gehinderte Amine, wie z.B. Bis(2,2,6,6-tetramethyl-piperidin-4-yl)-sebacat, Bis-(2,2,6,6-tetramethyl-piperidin-4-yl)-succinat, Bis(1,2,2,6,6-pentamethylpiperidin-4-yl)-sebacat, Bis(1-octyloxy-2,2,6,6-tetramethylpiperidin-4-yl)-sebacat, n-Butyl-3,5-di-tert-butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, lineare oder cyclische Kondensationsprodukte aus N,N'-Bis(2,2,6,6-Tetramethyl-4-piperidyl)-hexamethylendiamin und 4-tert-Octylamino-2,6-dichlor-1,3,5-s-triazin, Tris(2,2,6,6-tetramethyl-4-piperidyl)-nitrilotriacetat, Tetrakis(2,2,6,6-tetramethyl-4-piperidyl)-1,2,3,4-butantetraoat, 1,1'-(1,2Ethandiyl)-bis(3,3,5,5-tetramethyl-piperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]-decan-2,4-dion, Bis(1-octyloxy-2,2,6,6-tetramethylpiperidyl)-sebacat, Bis(1-octyloxy-2,2,6,6-tetramethylpiperidyl)-succinat, lineare oder cyclische Kondensationsprodukte aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis(3-aminopropylamino)ethan, Kondensationsprodukt aus 2-Chlor-4,6-di-(4-n-butylamino-1,2,2,6,6-pentamethylpiperidyl)-1,3,5-triazin und 1,2-Bis(3-aminopropylamino)-ethan, 8-Acetyl-3-dodecyl-7,7,9,9-tetramethyl-1,3,8-triazaspiro[4.5]decan2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion, Gemisch von 4-Hexadecyloxy- und 4-Stearyloxy-2,2,6,6-tetramethylpiperidin, Kondensationsprodukt aus N,N'-Bis(2,2,6,6-tetramethyl-4-piperidyl)-hexamethylendiamin und 4-Cyclohexylamino-2,6-dichlor-1,3,5-triazin, Kondensationsprodukt aus 1,2-Bis(3-aminopropylamino)-ethan und 2,4,6-trichlor-1,3,5-triazin sowie 4-Butylamino-2,2,6,6-tetramethyl-piperidin (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-Undecyl-7,7,9,9-tetramethyl-1-oxa-3,8-diaza-4-oxo-spiro[4,5]decan, Umsetzungsprodukt von 7,7,9,9-Tetramethyl-2-cycloundecyl-1-oxa-3,8-diaza-4-oxospiro-[4,5]decan und Epichlorhydrin, 1,1-Bis(1,2,2,6,6-pentamethyl-4-piperidyloxycarbonyl)-2-(4-methoxyphenyl)-ethen, N,N'-Bis-formyl-N,N'-bis(2,2,6,6-tetramethyl-4-piperidyl)-hexamethylendiamin, Diester der 4-Methoxy-methylen-malonsäure mit 1,2,2,6,6-Pentamethyl-4-hydroxy-piperidin, Poly[methylpropyl-3-oxy-4-(2,2,6,6-tetramethyl-4-piperidyl)]-siloxan, Reaktionsprodukt aus Maleinsäureanhydrid-a-olefin-copolymer und 2,2,6,6-Tetramethyl-4-aminopiperidin oder 1,2,2,6,6-Pentamethyl-4-aminopiperidin.

2.7. Oxalsäurediamide, wie z.B. 4,4'-Di-octyloxy-oxanilid, 2,2'-Diethoxy-oxanilid, 2,2'-Di-octyloxy-5,5'-di-tert-butyl-oxanilid, 2,2'-Di-dodecyloxy-5,5'-di-tert-butyl-oxanilid, 2-Ethoxy-2'-ethyl-oxanilid, N,N'-Bis(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o-und p-Methoxy- sowie von o- und p-Ethoxy-di-substituierten Oxaniliden.

2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hyd roxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxy-propyloxy)phenyl]-4,6-bis(2,4-dimethylphenyl)-1,3,5-triazin, 2-[2-Hydroxy-4-(2-hydroxy-3-octyloxy-propyloxy)phenyl]-4,6-bis(2,4-dimethylphenyl)-1,3,5-triazin, 2-[4-(dodecyloxy/tridecyloxy-2-hydroxypropoxy)-2-hydroxy-phenyl]-4,6-bis(2,4-dimethylphenyl)-1,3,5-triazin, 2-[2-Hydroxy-4-(2-hydroxy-3-dodecyloxy-propoxy)phenyl]-4,6-bis(2,4-dimethylphenyl)-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxy-propoxy)phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxypropyloxy]phenyl}-4,6-bis(2,4-dimethylphenyl)-1,3,5-triazin.

3. Metalldesaktivatoren, wie z.B. N,N'-Diphenyloxalsäurediamid, N-Salicylal-N'-salicyloyl-hydrazin, N,N'-Bis(salicyloyl)-hydrazin, N,N'-Bis(3,5-di-tert-butyl-4-hydroxyphenylpropionyl)-hydrazin, 3-Salicyloylamino-1,2,4-triazol, Bis(benzyliden)-oxalsäuredihydrazid, Oxanilid, Isophthalsäure-dihydrazid, Sebacinsäure-bis-phenylhydrazid, N,N'-Diacetyl-adipinsäure-dihydrazid, N,N'-Bis-salicyloyl-oxalsäure-dihydrazid, N,N'-Bis-salicyloyl-thiopropionsäure-dihydrazid.

4. Hydroxylamine wie z.B. N,N-Dibenzylhydroxylamin, N,N-diethylhydroxylamin, N,N-Dioctylhydroxylamin, N,N-Dilaurylhydroxylamin, N,N-Ditetradecylhydroxylamin, N,N-Dihexadecylhydroxylamin, N,N-Dioctadecylhydroxylamin, N-Hexadecyl-N-octadecylhydroxylamin, N-Heptadecyl-N-octadecylhydroxylamin, N,N-Dialkylhydroxylamin aus hydrierten Talgfettaminen.

5. Nitrone wie z.B. N-Benzyl-alpha-phenyl-nitron, N-Ethyl-alpha-methyl-nitron, N-Octyl-alpha-heptyl-nitron, N-Lauryl-alpha-undecyl-nitron, N-Tetradecyl-alpha-tridecyl-nitron, N-Hexadecyl-alpha-pentadecyl-nitron, N-Octadecyl-alpha-heptadecyl-nitron, N-Hexadecyl-alphaheptadecyl-nitron, N-Octadecyl-alpha-pentadecyl-nitron, N-Heptadecyl-alpha-heptadecyl-nitron, N-Octadecyl-alpha-hexadecyl-nitron, Nitrone abgeleitet von N,N-Dialkylhydroxylaminen hergestellt aus hydrierten Talgfettaminen.

6. Thiosynergisten wie z.B. Thiodipropionsäure-di-laurylester oder Thiodipropionsäure-distearylester.

7. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis(β-dodecylmercapto)-propionat.

8. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinkbrenzcatechinat.

9. Nukleierungsmittel, wie z.B. anorganische Stoffe wie z.B. Talk, Metalloxide wie Titandioxid oder Magnesiumoxid, Phosphate, Carbonate oder Sulfate von vorzugsweise Erdalkalimetallen; organische Verbindungen wie Mono- oder Polycarbonsäuren sowie ihre Salze wie z.B. 4-tert-Butylbenzoesäure, Adipinsäure, Diphenylessigsäure, Natriumsuccinat oder Natriumbenzoat; polymere Verbindungen wie z.B. ionische Copolymerisate ("Ionomere").

10. Füllstoffe und Verstärkungsmittel, wie z.B. Calciumcarbonat, Silikate, Glasfasern, Glaskugeln, Talk, Kaolin, Glimmer, Bariumsulfat, Metalloxide und -hydroxide, Ruß, Graphit, Holzmehl und Mehle oder Fasern anderer Naturprodukte, synthetische Fasern.

11. Sonstige Zusätze, wie z.B. Weichmacher, Gleitmittel, Emulgatoren, Pigmente, Rheologieadditive, Katalysatoren, Verlaufshilfsmittel, Optische Aufheller, Flammschutzmittel, Antistatika, Treibmittel.

Die Costabilisatoren, werden beispielsweise in Konzentrationen von 0,01 bis 10 %, bezogen auf das Gesamtgewicht des stabilisierenden Polyolefins, zugesetzt.

Die Füllstoffe und Verstärkungsmittel (Punkt 10 der Liste) wie beispielsweise Talk, Calciumcarbonat, Mica oder Kaolin werden dem Polyolefin beispielsweise in Konzentrationen von 0,01 bis 40%, bezogen auf das Gesamtgewicht des zu stabilisierenden Polyolefins, zugesetzt.

Die Füllstoffe und Verstärkungsmittel (Punkt 10 der Liste) wie beispielsweise Metallhydroxide, insbesondere Aluminiumhydroxid oder Magnesiumhydroxid, werden dem Polyolefin beispielsweise in Konzentrationen von 0,01 bis 60 %, bezogen auf das Gesamtgewicht des zu stabilisierenden Polyolefins, zugesetzt.

Russ als Füllstoff wird dem Polyolefin zweckmässig in Konzentrationen von 0,01 bis 5 %, bezogen auf das Gesamtgewicht des zu stabilisierenden Polyolefins, zugesetzt.

Glasfasern als Verstärkungsmittel wird dem Polyolefin zweckmässig in Konzentrationen von 0,01 bis 20 %, bezogen auf das Gesamtgewicht des zu stabilisierenden Polyolefins, zugesetzt.

Bevorzugt ist ein Verfahren enthaltend neben den Komponenten (A) und (B) noch weitere Additive, insbesondere phenolische Antioxidantien, Lichtschutzmittel oder Verarbeitungsstabilisatoren.

Besonders bevorzugte zusätzliche Additive sind phenolische Antioxidantien (Punkt 1.1 bis 1.17 der Liste), sterisch gehinderte Amine (Punkt 2.6 der Liste) und peroxidzerstörende Verbindungen (Punkt 7 der Liste).

Speziell bevorzugte phenolische Antioxidantien sind:

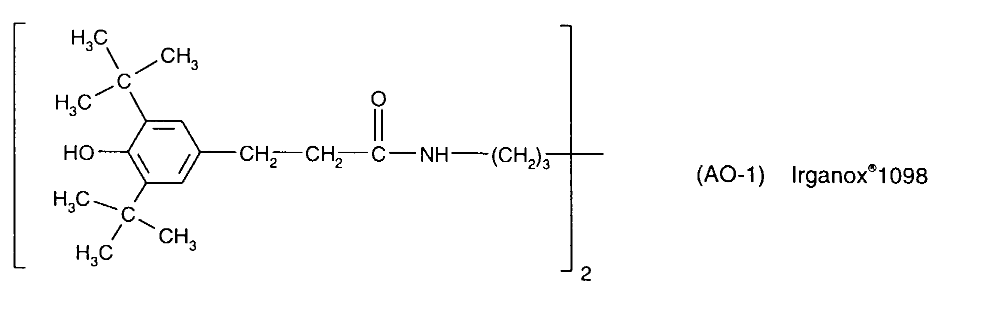

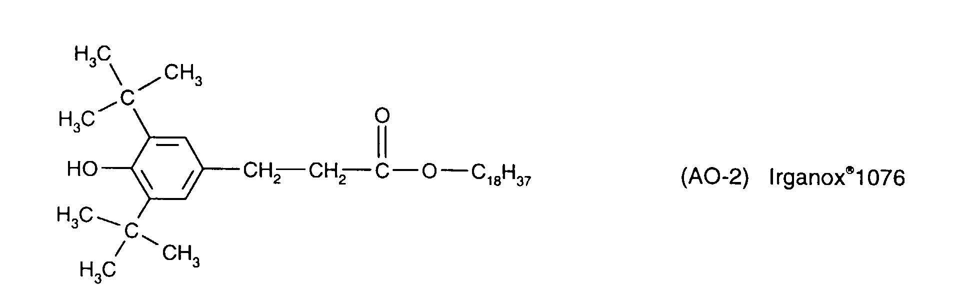

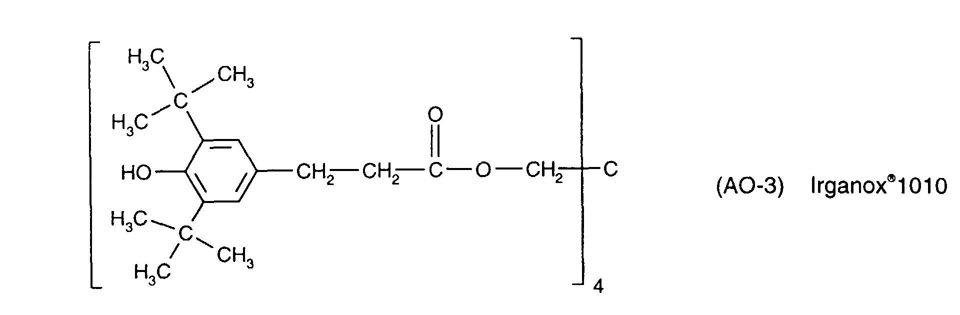

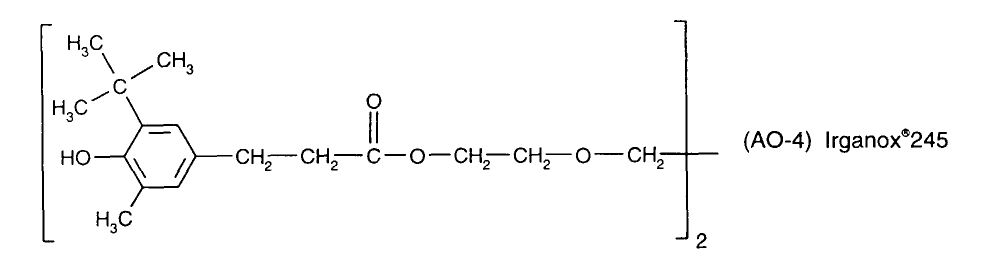

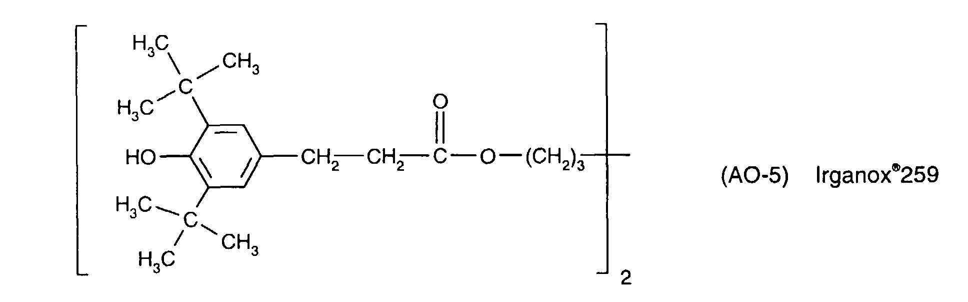

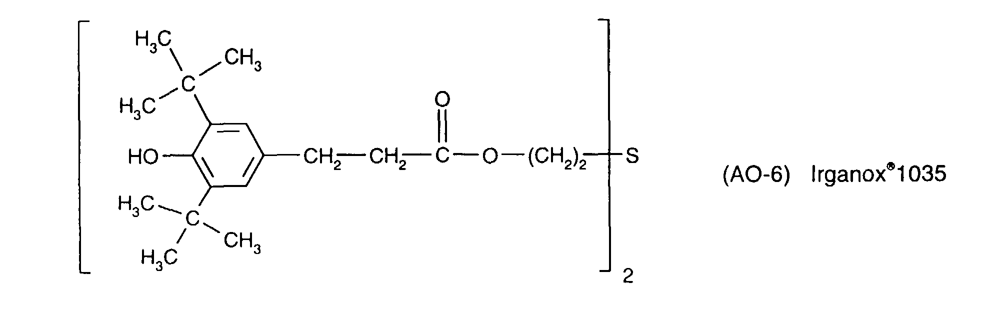

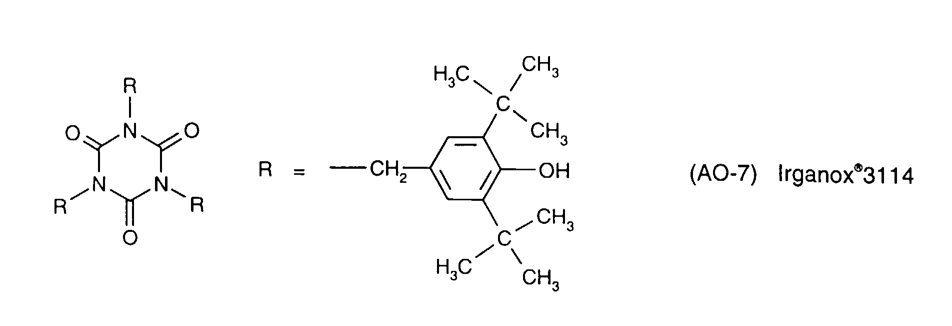

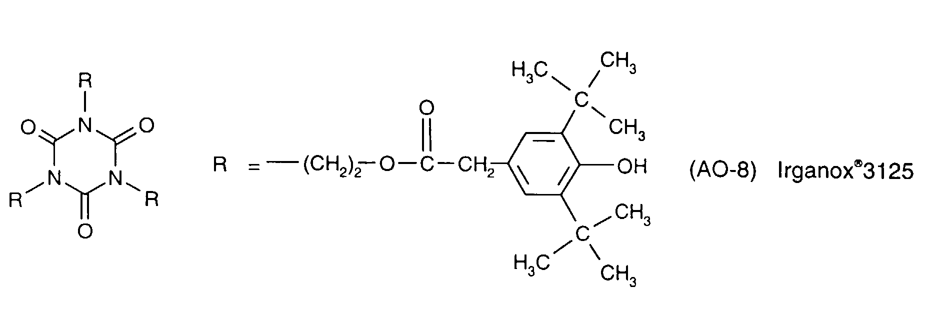

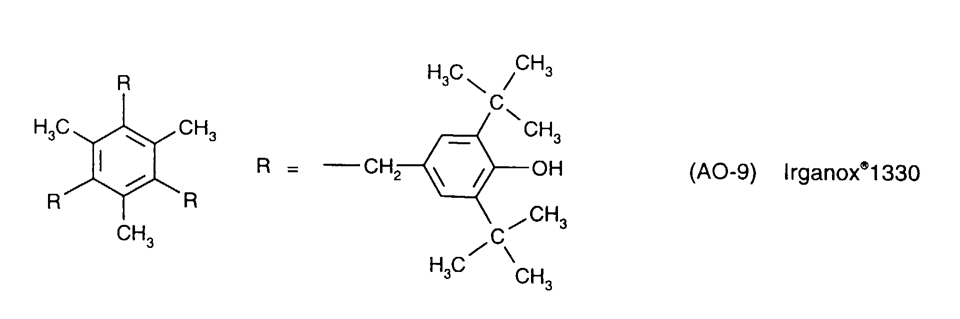

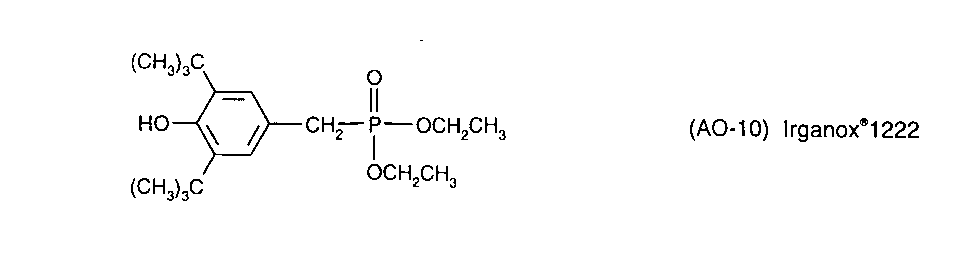

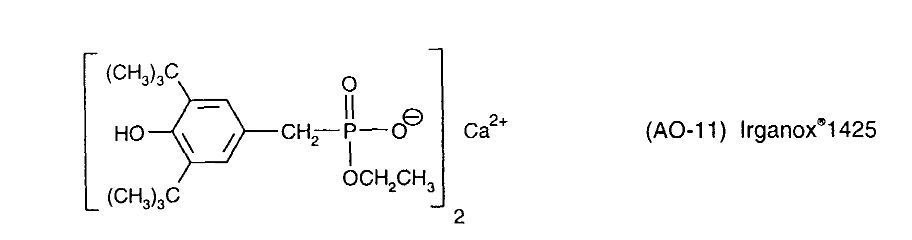

Irganox®1098, Irganox®1076, Irganox®1010, Irganox®245, Irganox®259, Irganox®1035, Irganox®31 14, Irganox®3125, Irganox®1330, Irganox®1222 und Irganox®1425 sind geschützte Handelsnamen der Firma Ciba Spezialitätenchemie AG.

Speziell bevorzugte sterisch gehinderte Amine sind: 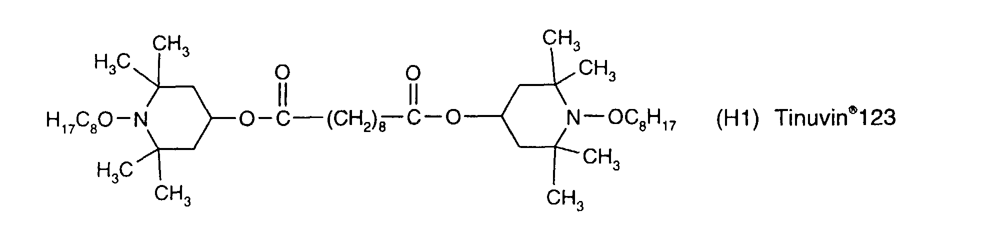 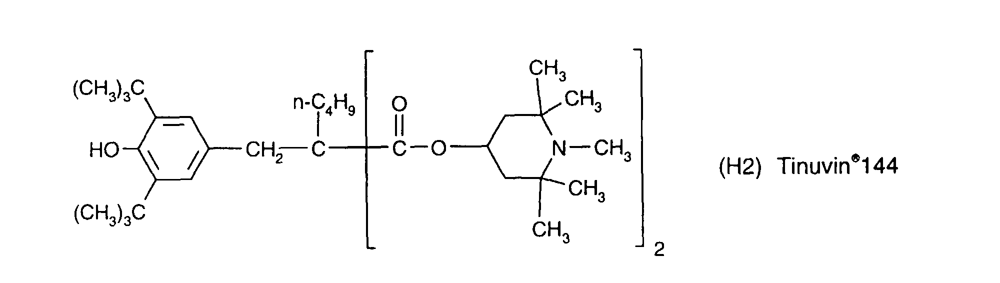 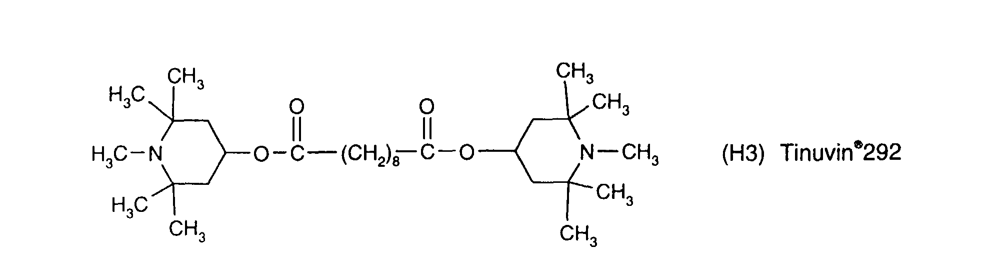 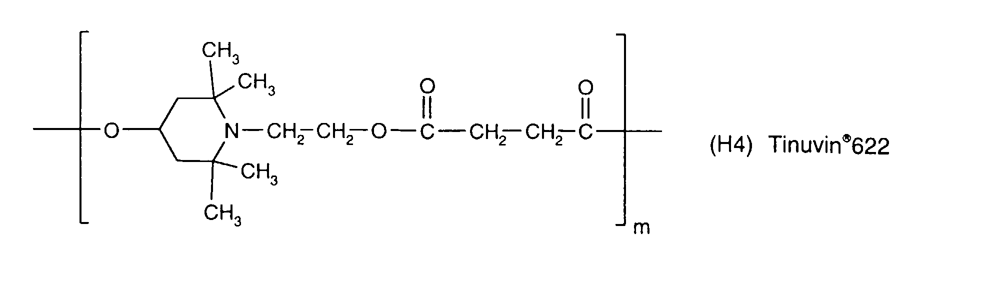 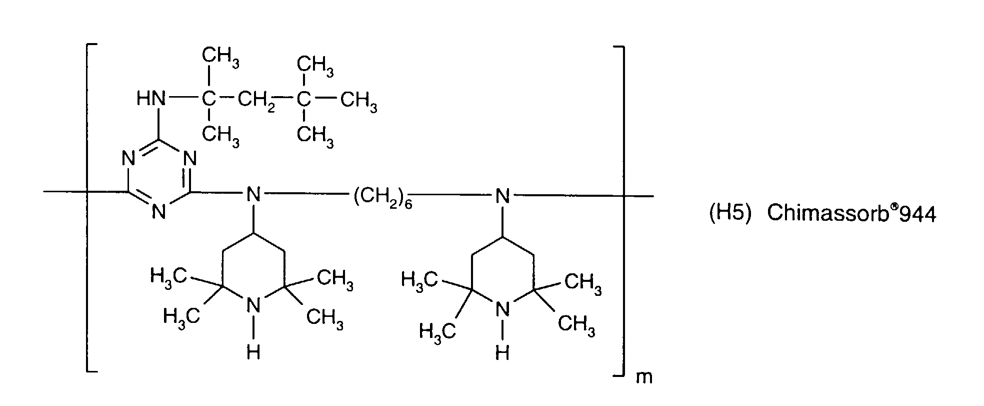 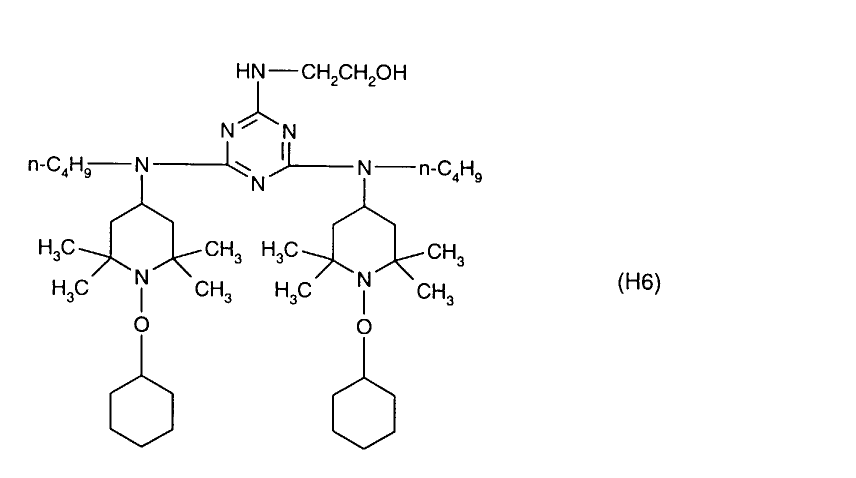 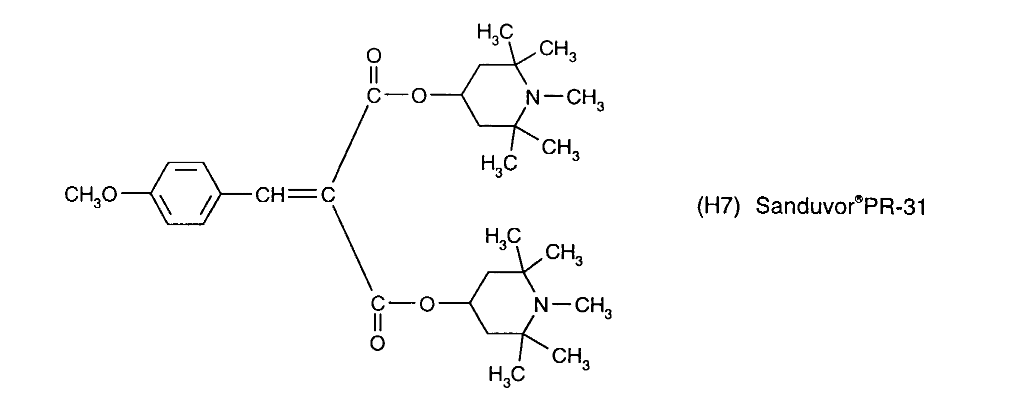 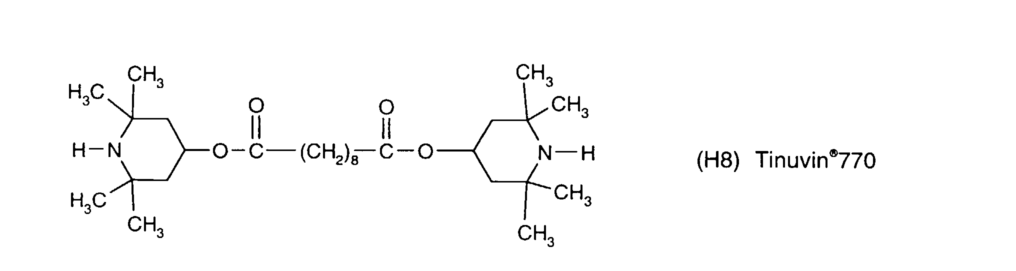 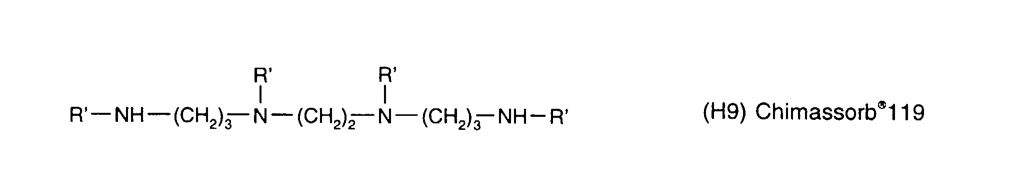 worin 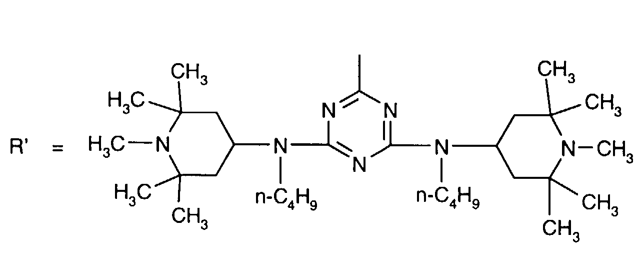 bedeutet, und worin m eine Zahl aus dem Bereich von 2 bis 200 darstellt.

Die Verbindungen vom Typ der sterisch gehinderten Amine sind bekannt und teilweise im Handel erhältlich.

Tinuvin®123, Tinuvin®144, Tinuvin®292, Tinuvin®622, Tinuvin®770, Chimassorb®944 und Chimassorb®119 sind geschützte Handelsnamen der Firma Ciba Spezialitätenchemie AG. Sanduvor®PR-31 ist ein geschützter Handelsname der Firma Clariant.

Speziell bevorzugte Stabilisatormischungen enthalten bespielsweise:

| | | |
|---|---|---|
| 1. | 56,7 % | Irgafos®168 (Tris(2,4-di-tert-butylphenyl)phosphit), |
| | 15,0 % | eines Gemisches von ca. 85 Gewichtsteilen der Verbindung der Formel Va und ca. 15 Gewichtsteilen der Verbindung der Formel Vb; und |
| | 28,3 % | Irganox®1010 (Verbindung der Formel AO-3). |
| | | |
| 2. | 42,5 | % Irgafos®168 (Tris(2,4-di-tert-butylphenyl)phosphit), |
| | 15,0 % | eines Gemisches von ca. 85 Gewichtsteilen der Verbindung der Formel Va und ca. 15 Gewichtsteilen der Verbindung der Formel Vb; und |
| | 42,5 % | Irganox®1010 (Verbindung der Formel AO-3). |
| | | |
| 3. | 56,7 % | Irgafos®168 (Tris(2,4-di-tert-butylphenyl)phosphit), |
| | 15,0 % | eines Gemisches von ca. 85 Gewichtsteilen der Verbindung der Formel Va und ca. 15 Gewichtsteilen der Verbindung der Formel Vb; und |
| | 28,3 % | Irganox®1076 (Verbindung der Formel AO-2). |
| | | |
| 4. | 42,5 % | Irgafos®168 (Tris(2,4-di-tert-butylphenyl)phosphit), |
| | 15,0 % | eines Gemisches von ca. 85 Gewichtsteilen der Verbindung der Formel Va und ca. 15 Gewichtsteilen der Verbindung der Formel Vb; und |
| | 42,5 % | Irganox®3114 (Verbindung der Formel AO-7). |

Die Einarbeitung der Komponenten (A) und (B), sowie gegebenenfalls weiterer Additive in das Polyolefin, erfolgt nach bekannten Methoden, beispielsweise vor oder während der Formgebung oder auch durch Aufbringen der gelösten oder dispergierten Stabilisatormischung auf das Polyolefin, gegebenenfalls unter nachträglichem Verdunsten des Lösungsmittels. Die Stabilisatormischung der Komponenten (A) und (B) und gegebenenfalls weiterer Additive kann auch in Form eines Masterbatches, der diese beispielsweise in einer Konzentration von 2,5 bis 25 Gew.-% enthält, den zu stabilisierenden Polyolefinen zugesetzt werden.

Die Komponenten (A) und (B) und gegebenenfalls weitere Additive können auch vor oder während der Polymerisation oder vor der Vernetzung zugegeben werden.

Die Komponenten (A) und (B) und gegebenenfalls weitere Additive können in reiner Form oder in Wachsen, Oelen oder Polymeren verkapselt in das zu stabilisierende Polyolefin eingearbeitet werden.

Die Komponente (A) und (B) und gegebenenfalls weitere Additive können auch auf das zu stabilisierende Polyolefin aufgesprüht werden. Sie sind in der Lage, andere Zusätze (z.B. die oben angegebenen herkömmlichen Additive) bzw. deren Schmelzen zu verdünnen, so dass sie auch zusammen mit diesen Zusätzen auf das zu stabilisierende Polyolefin aufgesprüht werden können. Besonders vorteilhaft ist die Zugabe durch Aufsprühen während der Desaktivierung der Polymerisationskatalysatoren, wobei z.B. der zur Desaktivierung verwendete Dampf zum Versprühen verwendet werden kann.

Bei kugelförmig polymerisierten Polyolefinen kann es z.B. vorteilhaft sein, die Komponenten (A) und (B) und gegebenenfalls zusammen mit anderen Additiven, durch Aufsprühen zu applizieren.

Während dem Rotomolding-Verfahren werden zweckmässig Temperatur Werte von 200 bis 400°C, insbesondere 280 bis 400°C, beispielsweise 310-400°C, erreicht.

Ein bevorzugter Ausführungsgegenstand der vorliegenden Erfindung ist die Verwendung der Stabilisatorkombination enthaltend die Komponenten (A) und (B) für im Rotomolding-Verfahren verarbeitete Polyolefine.

Die folgenden Beispiele erläutern die Erfindung weiter. Angaben in Teilen oder Prozenten beziehen sich auf das Gewicht.

### Beispiel 1: Herstellung von Polyolefinhohlkörpern nach dem Rotomolding-Verfahren.

100 Teile Polyethylen geringer Dichte, copolymerisiert mit Hexen (PE-LLD) vom Typ Quantum® Petrothene® GA-635-661 mit einem Schmelzindex von 6,5 g/10 Min. und einer Dichte von 0,935 g/cm³ werden mit 0,170 Teilen Chimassorb® 944 ^{a)}, 0,050 Teilen Zinkstearat, sowie die in den Tabellen 1 und 2 aufgeführten Stabilisatoren vermischt und bei 232°C in einem Superior/MPM Extruder mit einer 24:1 UD Schnecke vom Typ Maddock bei 100 Umdrehungen pro Minute gemischt. Anschliessend wird das Polymere gemahlen. Die Partikelgrösse des Polymeren beträgt 150 bis 500 µm. Die durch das Mahlen erzeugte grössere Oberfläche der Partikel ermöglicht eine raschere Wärmeaufnahme, was mit einem geringeren Energieaufwand einhergeht.

Das eigentliche Rotomolding-Verfahren oder Rotationsgiessverfahren, das die Herstellung grösserer dreidimensionaler Festkörper erlaubt, wird in einer Rotationsgiessmaschine FSP M20 vom Typ Clamshell durchgeführt. In dieser Maschine wird eine auf einem Arm montierte Gussform aus Aluminium, in welche die Kunstoffprobe eingefüllt wird, mit einem Gasbrenner unter Umwälzung der heissen Luft während 5 Minuten auf eine Temperatur von 316°C, beziehungsweise während 6 Minuten auf eine Temperatur von 329°C gebracht und für eine bestimmte Zeit (siehe Tabellen 1 und 2) bei dieser Temperatur gehalten. Anschliessend wird der Ofen geöffnet und die Gussform zuerst während 7 Minuten mit zirkulierender Luft, danach während 7 Minuten durch Besprühung mit Wasser und zuletzt nochmals während 2 Minuten mit zirkulierender Luft abgekühlt. Während des gesamten Heiz- und Kühlvorganges wird die an zwei rechtwinklig zueinander stehenden Achsen montierte Gussform rotiert, wobei die Geschwindigkeit der Hauptachse bei 6 Umdrehungen pro Minute gehalten wird und das Rotationsverhältnis 4,5 : 1 beträgt. Nach Abkühlung wird der Deckel der Gussform geöffnet und der entstandene Hohlkörper entnommen. Von der Aussenseite der Formkörper wird der Yellowness Index (Yl) nach ASTM D 1925-70 bestimmt. Niedrige YI-Werte bedeuten wenig Verfärbung, hohe Yl-Werte starke Verfärbung der Proben. Je geringer die Verfärbung, desto wirksamer ist der Stabilisator. Die Resultate sind in den Tabellen 1 und 2 zusammengefasst.

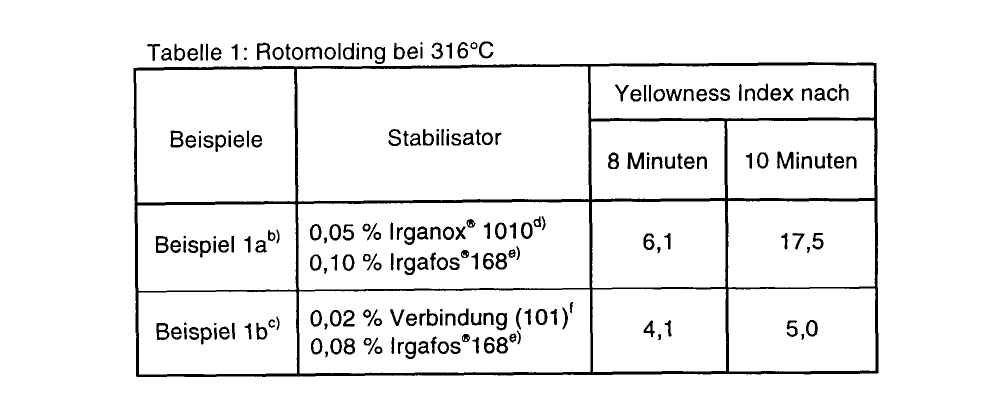

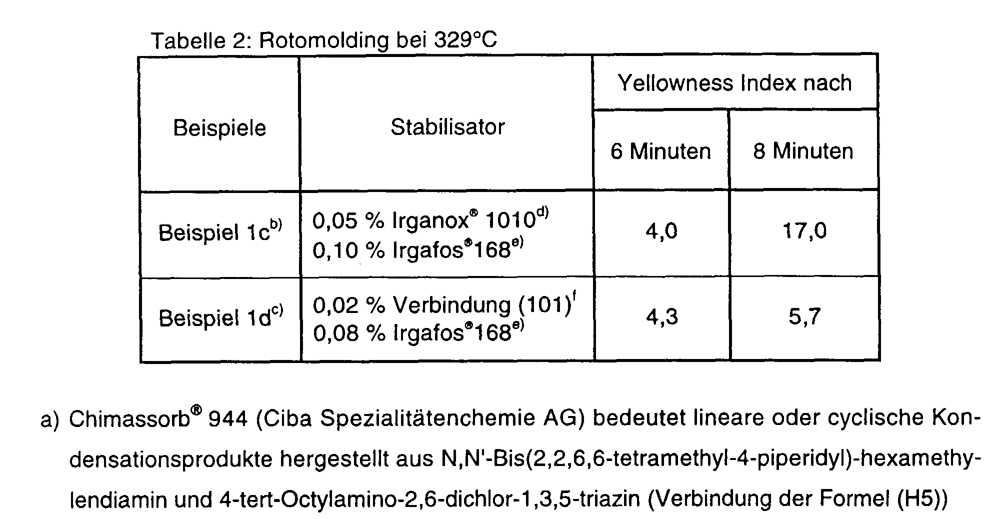

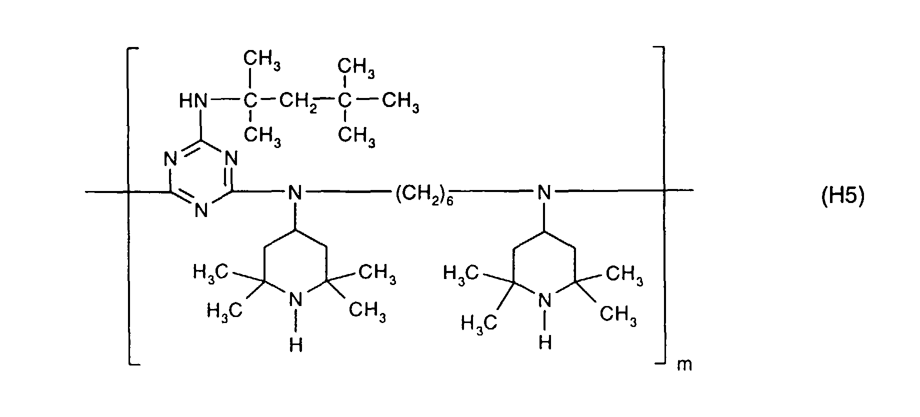

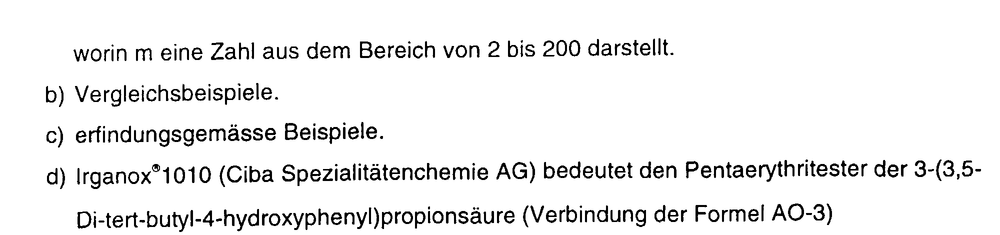

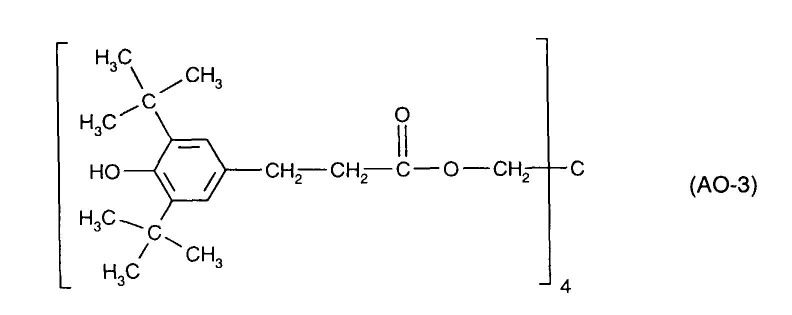

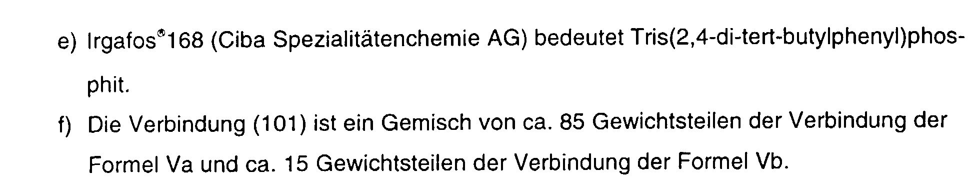

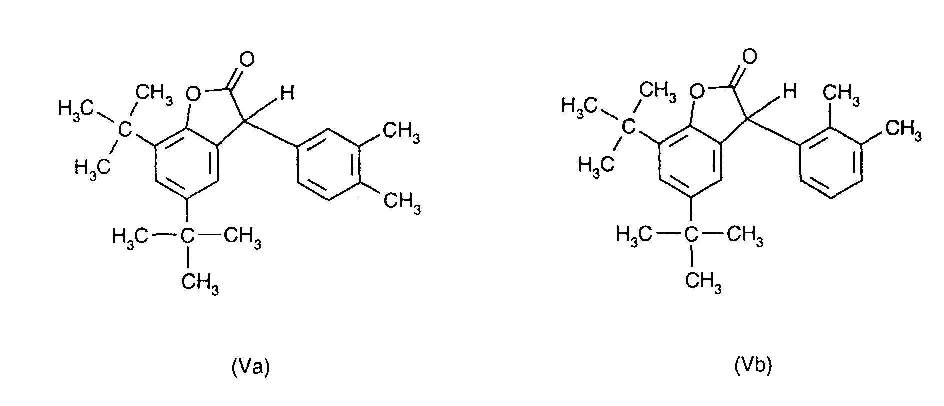

## Patentansprüche

1. Verfahren zur Herstellung von Polyolefinhohlkörpern, dadurch gekennzeichnet, dass man das Polyolefin mit einer Stabilisatorkombination enthaltend
A) mindestens eine Verbindung aus der Gruppe der organischen Phosphite oder Phosphonite, und
B) mindestens eine Verbindung aus der Gruppe der 3-Aryl-benzofuranone versetzt, in eine Hohlform füllt, diese in einem Ofen über 280°C erhitzt, so dass das stabilisierte Polyolefin schmilzt, die Hohlform um mindestens 2 Achsen rotiert, wobei der Kunststoff sich am Rand verteilt, die Form noch rotierend abkühlt, öffnet und den entstandenen Hohlkörper entnimmt.

2. Verfahren gemäss Anspruch 1, enthaltend als Komponente (A) eine Verbindung der Formel 1, 2, 3, 4, 5, 6 oder 7 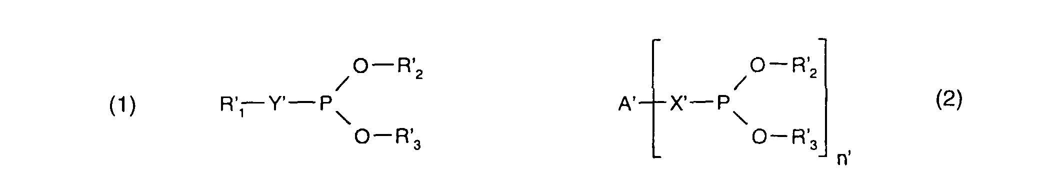 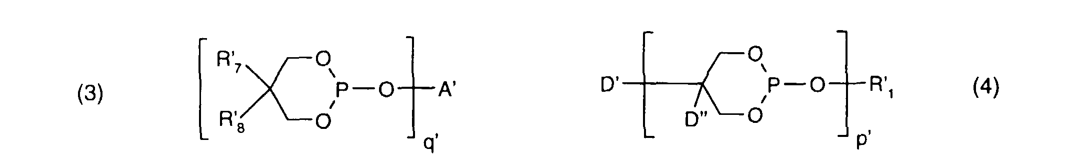 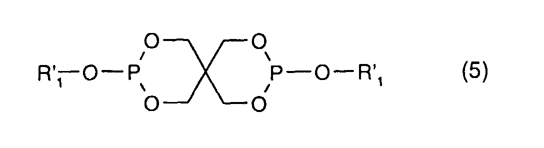 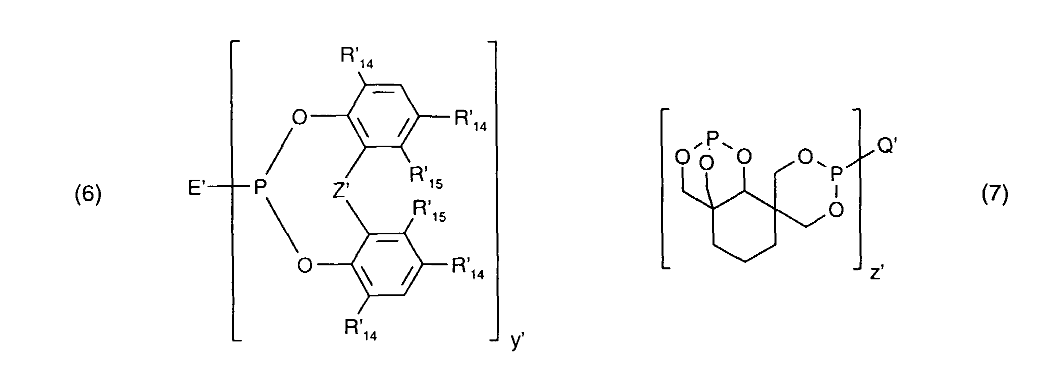 worin die Indices ganzzahlig sind und
n' für 2, 3 oder 4; p' für 1 oder 2; q' für 2 oder 3; r' für 4 bis 12; y' für 1, 2 oder 3; und z' für 1 bis 6 steht;
A', wenn n' 2 ist, C₂-C₁₈-Alkylen; durch Sauerstoff, Schwefel oder -NR'₄- unterbrochenes C₂-C₁₂-Alkylen; einen Rest der Formel 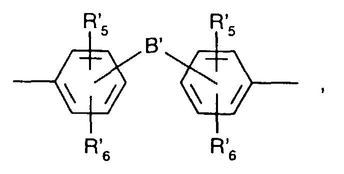 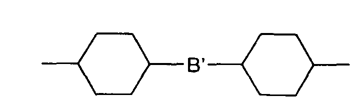 oder Phenylen ist;
A', wenn n' 3 ist, einen Rest der Formel -C_{r'}H_{2r'-1}- bedeutet;
A', wenn n' 4 ist, 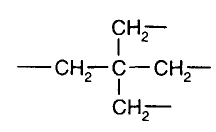 darstellt;
A" die Bedeutung von A', wenn n' 2 ist, hat;
B' eine direkte Bindung, -CH₂-, -CHR'₄-, -CR'₁R'₄-, Schwefel, C₅-C₇-Cycloalkyliden oder mit 1 bis 4 C₁-C₄-Alkylresten in Position 3, 4 und/oder 5 substituiertes Cyclohexyliden bedeutet;
D', wenn p' 1 ist, C₁-C₄-Alkyl und, wenn p' 2 ist, -CH₂OCH₂- bedeutet;
D", wenn p' 1 ist, C₁-C₄-Alkyl darstellt;
E', wenn y' 1 ist, C₁-C₁₈-Alkyl, -OR'₁ oder Halogen ist;
E', wenn y 2 ist, -O-A"-O- darstellt,
E', wenn y 3 ist, einen Rest der Formel R'₄C(CH₂O-)₃ oder N(CH₂CH₂O-)₃ bedeutet;
Q' für den Rest eines mindestens z'-wertigen Alkohols oder Phenols steht, wobei dieser Rest über das Sauerstoffatom an das Phosphoratom gebunden ist;
R'₁, R'₂ und R'₃ unabhängig voneinander unsubstituiertes oder mit Halogen, -COOR₄', -CN oder -CONR₄'R₄' substituiertes C₁-C₁₈-Alkyl; durch Sauerstoff, Schwefel oder -NR'₄- unterbrochenes C₂-C₁₈-Alkyl; C₇-C₉-Phenylalkyl; C₅-C₁₂-Cycloalkyl, Phenyl oder Naphthyl; mit Halogen, 1 bis 3 Alkylresten oder Alkoxyresten mit insgesamt 1 bis 18 Kohlenstoffatomen oder mit C₇-C₉-Phenylalkyl substituiertes Phenyl oder Naphthyl; oder einen Rest der Formel 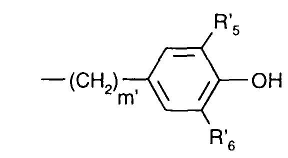 bedeuten, worin m' eine ganze Zahl aus dem Bereich 3 bis 6 bedeutet;
R'₄ Wasserstoff, C₁-C₁₈-Alkyl, C₅-C₁₂-Cycloalkyl oder C₇-C₉-Phenylalkyl darstellt,
R'₅ und R'₆ unabhängig voneinander Wasserstoff, C₁-C₈-Alkyl oder C₅-C₆-Cycloalkyl bedeuten,
R'₇ und R'₈, wenn q' 2 ist, unabhängig voneinander C₁-C₄-Alkyl oder zusammen einen 2,3-Dehydro-pentamethylenrest darstellen; und
R'₇ und R'₈, wenn q' 3 ist, Methyl bedeuten;
R'₁₄ Wasserstoff, C₁-C₉-Alkyl oder Cyclohexyl darstellt,
R'₁₅ Wasserstoff oder Methyl ist, und im Fall, wenn mehrere Reste R'₁₄ und R'₁₅vorhanden sind, diese Reste gleich oder verschieden sind,
X' und Y' jeweils eine direkte Bindung oder Sauerstoff darstellen,
Z' eine direkte Bindung, Methylen, -C(R'₁₆)₂- oder Schwefel bedeutet, und
R'₁₆ C₁-C₈-Alkyl darstellt.

3. Verfahren gemäss Anspruch 1, enthaltend als Komponente (A) Tris(2,4-di-tert-butylphenyl)-phosphit, Tris(nonylphenyl)-phosphit oder eine Verbindung der Formel A, B, C, D, E, F, G, H, I, K oder L

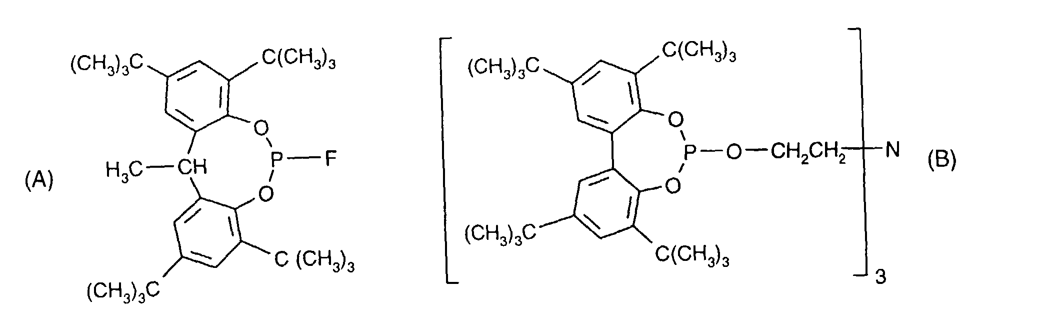

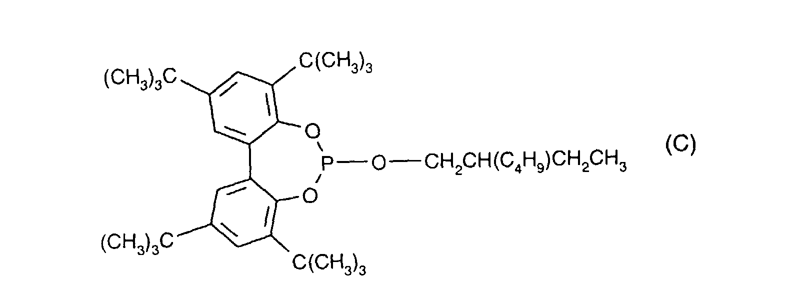

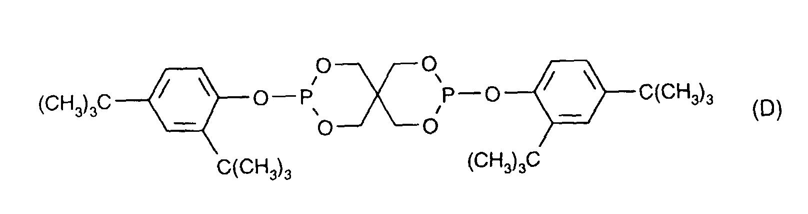

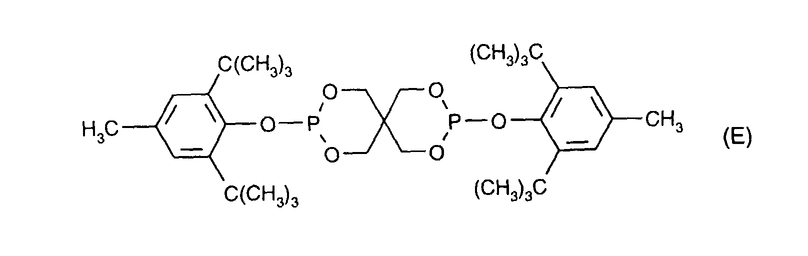

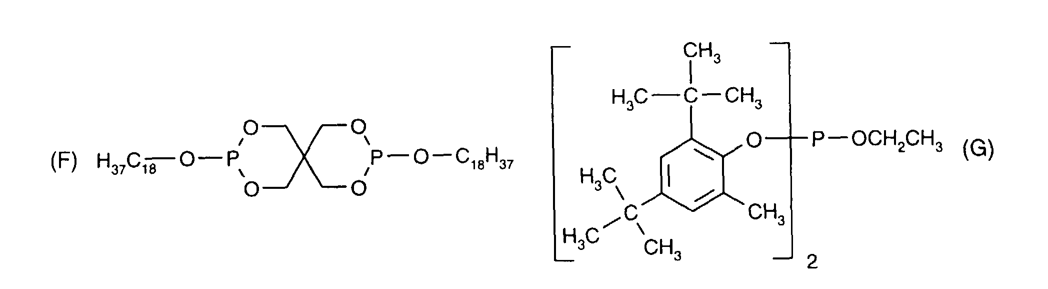

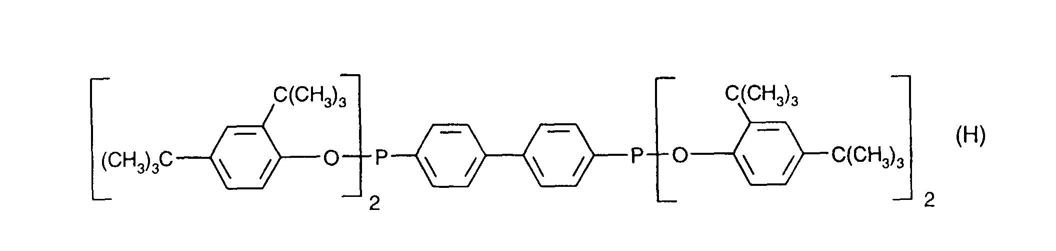

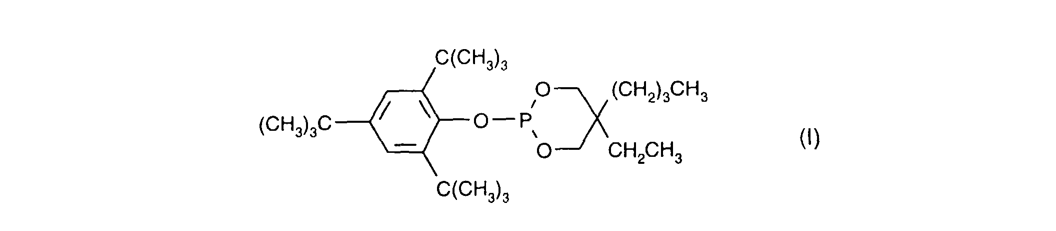

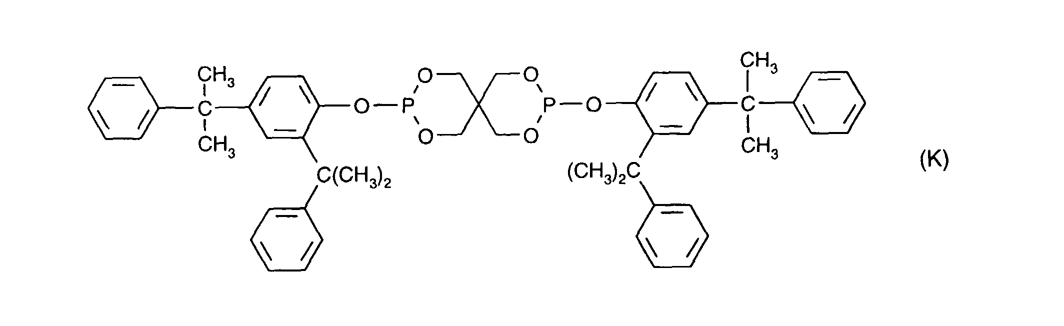

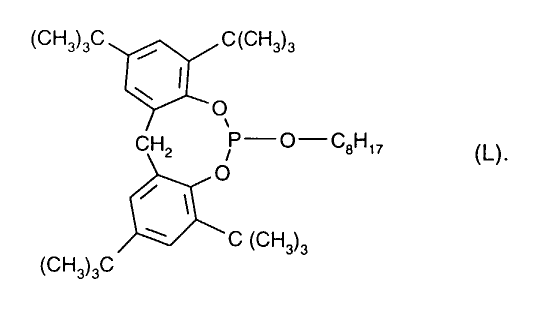

4. Verfahren gemäss Anspruch 1, enthaltend als Komponente (B) eine Verbindung der Formel 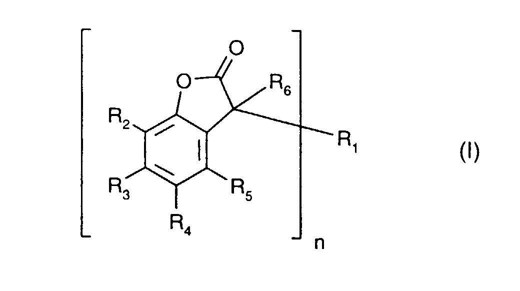 worin, wenn n 1 ist,
R₁ unsubstituiertes oder mit C₁-C₄-Alkyl, C₁-C₄-Alkoxy, C₁-C₄-Alkylthio, Hydroxy, Halogen, Amino, C₁-C₄-Alkylamino, Phenylamino oder Di(C₁-C₄-alkyl)amino substituiertes Naphthyl, Phenanthryl, Anthryl, 5,6,7,8-Tetrahydro-2-naphthyl, 5,6,7,8-Tetrahydro-1-naphthyl, Thienyl, Benzo[b]thienyl, Naphtho[2,3-b]thienyl, Thianthrenyl, Dibenzofuryl, Chromenyl, Xanthenyl, Phenoxathiinyl, Pyrrolyl, Imidazolyl, Pyrazolyl, Pyrazinyl, Pyrimidinyl, Pyridazinyl, Indolizinyl, Isoindolyl, Indolyl, Indazolyl, Purinyl, Chinolizinyl, Isochinolyl, Chinolyl, Phtalazinyl, Naphthyridinyl, Chinoxalinyl, Chinazolinyl, Cinnolinyl, Pteridinyl, Carbazolyl, β-Carbolinyl, Phenanthridinyl, Acridinyl, Perimidinyl, Phenanthrolinyl, Phenazinyl, Isothiazolyl, Phenothiazinyl, Isoxazolyl, Furazanyl, Biphenyl, Terphenyl, Fluorenyl oder Phenoxazinyl darstellt, oder R₁ einen Rest der Formel II 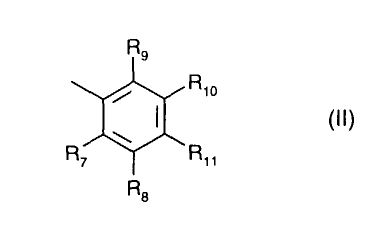 bedeutet, und
wenn n 2 ist,
R₁ unsubstituiertes oder mit C₁-C₄-Alkyl oder Hydroxy substituiertes Phenylen oder Naphthylen; oder -R₁₂-X-R₁₃- darstellt,
R₂, R₃, R₄ und R₅ unabhängig voneinander Wasserstoff, Chlor, Hydroxy, C₁-C₂₅-Alkyl, C₇-C₉-Phenylalkyl, unsubstituiertes oder durch C₁-C₄-Alkyl substituiertes Phenyl; unsubstituiertes oder durch C₁-C₄-Alkyl substituiertes C₅-C₈-Cycloalkyl; C₁-C₁₈-Alkoxy, C₁-C₁₈-Alkylthio, C₁-C₄-Alkylamino, Di-(C₁-C₄-alkyl)amino, C₁-C₂₅-Alkanoyloxy, C₁-C₂₅-Alkanoylamino, C₃-C₂₅-Alkenoyloxy, durch Sauerstoff, Schwefel oder 〉N―R₁₄ unterbrochenes C₃-C₂₅-Alkanoyloxy; C₆-C₉-Cycloalkylcarbonyloxy, Benzoyloxy oder durch C₁-C₁₂-Alkyl substituiertes Benzoyloxy darstellen; oder ferner die Reste R₂ und R₃ oder die Reste R₃ und R₄ oder die Reste R₄ und R₅ zusammen mit den Kohlenstoffatomen, an die sie gebunden sind, einen Benzoring bilden, R₄ zusätzlich -(CH₂)ₚ-COR₁₅ oder -(CH₂)_{q}OH darstellt, oder wenn R₃, R₅ und R₆ Wasserstoff sind, R₄ zusätzlich einen Rest der Formel III 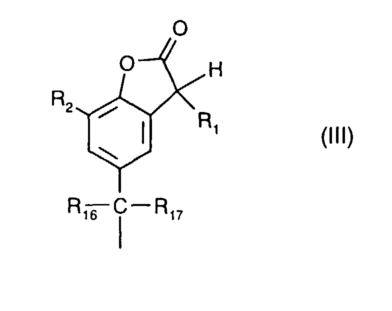 bedeutet, worin R₁ wie oben für n = 1 angegeben definiert ist,
R₆ Wasserstoff oder einen Rest der Formel IV 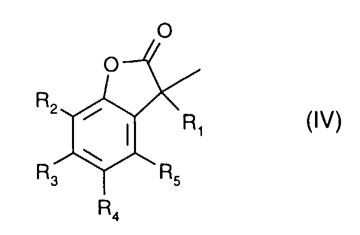 darstellt, wobei R₄ nicht einen Rest der Formel III bedeutet und R₁ wie oben für n = 1 angegeben definiert ist,
R₇, R₈, R₉, R₁₀ und R₁₁ unabhängig voneinander Wasserstoff, Halogen, Hydroxy, C₁-C₂₅-Alkyl, durch Sauerstoff, Schwefel oder 〉N―R₁₄ unterbrochenes C₂-C₂₅-Alkyl; C₁-C₂₅Alkoxy, durch Sauerstoff, Schwefel oder 〉N―R₁₄ unterbrochenes C₂-C₂₅-Alkoxy;
C₁-C₂₅-Alkylthio, C₃-C₂₅-Alkenyl, C₃-C₂₅-Alkenyloxy, C₃-C₂₅-Alkinyl, C₃-C₂₅-Alkinyloxy, C₇-C₉-Phenylalkyl, C₇-C₉-Phenylalkoxy, unsubstituiertes oder durch C₁-C₄-Alkyl substituiertes Phenyl; unsubstituiertes oder durch C₁-C₄-Alkyl substituiertes Phenoxy; unsubstituiertes oder durch C₁-C₄-Alkyl substituiertes C₅-C₈-Cycloalkyl; unsubstituiertes oder durch C₁-C₄-Alkyl substituiertes C₅-C₈-Cycloalkoxy; C₁-C₄-Alkylamino, Di-(C₁-C₄-alkyl)amino, C₁-C₂₅-Alkanoyl, durch Sauerstoff, Schwefel oder 〉N―R₁₄ unterbrochenes C₃-C₂₅-Alkanoyl;
C₁-C₂₅-Alkanoyloxy, durch Sauerstoff, Schwefel oder 〉N―R₁₄ unterbrochenes C₃-C₂₅-Alkanoyloxy; C₁-C₂₅-Alkanoylamino, C₃-C₂₅-Alkenoyl, durch Sauerstoff, Schwefel oder 〉N―R₁₄ unterbrochenes C₃-C₂₅-Alkenoyl; C₃-C₂₅-Alkenoyloxy, durch Sauerstoff, Schwefel oder 〉N―R₁₄ unterbrochenes C₃-C₂₅-Alkenoyloxy; C₆-C₉-Cycloalkylcarbonyl, C₆-C₉-Cycloalkylcarbonyloxy, Benzoyl oder durch C₁-C₁₂-Alkyl substituiertes Benzoyl; Benzoyloxy oder durch C₁-C₁₂-Alkyl substituiertes Benzoyloxy; 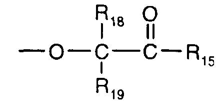 oder 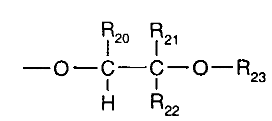 darstellen, oder ferner in Formel II die Reste R₇ und R₈ oder die Reste R₈ und R₁₁ zusammen mit den Kohlenstoffatomen, an die sie gebunden sind, einen Benzoring bilden,
R₁₂ und R₁₃ unabhängig voneinander unsubstituiertes oder durch C₁-C₄-Alkyl substituiertes Phenylen oder Naphthylen darstellen,
R₁₄ Wasserstoff oder C₁-C₈-Alkyl ist,
R₁₅ Hydroxy, 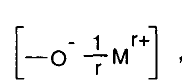 C₁-C₁₈-Alkoxy oder 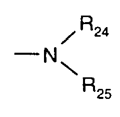 bedeutet,
R₁₆ und R₁₇ unabhängig voneinander Wasserstoff, CF₃, C₁-C₁₂-Alkyl oder Phenyl darstellen, oder R₁₆ und R₁₇ zusammen mit dem C-Atom, an das sie gebunden sind, einen unsubstituierten oder durch 1 bis 3 C₁-C₄-Alkyl substituierten C₅-C₈-Cycloalkylidenring bilden;
R₁₈ und R₁₉ unabhängig voneinander Wasserstoff, C₁-C₄-Alkyl oder Phenyl darstellen,
R₂₀ Wasserstoff oder C₁-C₄-Alkyl ist,
R₂₁ Wasserstoff, unsubstituiertes oder durch C₁-C₄-Alkyl substituiertes Phenyl; C₁-C₂₅-Alkyl, durch Sauerstoff, Schwefel oder 〉N―R₁₄ unterbrochenes C₂-C₂₅-Alkyl; unsubstituiertes oder am Phenylrest durch 1 bis 3 C₁-C₄-Alkyl substituiertes C₇-C₉-Phenylalkyl; durch Sauerstoff, Schwefel oder 〉N―R₁₄ unterbrochenes unsubstituiertes oder am Phenylrest durch 1 bis 3 C₁-C₄-Alkyl substituiertes C₇-C₂₅-Phenylalkyl bedeutet, oder ferner die Reste R₂₀ und R₂₁ zusammen mit den Kohlenstoffatomen, an die sie gebunden sind, einen unsubstituierten oder durch 1 bis 3 C₁-C₄-Alkyl substituierten C₅-C₁₂-Cycloalkylenring bilden;
R₂₂ Wasserstoff oder C₁-C₄-Alkyl darstellt,
R₂₃ Wasserstoff, C₁-C₂₅-Alkanoyl, C₃-C₂₅-Alkenoyl, durch Sauerstoff, Schwefel oder 〉N―R₁₄ unterbrochenes C₃-C₂₅-Alkanoyl; durch eine Di(C₁-C₆-alkyl)phosphonatgruppe substituiertes C₂-C₂₅-Alkanoyl; C₆-C₉-Cycloalkylcarbonyl, Thenoyl, Furoyl, Benzoyl oder durch C₁-C₁₂-Alkyl substituiertes Benzoyl; 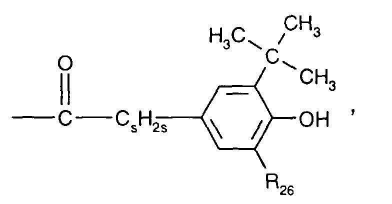 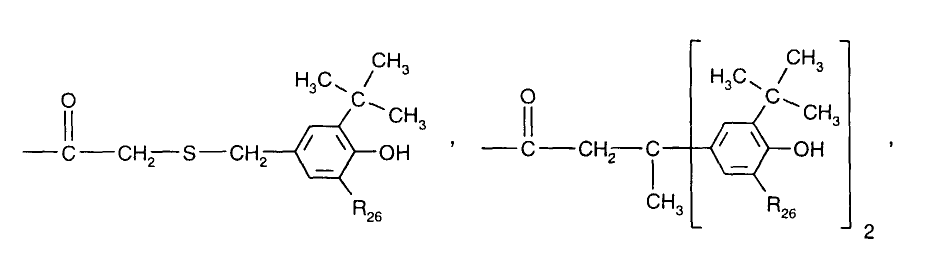 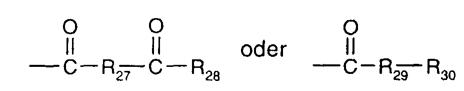 bedeutet,
R₂₄ und R₂₅ unabhängig voneinander Wasserstoff oder C₁-C₁₈-Alkyl darstellen,
R₂₆ Wasserstoff oder C₁-C₈-Alkyl darstellt,
R₂₇ eine direkte Bindung, C₁-C₁₈-Alkylen, durch Sauerstoff, Schwefel oder 〉N―R₁₄ unterbrochenes C₂-C₁₈-Alkylen; C₂-C₁₈-Alkenylen, C₂-C₂₀-Alkyliden, C₇-C₂₀-Phenylalkyliden, C₅-C₈-Cycloalkylen, C₇-C₈-Bicycloalkylen, unsubstituiertes oder durch C₁-C₄-Alkyl substituiertes Phenylen, 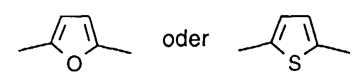 darstellt,
R₂₈ Hydroxy, 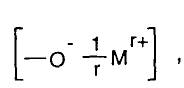 C₁-C₁₈-Alkoxy oder 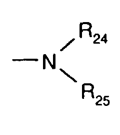 bedeutet,
R₂₉ Sauerstoff, -NH- oder 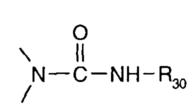 darstellt,
R₃₀ C₁-C₁₈-Alkyl oder Phenyl ist,
R₃₁ Wasserstoff oder C₁-C₁₈-Alkyl bedeutet,
M ein r-wertiges Metallkation ist,
X eine direkte Bindung, Sauerstoff, Schwefel oder -NR₃₁- darstellt,
n 1 oder 2 ist,
p 0, 1 oder 2 bedeutet,
q 1, 2, 3, 4, 5 oder 6 darstellt,
r 1, 2 oder 3 ist, und
s 0, 1 oder 2 bedeutet.

5. Verfahren gemäss Anspruch 1, enthaltend als Komponente (B) eine Verbindung der Formel V 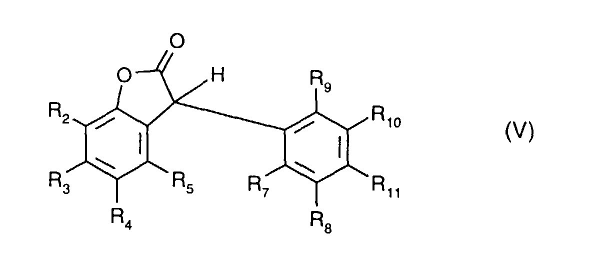 worin
R₂ Wasserstoff oder C₁-C₆-Alkyl darstellt,
R₃ Wasserstoff bedeutet,
R₄ Wasserstoff oder C₁-C₆-Alkyl darstellt,
R₅ Wasserstoff bedeutet,
R₇, R₈, R₉, R₁₀ und R₁₁ unabhängig voneinander Wasserstoff, C₁-C₄-Alkyl oder C₁-C₄-Alkoxy darstellt, mit der Bedingung, dass mindestens zwei der Reste R₇, R₈, R₉, R₁₀ oder R₁₁ Wasserstoff sind.

6. Verfahren gemäss Anspruch 1, enthaltend als Komponente (B) eine Verbindung der Formel Va oder Vb 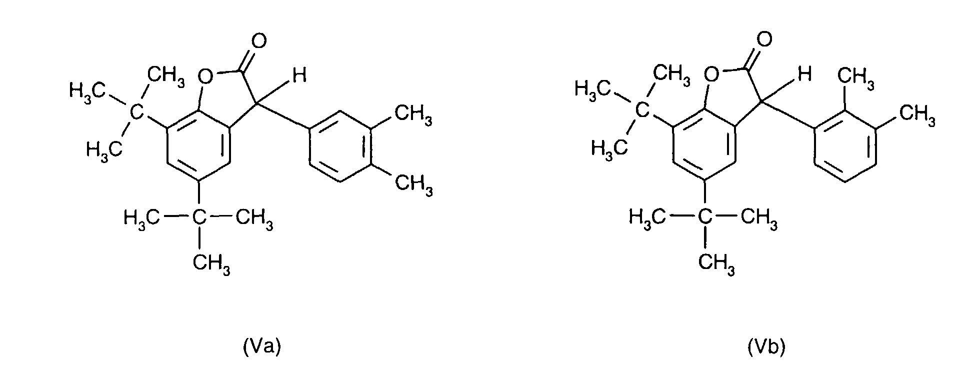 oder ein Gemisch der beiden Verbindungen der Formel Va und Vb.

7. Verfahren gemäss Anspruch 1, dadurch gekennzeichent, dass die Temperatur Werte um 200 bis 400°C erreicht.

8. Verwendung der in Anspruch 1 definierten Stabilisatorkombination mit den Komponenten (A) und (B) als Hochtemperaturstabilisatoren für im Rotomolding-Verfahren verarbeitete Polyolefine.

## Claims

1. A process for the production of polyolefin hollow articles, which comprises adding to the polyolefin a stabilizer combination comprising
A) at least one compound from the group of the organic phosphites or phosphonites, and
B) at least one compound from the group of the 3-arylbenzofuranones, filling this mixture into a mould, heating this mould in an oven to above 280°C, so that the stabilized polyolefin fuses, rotating the mould about at least 2 axes, the plastic material spreading on the walls, and cooling the mould while still rotating, opening it and taking the resultant hollow article out.

2. A process according to claim 1, comprising as component (A) a compound of the formula 1, 2, 3, 4, 5, 6 or 7 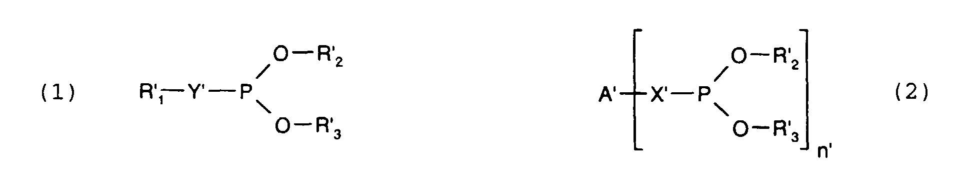 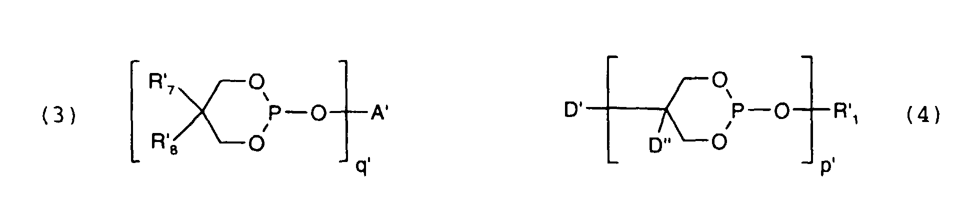 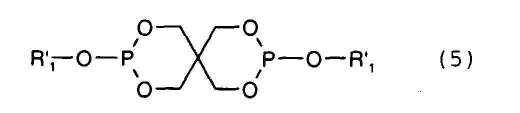 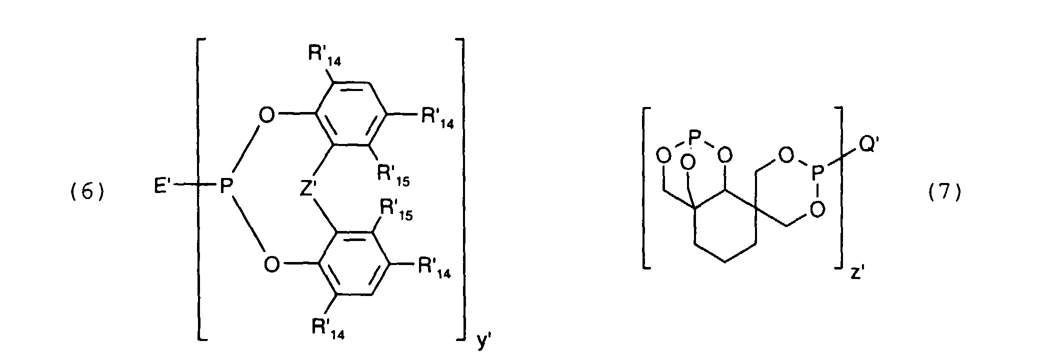 in which the indices are integral and
n' is 2, 3 or 4; p' is 1 or 2; q' is 2 or 3; r' is 4 to 12;
y' is 1, 2 or 3; z' is 1 to 6;
A', if n' is 2, is C₂-C₁₈alkylene; C₂-C₁₂alkylene interrupted by oxygen, sulfur or -NR'₄-; a radical of the formula 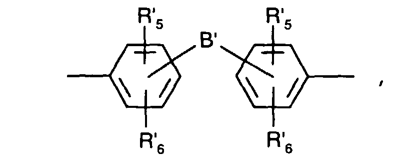 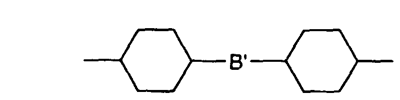 or phenylene;
A', if n' is 3, is a radical of the formula -C_{r'}H_{2r'}-1-;
A', if n' is 4, is 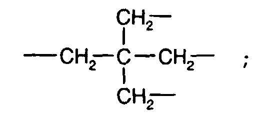
A'' is as defined for A' if n' is 2;
B' is a direct bond, -CH₂-, -CHR'₄-, -CR'₁R'₄-, sulfur, C₅-C₇cycloalkylidene, or cyclohexylidene which is substituted from 1 to 4 times by C₁-C₄alkyl radicals in position 3, 4 and/or 5;
D', if p' is 1, is C₁-C₄alkyl and, if p' is 2, is -CH₂OCH₂-;
D", if p' is 1, is C₁-C₄alkyl;
E', if y' is 1, is C₁-C₁₈alkyl, -OR'₁ or halogen;
E', if y is 2, is -O-A"-O-,
E', if y is 3, is a radical of the formula R'₄C(CH₂O-)₃ or N(CH₂CH₂O-)₃;
Q' is the radical of an at least z'-valent alcohol or phenol, this radical being attached via the oxygen atom to the phosphorus atom;
R'₁, R'₂ and R'₃ independently of one another are unsubstituted or halogen-, -COOR₄'-, -CN- or -CONR'₄R'₄-substituted C₁-C₁₈alkyl; C₂-C₁₈alkyl interrupted by oxygen, sulfur or -NR'₄-; C₇-C₉phenylalkyl; C₅-C₁₂cycloalkyl, phenyl or naphthyl; naphthyl or phenyl substituted by halogen, 1 to 3 alkyl radicals or alkoxy radicals having a total of 1 to 18 carbon atoms or by C₇-C₉phenylalkyl; or a radical of the formula 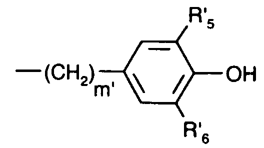 in which m' is an integer from the range 3 to 6;
R'₄ is hydrogen, C₁-C₁₈alkyl, C₅-C₁₂cycloalkyl or C₇-C₉phenylalkyl,
R'₅ and R'₆ independently of one another are hydrogen, C₁-C₈alkyl or C₅-C₆cycloalkyl,
R'₇ and R'₈, if q' is 2, independently of one another are C₁-C₄alkyl or together are a 2,3-dehydropentamethylene radical; and
R'₇ and R'₈, if q' is 3, are methyl;
R'₁₄ is hydrogen, C₁-C₉alkyl or cyclohexyl,
R'₁₅ is hydrogen or methyl and, if two or more radicals R'₁₄ and R'₁₅ are present, these radicals are identical or different,
X' and Y' are each a direct bond or oxygen,
Z' is a direct bond, methylene, -C(R'₁₆)₂- or sulfur, and R'₁₆ is C₁-C₈alkyl.

3. A process according to claim 1, comprising as component (A) tris(2,4-di-tert-butylphenyl)phosphite, tris(nonylphenyl)phosphite or a compound of the formula A, B, C, D, E, F, G, H, I, K or L

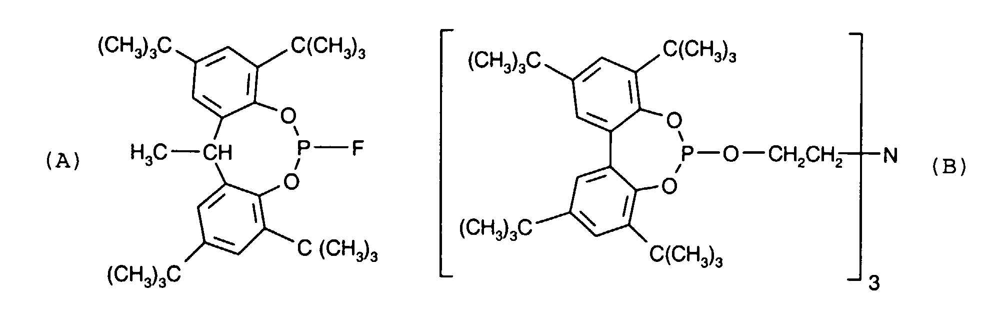

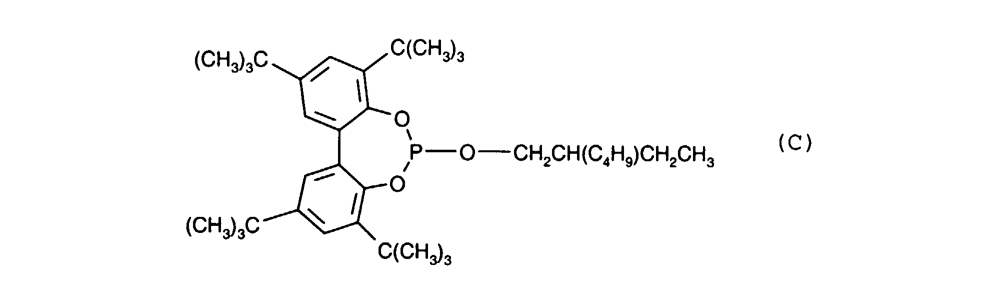

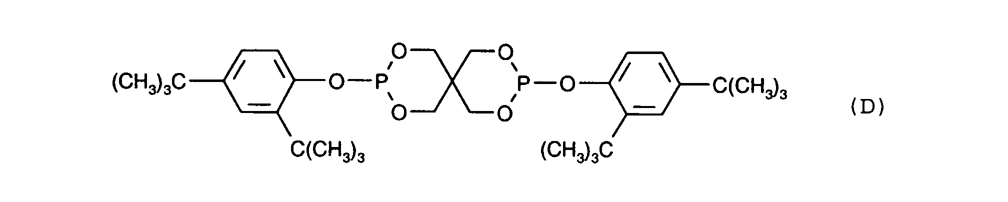

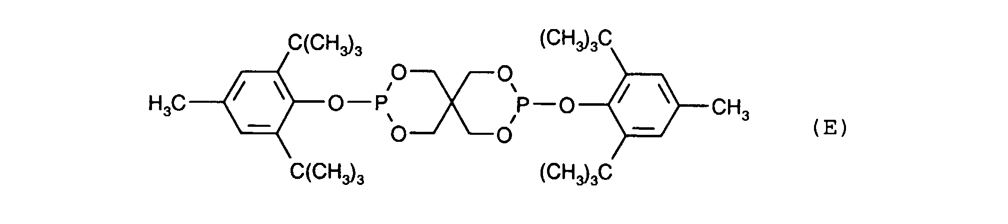

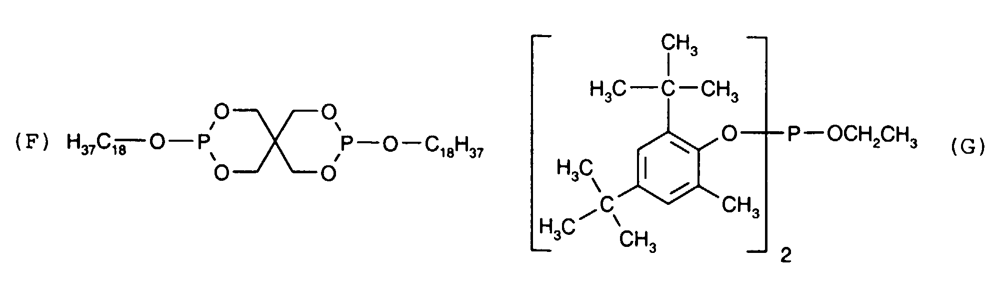

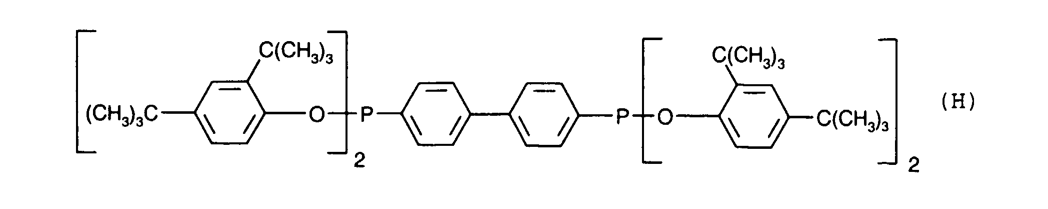

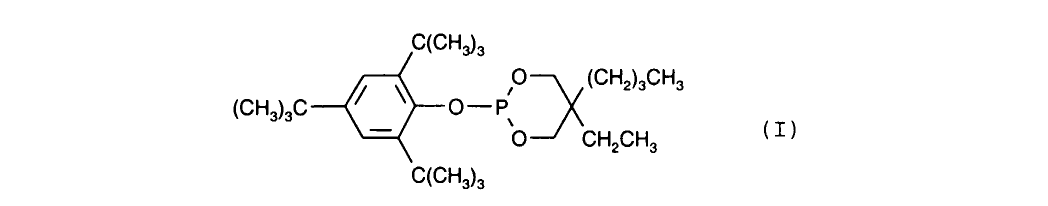

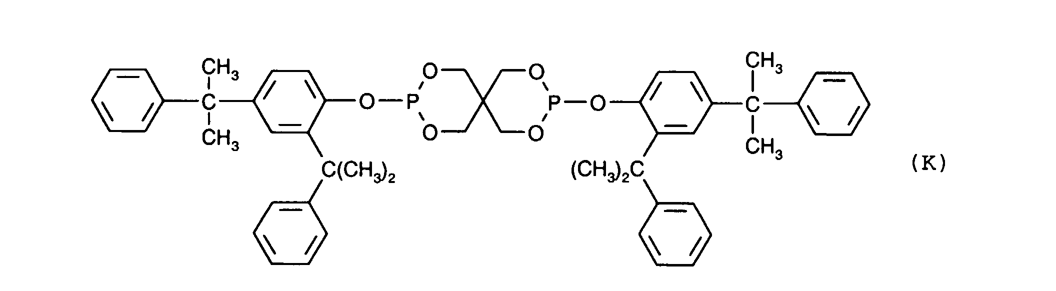

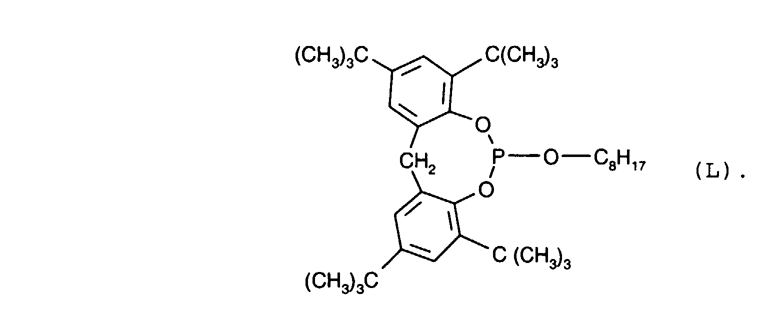

4. A process according to claim 1, comprising as component (B) a compound of the formula I 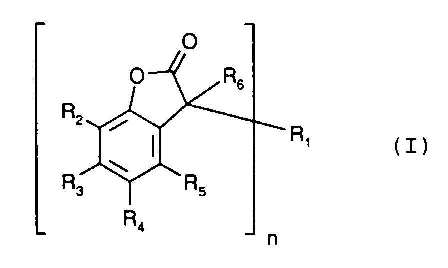 in which, if n is 1,
R₁ is unsubstituted or C₁-C₄alkyl-, C₁-C₄alkoxy-, C₁-C₄alkylthio-, hydroxyl-, halo-, amino-, C₁-C₄alkylamino-, phenylamino- or di(C₁-C₄alkyl)amino-substituted naphthyl, phenanthryl, anthryl, 5,6,7,8-tetrahydro-2-naphthyl, 5,6,7,8-tetrahydro-1-naphthyl, thienyl, benzo[b]thienyl, naphtho[2,3-b]thienyl, thianthrenyl, dibenzofuryl, chromenyl, xanthenyl, phenoxathiinyl, pyrrolyl, imidazolyl, pyrazolyl, pyrazinyl, pyrimidinyl, pyridazinyl, indolizinyl, isoindolyl, indolyl, indazolyl, purinyl, quinolizinyl, isoquinolyl, quinolyl, phthalazinyl, naphthyridinyl, quinoxalinyl, quinazolinyl, cinnolinyl, pteridinyl, carbazolyl, β-carbolinyl, phenanthridinyl, acridinyl, perimidinyl, phenanthrolinyl, phenazinyl, isothiazolyl, phenothiazinyl, isoxazolyl, furazanyl, biphenylyl, terphenyl, fluorenyl or phenoxazinyl, or R₁ is a radical of the formula II 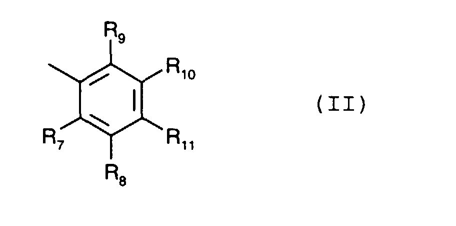 and
if n is 2,
R₁ is unsubstituted or C₁-C₄alkyl- or hydroxy-substituted phenylene or naphthylene; or -R₁₂-X-R₁₃-,
R₂, R₃, R₄ and R₅ independently of one another are hydrogen, chlorine, hydroxyl, C₁-C₂₅alkyl, C₇-C₉phenylalkyl, unsubstituted or C₁-C₄alkyl-substituted phenyl; unsubstituted or C₁-C₄alkyl-substituted C₅-C₈cycloalkyl; C₁-C₁₈alkoxy, C₁-C₁₈alkylthio, C₁-C₄alkylamino, di(C₁-C₄alkyl)amino, C₁-C₂₅alkanoyloxy, C₁-C₂₅alkanoylamino, C₃-C₂₅alkenoyloxy, C₃-C₂₅alkanoyloxy which is interrupted by oxygen, sulfur or 〉N―R₁₄; C₆-C₉cycloalkylcarbonyloxy, benzoyloxy or C₁-C₁₂alkyl-substituted benzoyloxy; or else the radicals R₂ and R₃ or the radicals R₃ and R₄ or the radicals R₄ and R₅, together with the carbon atoms to which they are attached, form a benzo ring, R₄ is additionally -(CH₂)ₚ-COR₁₅ or -(CH₂)_{q}OH or, if R₃, R₅ and R₆ are hydrogen, R₄ is additionally a radical of the formula III 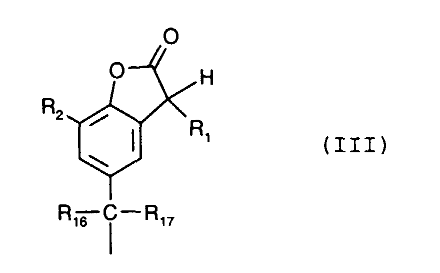 in which R₁ is defined as indicated above for n = 1, R₆ is hydrogen or a radical of the formula IV 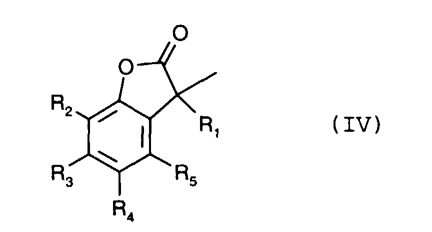 where R₄ is not a radical of the formula III and R₁ is defined as indicated above for n = 1,
R₇, R₈, R₉, R₁₀ and R₁₁ independently of one another are hydrogen, halogen, hydroxyl, C₁-C₂₅alkyl, C₂-C₂₅alkyl interrupted by oxygen, sulfur or 〉N―R₁₄; C₁-C₂₅alkoxy; C₂-C₂₅alkoxy interrupted by oxygen, sulfur or 〉N―R₁₄; C₁-C₂₅alkylthio, C₃-C₂₅alkenyl, C₃-C₂₅alkenyloxy, C₃-C₂₅alkynyl, C₃-C₂₅alkynyloxy, C₇-C₉phenylalkyl, C₇-C₉phenylalkoxy, unsubstituted or C₁-C₄alkyl-substituted phenyl; unsubstituted or C₁-C₄alkyl-substituted phenoxy; unsubstituted or C₁-C₄alkyl-substituted C₅-C₈cycloalkyl; unsubstituted or C₁-C₄alkyl-substituted C₅-C₈cycloalkoxy; C₁-C₄alkylamino, di(C₁-C₄alkyl)amino, C₁-C₂₅alkanoyl, C₃-C₂₅alkanoyl interrupted by oxygen, sulfur or 〉N―R₁₄; C₁-C₂₅alkanoyloxy, C₃-C₂₅alkanoyloxy interrupted by oxygen, sulfur or 〉N―R₁₄; C₁-C₂₅alkanoylamino, C₃-C₂₅alkenoyl; C₃-C₂₅alkenoyl interrupted by oxygen, sulfur or 〉N―R₁₄; C₃-C₂₅alkenoyloxy;
C₃-C₂₅alkenoyloxy interrupted by oxygen, sulfur or 〉N―R₁₄;
C₆-C₉cycloalkylcarbonyl, C₆-C₉cycloalkylcarbonyloxy, benzoyl or C₁-C₁₂alkyl-substituted benzoyl; benzoyloxy or C₁-C₁₂alkyl-substituted benzoyloxy; 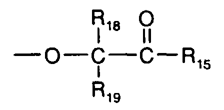 or 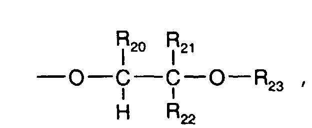 or else, in formula II, the radicals R₇ and R₈ or the radicals R₈ and R₁₁, together with the carbon atoms to which they are attached, form a benzo ring, R₁₂ and R₁₃ independently of one another are unsubstituted or C₁-C₄alkyl-substituted phenylene or naphthylene,
R₁₄ is hydrogen or C₁-C₈alkyl,
R₁₅ is hydroxyl, 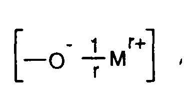 C₁-C₁₈alkoxy or 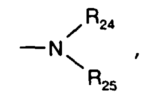
R₁₆ and R₁₇ independently of one another are hydrogen, CF₃, C₁-C₁₂alkyl or phenyl, or R₁₆ and R₁₇, together with the C atom to which they are attached, form a C₅-C₈cycloalkylidene ring which is unsubstituted or substituted from 1 to 3 times by C₁-C₄alkyl;
R₁₈ and R₁₉ independently of one another are hydrogen, C₁-C₄alkyl or phenyl,
R₂₀ is hydrogen or C₁-C₄alkyl,
R₂₁ is hydrogen, unsubstituted or C₁-C₄alkyl-substituted phenyl; C₁-C₂₅alkyl, C₂-C₂₅alkyl interrupted by oxygen, sulfur or 〉N―R₁₄ ; C₇-C₉phenylalkyl which is unsubstituted or substituted on the phenyl radical from 1 to 3 times by C₁-C₄alkyl; C₇-C₂₅phenylalkyl which is unsubstituted or substituted on the phenyl radical from 1 to 3 times by C₁-C₄alkyl and interrupted by oxygen, sulfur or 〉N―R₁₄, or else the radicals R₂₀ and R₂₁, together with the carbon atoms to which they are attached, form a C₅-C₁₂cycloalkylene ring which is unsubstituted or substituted from 1 to 3 times by C₁-C₄alkyl;
R₂₂ is hydrogen or C₁-C₄alkyl,
R₂₃ is hydrogen, C₁-C₂₅alkanoyl, C₃-C₂₅alkenoyl, C₃-C₂₅alkanoyl interrupted by oxygen, sulfur or 〉N―R₁₄; C₂-C₂₅alkanoyl substituted by a di(C₁-C₆alkyl)phosphonate group; C₆-C₉cycloalkylcarbonyl, thenoyl, furoyl, benzoyl or C₁-C₁₂alkyl-substituted benzoyl; 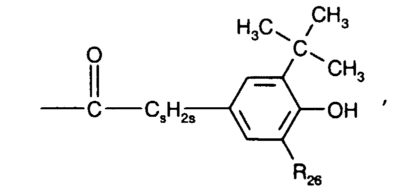 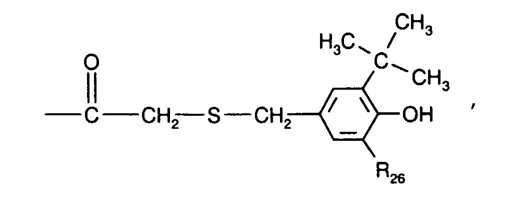 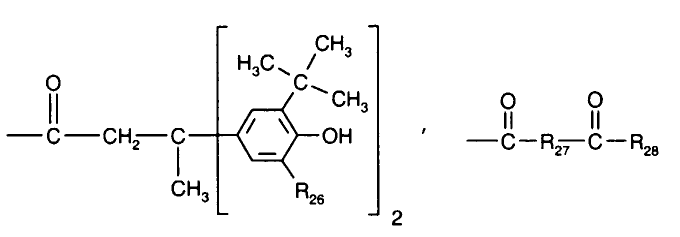 or 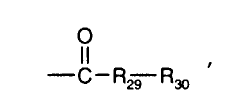
R₂₄ and R₂₅ independently of one another are hydrogen or C₁-C₁₈alkyl,
R₂₆ is hydrogen or C₁-C₈alkyl,
R₂₇ is a direct bond, C₁-C₁₈alkylene, C₂-C₁₈alkylene interrupted by oxygen, sulfur or 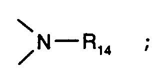 C₂-C₁₈alkenylene, C₂-C₂₀alkylidene, C₇-C₂₀phenylalkylidene, C₅-C₈cycloalkylene, C₇-C₈bicycloalkylene, unsubstituted or C₁-C₄alkyl-substituted phenylene, 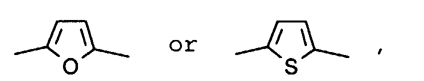
R₂₈ is hydroxyl, 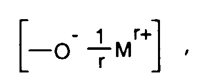 C₁-C₁₈alkoxy or 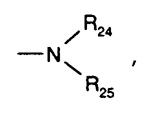
R₂₉ is oxygen, -NH- or 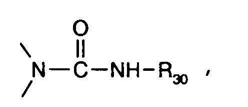
R₃₀ is C₁-C₁₈alkyl or phenyl,
R₃₁ is hydrogen or C₁-C₁₈alkyl,
M is an r-valent metal cation,
X is a direct bond, oxygen, sulfur or -NR₃₁-,
n is 1 or 2,
p is 0, 1 or 2,
q is 1, 2, 3, 4, 5 or 6,
r is 1, 2 or 3, and
s is 0, 1 or 2.

5. A process according to claim 1, comprising as component (B) a compound of the formula V 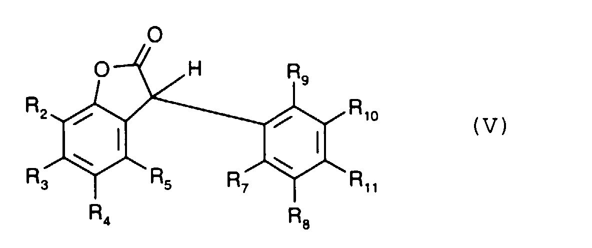 in which
R₂ is hydrogen or C₁-C₆alkyl,
R₃ is hydrogen,
R₄ is hydrogen or C₁-C₆alkyl,
R₅ is hydrogen,
R₇, R₈, R₉, R₁₀ and R₁₁ independently of one another are hydrogen, C₁-C₄alkyl or C₁-C₄alkoxy with the proviso that at least two of the radicals R₇, R₈, R₉, R₁₀ or R₁₁ are hydrogen.

6. A process according to claim 1, comprising as component (B) a compound of the formula Va or Vb 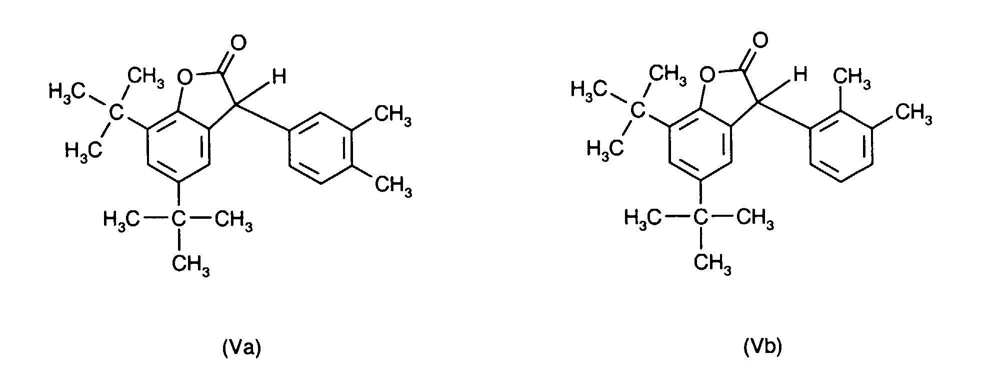 or a mixture of the two compounds of the formulae Va and Vb.

7. A process according to claim 1, wherein the temperature reaches values of around 200 to 400°C.

8. Use of the stabilizer combination comprising the components (A) and (B) as defined in claim 1 as high-temperature stabilizers for polyolefins processed by the rotomoulding process.

## Revendications

1. Procédé pour la préparation de corps creux en polyoléfines caractérisé en ce qu'on ajoute à la polyoléfine une combinaison de stabilisants contenant
A) au moins un composé pris dans le groupes des phosphites ou phosphonites organiques, et
B) au moins un composé pris dans le groupe des 3-aryl-benzofuranones,
on place dans un corps creux, que l'on chauffe dans une étuve à 280°C de sorte que la polyoléfine ainsi stabilisée soit fondue, on met en rotation le corps creux autour d'au moins 2 axes, la matière plastique se répartissant sur les bords, on refroidit le moule encore en rotation, on ouvre le moule et on extrait le corps creux obtenu.

2. Procédé selon la revendication 1, contenant en tant que constituant (A) un composé de formule 1, 2, 3, 4, 5, 6 ou 7 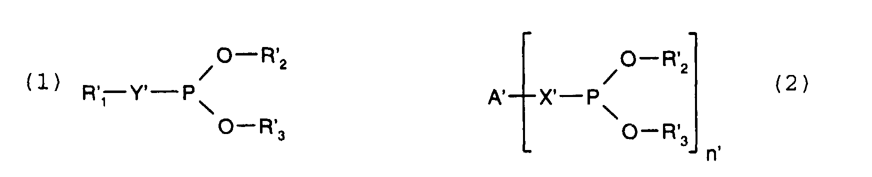 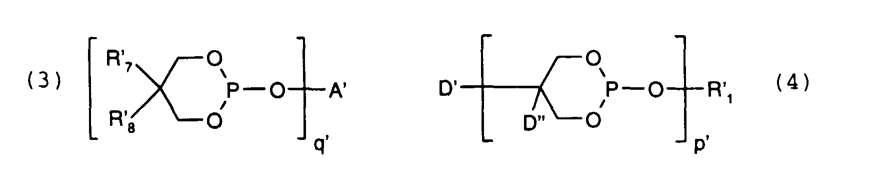 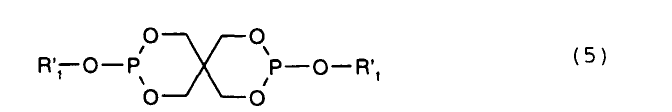 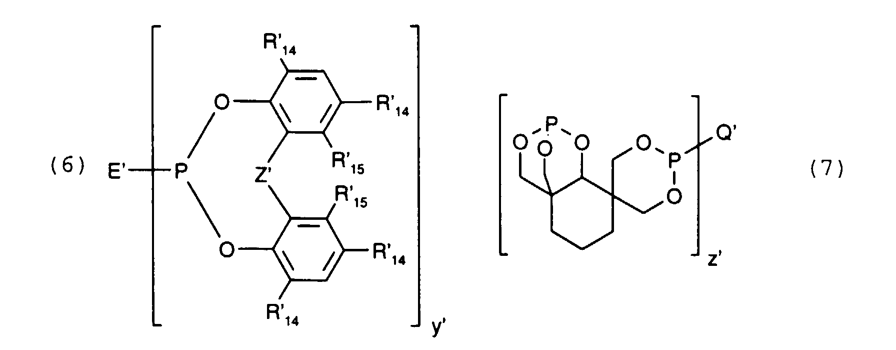 où les indices sont des nombres entiers et
n' vaut 2, 3 ou 4 ; p' vaut 1 ou 2 ; q' vaut 2 ou 3 ; r' va de 4 à 12 ; y' vaut 1, 2 ou 3 ; et z' va de 1 à 6 ;
A', lorsque n' vaut 2, représente des groupes alkylène en C₂-C₁₈ ; alkylène en C₂-C₁₂ interrompu par des atomes d'oxygène, de soufre ou un groupe -NR4- ;
ou un reste de formule 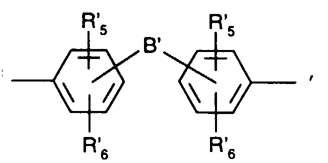 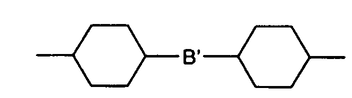 ou un groupe phénylène ;
A', lorsque n' vaut 3, représente un reste de formule -C_{r'}H_{2r'-1}- ;
A', lorsque n' vaut 4, représente 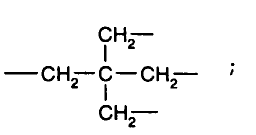
A" possède la signification de A', lorsque n' vaut 2 ;
B' représente une liaison directe, des groupes - CH₂-, -CHR-, -CRR-, un atome de soufre, des groupes cycloalkylidène en C₅-C₇ ou cyclohexylidène substitué par 1 à 4 restes alkyle en C₁-C₄ en position 3, 4 et/ou 5 ;
D', lorsque p' vaut 1, représente un groupe alkyle en C₁-C₄ et lorsque p' vaut 2, un groupe - CH₂OCH₂- ;
D", lorsque p' vaut 1, représente un groupe alkyle en C₁-C₄ ;
E', lorsque y' vaut 1, représente des groupes alkyle en C₁-C₁₈, -OR₁ ou un atome d'halogène ;
E', lorsque y vaut 2, représente un groupe -O-A"-O-,
E', y, vaut 3, représente un reste de formules R4'C(CH₂O-)₃ ou N(CH₂CH₂O-)₃ ;
Q' représente le reste d'un phénol ou alcool à fonctionnalité au moins z', ce reste étant lié à l'atome de phosphore par l'intermédiaire de l'atome d'oxygène ;
R1', R2' et R3' représentent, indépendamment l'un de l'autre, un groupe alkyle en C₁-C₁₈ non substitué ou substitué par des atomes d'halogènes, des groupes -COOR4', -CN ou -CONR4'R4' ; alkyle en C₂-C₁₈ interrompu par des atomes d'oxygène, de soufre ou un groupe -NR4'- ; phénylalkyle en C₇-C₉ ; cycloalkyle en C₅-C₁₂, phényle ou naphtyle ; phényle ou naphtyle substitué par des atomes d'halogène, 1 à 3 restes alkyle ou alkoxy avec au total 1 à 18 atomes de carbone ou par un groupe phénylalkyle en C₇-C₉ ; ou un reste de formule 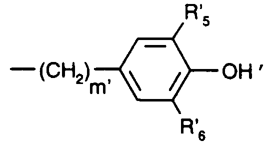 où m' est un entier dans le domaine de 3 à 6 ;
R4' représente un atome d'hydrogène, des groupes alkyle en C₁-C₁₈, cycloalkyle en C₅-C₁₂ ou phénylalkyle en C₇-C₉,
R et R représentent, indépendamment l'un de l'autre, des atomes d'hydrogène, des groupes alkyle en C₁-C₁₈ ou cycloalkyle en C₅-C₁₂
R et R, lorsque q' vaut 2, représentent indépendamment l'un de l'autre, des groupes alkyle en C₁-C₄ ou conjointement un reste 2,3-dehydropentaméthylène ; et
R et R, lorsque q' vaut 3, représentent un groupe méthyle ;
R représente un atome d'hydrogène ; des groupes alkyle en C₁-C₉ ou cyclohexyle,
R représente un atome d'hydrogène ou un groupe méthyle, et dans le cas où plusieurs restes R et R sont présents, ces restes sont identiques ou différents,
X' et Y' chacun représente une liaison directe ou un atome d'oxygène,
Z' représente une liaison directe, des groupes méthylène, -C(R)₂- ou un atome de soufre, et
R16' représente un groupe alkyle en C₁-C₈.

3. Procédé selon la revendication 1, contenant en tant que constituant (A) le phosphite de tris(2,4-di-tert-butylphényle), le phosphite de tris(nonylphényle)-ou un composé de formule A, B, C, D, E, F, G, H, I, K ou L

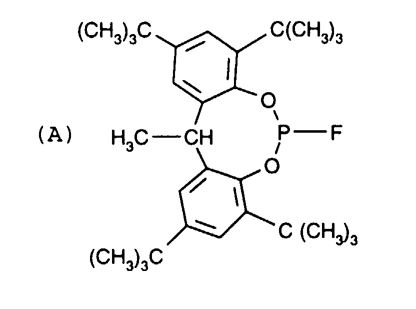

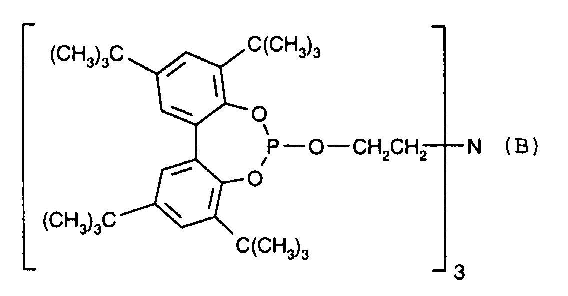

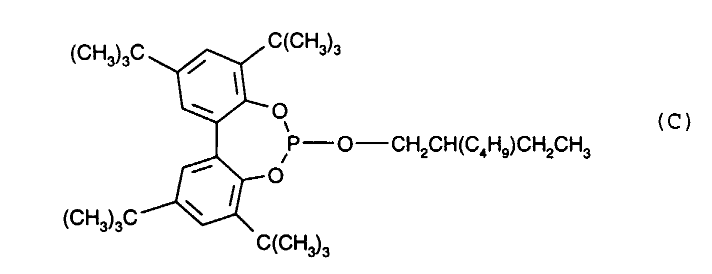

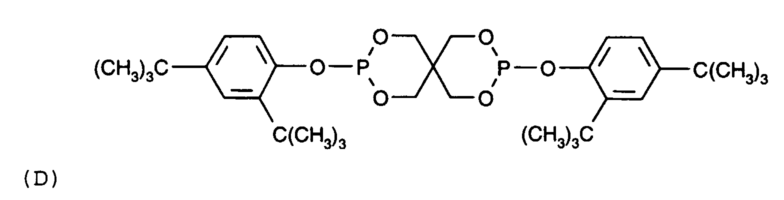

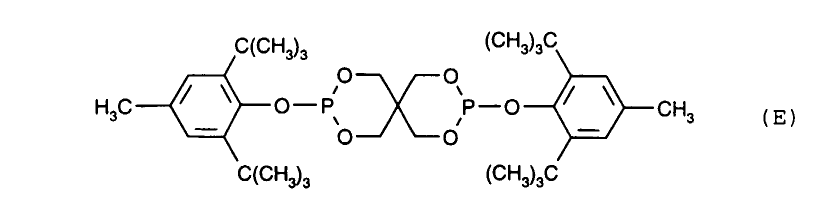

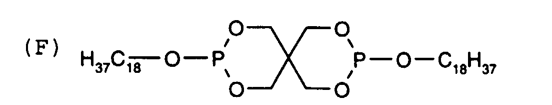

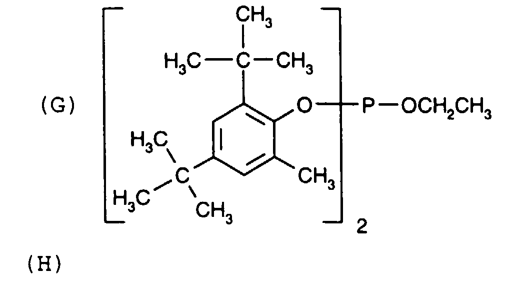

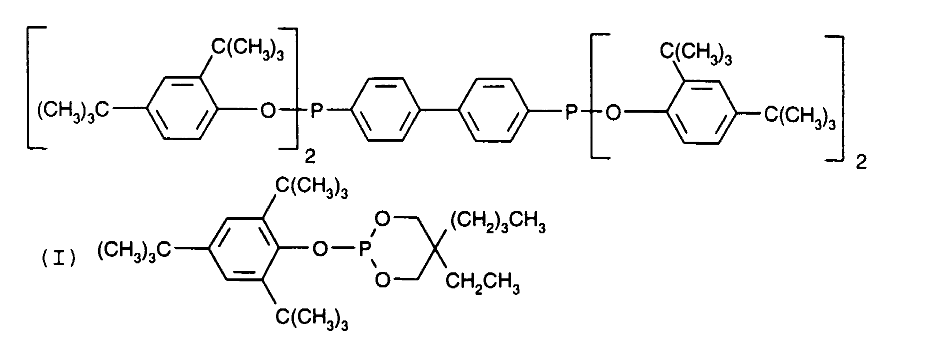

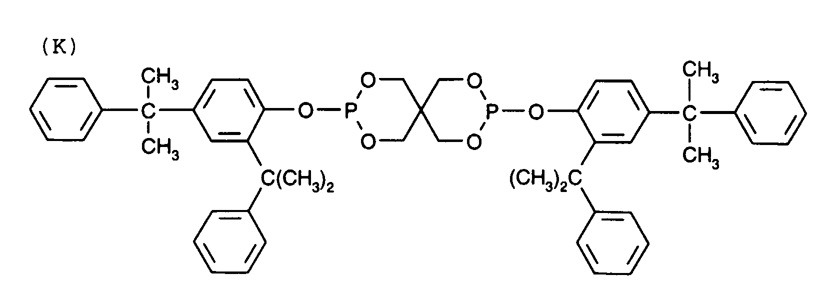

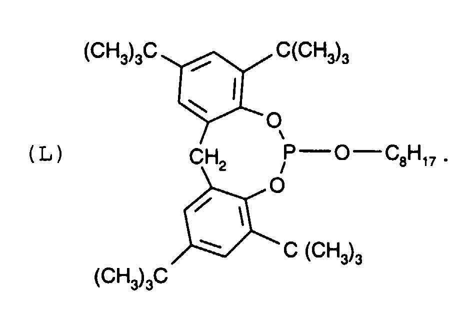

4. Procédé selon la revendication 1, contenant en tant que constituant (B) un composé de formule I 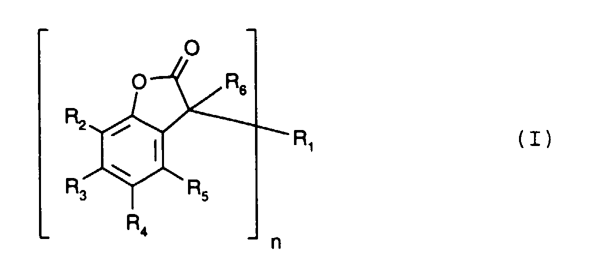 où, lorsque n vaut 1, ,
R₁ représente naphtyle, phénanthryle, anthryle, 5,6,7,8-tétrahydro-2-naphtyle, 5,6,7,8-tétrahydro-1-naphtyle, thiényle, benzo[b]thiényle, naphto [2,3-b]thiényle, thianthrényle, dibenzofuryle, chroményle, xanthényle, phénoxathiinyle, pyrrolyle, imidazolyle, pyrazolyle, pyrazinyle, pyrimidinyle, pyridazinyle, indolizinyle, isoindolyle, indolyle, indazolyle, purinyle, quinolizinyle, isoquinolyle, quinolyle, phtalazinyle, naphthyridinyle, quinoxalinyle, quinazolinyle, cinnolinyle, ptéridinyle, carbazolyle, β-carbolinyle, phénanthridinyle, acridinyle, périmidinyle, phénanthrolinyle, phénazinyle, isothiazolyle, phénothiazinyle, isoxazolyle, furazanyle, biphényle, terphényle, fluorényle ou phénoxazinyle non substitué ou substitué par des substituants alkyle en C₁-C₄, alkoxy en C₁-C₄, (alkyl en C₁-C₄)thio, hydroxy, halogène, amino, (alkyl en C₁-C₄)amino, phénylamino ou di(C₁-C₄-alkyl)amino, ou R₁ représente un reste de formule II 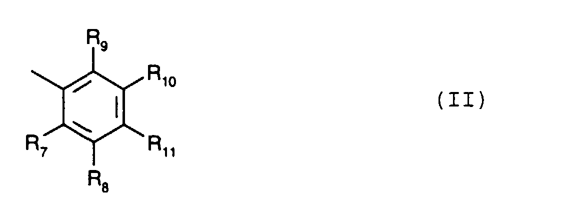 et
lorsque n vaut 2,
R₁ représente des groupes phénylène ou naphtylène non substitué ou substitué par des substituants alkyle en C₁-C₄ ou hydroxy ; ou représente un groupe -R₁₂-X-R₁₃-,
R₂, R₃, R₄ et R₅ représentent, indépendamment les uns des autres, des atomes d'hydrogène, de chlore, des groupes hydroxy, alkyle en C₁-C₂₅, phénylalkyle en C₇-C₉, phényle non substitué ou substitué par un substituant alkyle en C₁-C₄ ; cycloalkyle en C₅-C₈ non substitué ou substitué par un substituant alkyle en C₁-C₄ ; alkoxy en C₁-C₁₈, (alkyl en C₁-C₁₈)thio, (alkyl en C₁-C₄)amino, di-(alkyl en C₁-C₄)amino, (alcanoyl en C₁-C₂₅)oxy, (alcanoyl en C₁-C₂₅)amino, (alcénoyl en C₃-C₂₅)oxy, (alcanoyl en C₃-C₂₅)oxy interrompu par des atomes d'oxygène, de soufre ou 〉N―R₁₄; (cycloalkyl en C₆-C₉)-carbonyloxy, benzoyloxy ou benzoyloxy substitué par un substituant alkyle en C₁-C₁₂ ; ou de plus, les restes R₂ et R₃ ou les restes R₃ et R₄ ou les restes R₄ et R₅ forment, conjointement avec les atomes de carbone auxquels ils sont liés, un cycle benzo, R₄ représente de plus des groupes -(CH₂)ₚ-COR₁₅ ou -(CH₂)_{q}OH, ou lorsque R₃, R₅ et
R₆ représentent des atomes d'hydrogène, R₄ représente de plus un reste de formule III 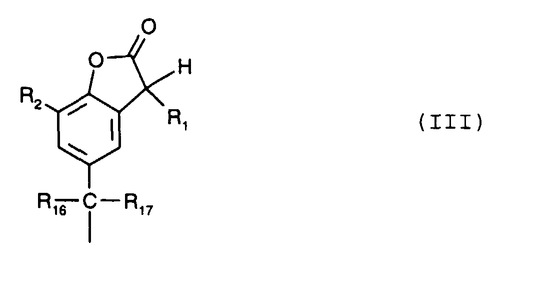 où
R₁ est défini comme donné ci-dessus pour n = 1,
R₆ représente un atome d'hydrogène ou un reste de formule IV 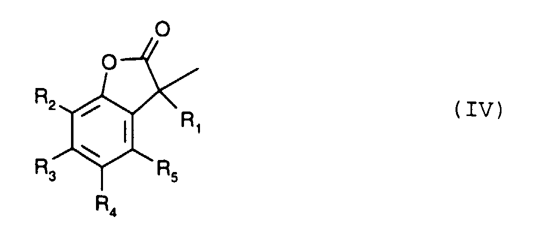
R₄ ne représentant pas un reste de formule III et R₁étant défini comme donné ci-dessus pour n = 1,
R₇, R₈, R₉, R₁₀ et R₁₁ représentent, indépendamment les uns des autres, des atomes d'hydrogène, des atomes d'halogènes, des groupes hydroxy, alkyle en C₁-C₂₅, alkyle en C₁-C₂₅ interrompu par des atomes d'oxygène, de soufre ou un groupe 〉N―R₁₄; alkoxy en C₁-C₂₅, alkoxy en C₂-C₂₅ interrompu par des atomes d'oxygène, de soufre ou un groupe 〉N―R₁₄; (alkyl en C₁-C₂₅)thio, alcényle en C₃-C₂₅, (alcényl en C₃-C₂₅)oxy, alcynyle en C₃-C₂₅, (alcynyl en C₃-C₂₅)oxy, phénylalkyle en C₇-C₉, phénylalkoxy en C₇-C₉, phényle non substitué ou substitué par un substituant alkyle en C₁-C₄ ; phénoxy non substitué ou substitué par un substituant alkyle en C₁-C₄ ; cycloalkyle en C₅-C₈ non substitué ou substitué par un substituant alkyle en C₁-C₄ ; cycloalkoxy en C₅-C₈ non substitué ou substitué par un substituant alkyle en C₁-C₄ ; (alkyl en C₁-C₄)amino, di-(alkyl en C₁-C₄)amino, alcanoyle en C₁-C₂₅, alcanoyle en C₃-C₂₅ interrompu par des atomes d'oxygène, de soufre ou un groupe 〉N―R₁₄; (alcanoyl en C₁-C₂₅)oxy, (alcanoyl en C₃-C₂₅)oxy interrompu par des atomes d'oxygène, de soufre ou un groupe 〉N―R₁₄; (alcanoyl en C₁-C₂₅)-amino, alcénoyle en C₃-C₂₅, alcénoyle en C₃-C₂₅ interrompu par des atomes d'oxygène, de soufre ou un groupe 〉N―R₁₄; (alcénoyl en C₃-C₂₅)oxy, (alcénoyl en C₃-C₂₅)oxy interrompu par des atomes d'oxygène, de soufre ou un groupe 〉N―R₁₄; cyclo(alkyl en C₆-C₉)-carbonyle, (cycloalkyl en C₆-C₉)carbonyl-oxy, benzoyle ou benzoyle substitué par un substituant (alkyle en C₁-C₁₂) ; benzoyloxy ou benzoyloxy substitué par un substituant (alkyle en C₁-C₁₂) ; 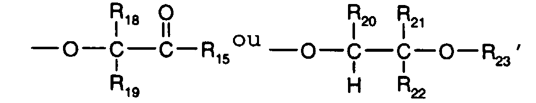 ou de plus, dans la formule II, les restes R₇ et R₈ ou les restes R₈ et R₁₁ forment, conjointement avec les atomes de carbone auxquels ils sont liés, un cycle benzo,
R₁₂ et R₁₃ représentent, indépendamment l'un de l'autre, phénylène ou naphtylène non substitué ou substitué par un substituant alkyle en C₁-C₄,
R₁₄ représente un atome d'hydrogène ou un groupe alkyle en C₁-C₈,
R₁₅ représente des groupes hydroxy, 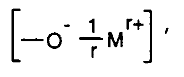 alkoxy en C₁-C₁₈ ou 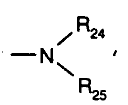
R₁₆ et R₁₇ représentent, indépendamment l'un de l'autre, des atomes d'hydrogène, des groupes CF₃, alkyle en C₁-C₁₂ ou phényle, ou R₁₆ et R₁₇ forment, conjointement avec l'atome de carbone auquel ils sont liés, un cycle cycloalkylidène en C₅-C₈ non substitué ou substitué par 1 à 3 groupes alkyle en C₁-C₄ ;
R₁₈ et R₁₉ représentent indépendamment l'un de l'autre des atomes d'hydrogène, des groupes alkyle en C₁-C₄ ou phényle,
R₂₀ représente un atome d'hydrogène ou un groupe alkyle en C₁-C₄,
R₂₁ représente un atome d'hydrogène, un groupe phényle non substitué ou substitué par un substituant alkyle en C₁-C₄ ; alkyle en C₁-C₂₅, alkyle en C₂-C₂₅ interrompu par des atomes d'oxygène, de soufre ou un groupe 〉N―R₁₄; phénylalkyle en C₇-C₉ non substitué ou substitué sur le reste phényle par 1 à 3 substituants alkyle en C₁-C₄ ; phénylalkyle en C₇-C₂₅ interrompu par des atomes d'oxygène, de soufre ou un groupe 〉N―R₁₄, non substitué ou substitué sur le reste phényle par 1 à 3 substituants alkyle en C₁-C₄, ou de plus les restes R₂₀ et R₂₁ forment, conjointement avec les atomes de carbone auxquels ils sont liés, un cycle cycloalkylène en C₅-C₁₂ non substitué ou substitué par 1 à 3 substituants alkyle en C₁-C₄ ;
R₂₂ représente un atome d'hydrogène ou un groupe alkyle en C₁-C₄,
R₂₃ représente un atome d'hydrogène, des groupes alcanoyle en C₁-C₂₅, alcénoyle en C₃-C₂₅, alcanoyle en C₃-C₂₅ interrompu par des atomes d'oxygène, de soufre ou un groupe 〉N―R₁₄; alcanoyle en C₂-C₂₅ substitué par un groupe di(alkyl en C₁-C₆)phosphonato ; cyclo(alkyl en C₆-C₉)carbonyle, thénoyle, furoyle, benzoyle ou benzoyle substitué par un substituant alkyle en C₁-C₁₂ ; 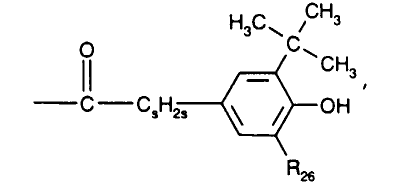 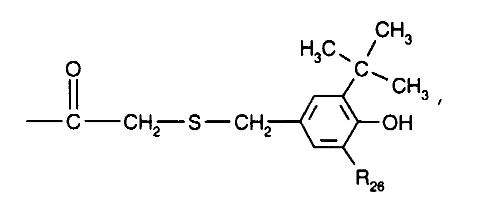 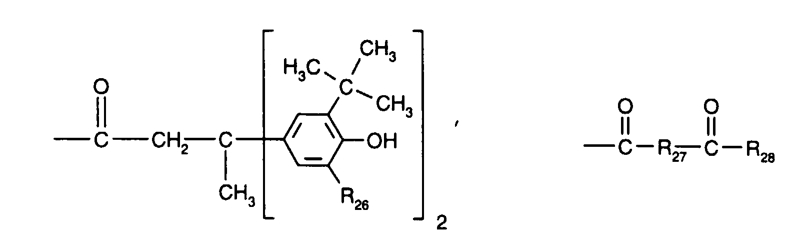 ou 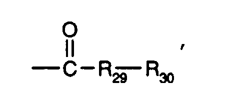
R₂₄ et R₂₅ représentent, indépendamment l'un de l'autre, des atomes d'hydrogène ou des groupes alkyle en C₁-C₁₈,
R₂₆ représente un atome d'hydrogène ou un groupe alkyle en C₁-C₈,
R₂₇ représente une liaison directe, un groupe alkylène en C₁-C₁₈, alkylène en C₂-C₁₈ interrompu par des atomes d'oxygène de soufre ou un groupe 〉N―R₁₄; alcénylène en C₂-C₁₈, alkylidène en C₂-C₂₀, phénylalkylidène en C₇-C₂₀, cycloalkylène en C₅-C₈, bicycloalkylène en C₇-C₈, phénylène non substitué ou substitué par un substituant alkyle en C₁-C₄, 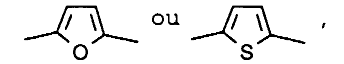
R₂₈ représente des groupes hydroxy, 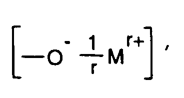 alkoxy en C₁-C₁₈ ou 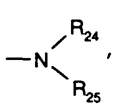
R₂₉ représente un atome d'oxygène, des groupes -NH- ou 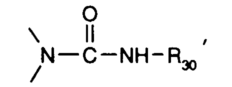
R₃₀ représente un groupe alkyle en C₁-C₁₈ ou phényle,
R₃₁ représente un atome d'hydrogène ou un groupe alkyle en C₁-C₁₈,
M représente un cation métallique ayant une fonctionnalité r,
x représente une liaison directe, des atomes d'oxygène, de soufre ou un groupe -NR₃₁-,
n vaut 1 ou 2,
p vaut 0, 1 ou 2,
q vaut 1, 2, 3, 4, 5 ou 6,
r vaut 1, 2 ou 3, et
s vaut 0, 1 ou 2.

5. Procédé selon la revendication 1, contenant en tant que constituant (B) un composé de formule V 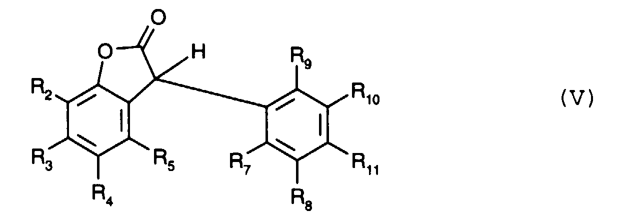 où
R₂ représente un atome d'hydrogène ou un groupe alkyle en C₁-C₆,
R₃ représente un atome d'hydrogène,
R₄ représente un atome d'hydrogène ou un groupe alkyle en C₁-C₆,
R₅ représente un atome d'hydrogène,
R₇, R₈, R₉, R₁₀ et R₁₁ représentent, indépendamment les uns des autres, des atomes d'hydrogène, des groupes alkyle en C₁-C₄ ou alkoxy en C₁-C₄, à condition qu'au moins deux des restes R₇, R₈, R₉, R₁₀ ou R₁₁ représentent des atomes d'hydrogène.

6. Procédé selon la revendication 1, contenant en tant que constituant (B) un composé de formule Va ou Vb 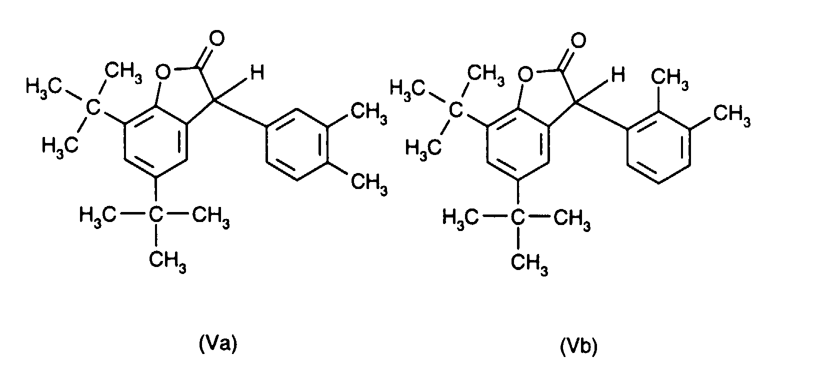 ou un mélange des deux composés de formule Va et Vb.

7. Procédé selon la revendication 1, caractérisé en ce que la température s'élève à des valeurs de 200 à 400°C.

8. Utilisation de la combinaison de stabilisants définie dans la revendication 1 avec les constituants (A) et (B) en tant que stabilisants à haute température pour des polyoléfines traitées dans le procédé de moulage par rotation.
